# EUROPEAN PATENT APPLICATION

(11) **EP 4 480 702 A1**
(43) Date of publication of application: **25.12.2024**
(21) Application number: 23756406.7
(22) Date of filing: 15.02.2023
(51) Int. Cl.: B32B 27/32, B32B 27/00, B65D 65/40

(54) **BARRIER LAMINATED FILM, LAMINATED FILM, LAMINATED BODY, AND PACKAGING CONTAINER**

(30) Priority: 15.02.2022 JP 2022021644; 15.02.2022 JP 2022021658; 15.02.2022 JP 2022021662; 08.02.2023 JP 2023017885; 08.02.2023 JP 2023017889; 08.02.2023 JP 2023017893
(71) Applicant: Dai Nippon Printing Co., Ltd., Tokyo 162-8001 (JP)
(72) Inventor: YAMADA Kenichi, Tokyo 162-8001 (JP); UEKI Takayuki, Tokyo 162-8001 (JP)
(74) Representative: Müller-Boré & Partner Patentanwälte PartG mbB
(86) International application number: PCT/JP2023/005240
(87) International publication number: WO 2023/157881

(57) **Abstract**

A barrier laminated film includes at least an unstretched laminated film and a vapor deposited film. The laminated film includes at least a polyolefin resin layer and a gas barrier resin layer, and the vapor deposited film is disposed on the gas barrier resin layer.

## Description

### CROSS-REFERENCE TO RELATED APPLICATIONS

The present application claims priority from Japanese Patent Application No. 2022-021644 filed on February 15, 2022, Japanese Patent Application No. 2022-021658 filed on February 15, 2022, Japanese Patent Application No. 2022-021662 filed on February 15, 2022, Japanese Patent Application No. 2023-017893 filed on February 8, 2023, Japanese Patent Application No. 2023-017885 filed on February 8, 2023, and Japanese Patent Application No. 2023-017889 filed on February 8, 2023, the entire disclosures of which are hereby incorporated herein by reference.

### Technical Field

The present disclosure relates to a barrier laminated film, a laminated film, a laminated body, and a packaging container.

### Background Art

Resin films formed of resin materials have been used as packaging materials. For example, resin films formed of polyolefin have appropriate flexibility and transparency, have good heat sealability, and are therefore widely used as packaging materials. Generally, the strength and heat resistance of a resin film formed of polyolefin are poor, and therefore such a film cannot be used as a substrate but is used with a polyester or polyamide resin film laminated thereto. Therefore, commonly used packaging containers are formed from a laminated film including a substrate and a sealant layer that are made of different materials (for example, PTL 1).

In recent years, with a growing demand for establishing a sound material-cycle society, there has been a need for packaging materials with high recyclability. However, since conventional packaging containers are composed of different resin materials, it is difficult to separate these resin materials from each other, and therefore these packaging containers are not actively recycled under the current circumstances.

### Citation List

### Patent Literature

PTL 1: Japanese Unexamined Patent Application Publication No. 2009-202519

### Summary of Invention

### Technical Problem

The inventors of the present disclosure have considered using, as a substrate, a polyolefin stretched film instead of the conventional resin films formed of polyester or polyamide and combining the substrate with a sealant layer formed of polyolefin. In packaging materials having the structure described above, the substrate and the sealant layer are both formed of polyolefin, and the recyclability of the packaging materials can be improved. However, even with this structure, their gas barrier performance is insufficient in some cases.

Accordingly, the inventors of the present disclosure have conducted studies on a laminated body including, for example, a substrate, a sealant layer, and a barrier substrate disposed between the substrate and the sealant layer and including a polyolefin resin layer and a vapor deposited film. The inventors of the present disclosure have also considered using, as the sealant layer, a barrier sealant film including a polyolefin resin layer and a vapor deposited film. However, even with this structure, the gas barrier performance is insufficient in some cases.

One problem to be solved by the present disclosure is, for example, to improve the gas barrier performance of a barrier laminated film that can be preferably used as a component of the above laminated body and that includes a polyolefin resin layer and a vapor deposited film.

### Solution to Problem

The barrier laminated film of the disclosure includes at least an unstretched laminated film and a vapor deposited film, wherein the laminated film includes at least a polyolefin resin layer and a gas barrier resin layer, and wherein the vapor deposited film is disposed on the gas barrier resin layer.

### Advantageous Effects of Invention

According to the present disclosure, the gas barrier performance of the barrier laminated film that can be preferably used, for example, as a component of the laminated body and that includes a polyolefin resin layer and a vapor deposited film can be improved.

### Brief Description of Drawings

[Fig. 1] Fig. 1 is a schematic cross-sectional view illustrating an embodiment of a barrier laminated film.
[Fig. 2] Fig. 2 is a schematic cross-sectional view illustrating an embodiment of the barrier laminated film.
[Fig. 3] Fig. 3 is a schematic cross-sectional view illustrating an embodiment of the barrier laminated film.
[Fig. 4] Fig. 4 is a schematic cross-sectional view illustrating an embodiment of a laminated film.
[Fig. 5] Fig. 5 is a schematic cross-sectional view illustrating an embodiment of the laminated film.
[Fig. 6] Fig. 6 is a schematic cross-sectional view illustrating an embodiment of the laminated film.
[Fig. 7] Fig. 7 is a schematic cross-sectional view illustrating an embodiment of the barrier laminated film.
[Fig. 8] Fig. 8 is a schematic cross-sectional view illustrating an embodiment of a laminated body.
[Fig. 9] Fig. 9 is a schematic cross-sectional view illustrating an embodiment of the laminated body.
[Fig. 10] Fig. 10 is a schematic cross-sectional view illustrating an embodiment of the laminated body.
[Fig. 11] Fig. 11 is a schematic cross-sectional view illustrating an embodiment of the laminated body.
[Fig. 12] Fig. 12 is a schematic cross-sectional view illustrating an embodiment of the laminated body.
[Fig. 13] Fig. 13 is a schematic cross-sectional view illustrating an embodiment of the laminated body.
[Fig. 14] Fig. 14 is a schematic cross-sectional view illustrating an embodiment of the laminated body.
[Fig. 15] Fig. 15 is a schematic cross-sectional view illustrating an embodiment of the laminated body.
[Fig. 16] Fig. 16 is a perspective view illustrating an embodiment of a packaging container.
[Fig. 17] Fig. 17 is a perspective view illustrating an embodiment of the packaging container.

### Description of Embodiments

In the present description, when a plurality of candidates for the upper limit of a parameter and a plurality of candidates for the lower limit of the parameter are given, the numerical range of the parameter may be defined as a combination of any one of the candidates for the upper limit and any one of the candidates for the lower limit. For example, the phrase "a parameter B is preferably A1 or more, more preferably A2 or more, and still more preferably A3 or more and is preferably A4 or less, more preferably A5 or less, and still more preferably A6 or less" will be described. In this example, the numerical range of the parameter B may be A1 or more and A4 or less, may be A1 or more and A5 or less, may be A1 or more and A6 or less, may be A2 or more and A4 or less, may be A2 or more and A5 or less, may be A2 or more and A6 or less, may be A3 or more and A4 or less, may be A3 or more and A5 or less, and may be A3 or more and A6 or less.

Embodiments of the present disclosure will be described in detail. The present disclosure can be embodied in various different forms and should not be construed as being limited to the description of the following exemplary embodiments. In the drawings, the width, thickness, shape, etc. of each layer may be more schematic than those in the embodiments for the sake of clarity. However, the drawings are only illustrative and do not limit the interpretation of the present disclosure. In the present description and the drawings, the same reference numerals are given to the same elements as those already described with reference to the drawings already referred to, and the detailed description thereof may be appropriately omitted.

In the following description, components used (e.g., polyolefins such as polypropylene or polyethylene, α-olefins, resin materials, acid-modified resins, gas barrier resins, additives, metals, and inorganic oxides) may each be a single component or a mixture of two or more.

In the present description, a "main component" in a certain layer is a component with a content in the layer of more than 50% by mass, preferably 60% by mass or more, more preferably 70% by mass or more, and still more preferably 80% by mass or more.

### [First embodiment: barrier laminated film]

A barrier laminated film in a first embodiment of the present disclosure will be described.

The barrier laminated film in the first embodiment of the present disclosure includes at least an unstretched laminated film and a vapor deposited film. The laminated film includes at least a polyolefin resin layer and a gas barrier resin layer. The vapor deposited film is disposed on the gas barrier resin layer. In one embodiment, the barrier laminated film includes, in the following order in the thickness direction, the polyolefin resin layer, an optional adhesive resin layer, the gas barrier resin layer, and the vapor deposited film (hereinafter the phrase "in the following order in the thickness direction" is referred to simply as "in the following order").

In one embodiment, the barrier laminated film is a barrier substrate and includes at least an unstretched resin substrate and a vapor deposited film. The resin substrate includes at least a polyolefin resin layer and a gas barrier resin layer. With this structure, the strength, oxygen barrier performance, and water vapor barrier performance of the barrier substrate, for example, can be improved. The resin substrate may further include an adhesive resin layer between the polyolefin resin layer and the gas barrier resin layer. In this case, the adhesion between these layers, for example, can be further improved.

In one embodiment, the barrier laminated film is a barrier sealant film includes at least an unstretched resin film and a vapor deposited film. The resin film includes at least a polyolefin resin layer and a gas barrier resin layer. With this structure, the strength, oxygen barrier performance, and water vapor barrier performance of the barrier sealant film, for example, can be improved. The resin film may further include an adhesive resin layer between the polyolefin resin layer and the gas barrier resin layer. In this case, the adhesion between these layers, for example, can be further improved.

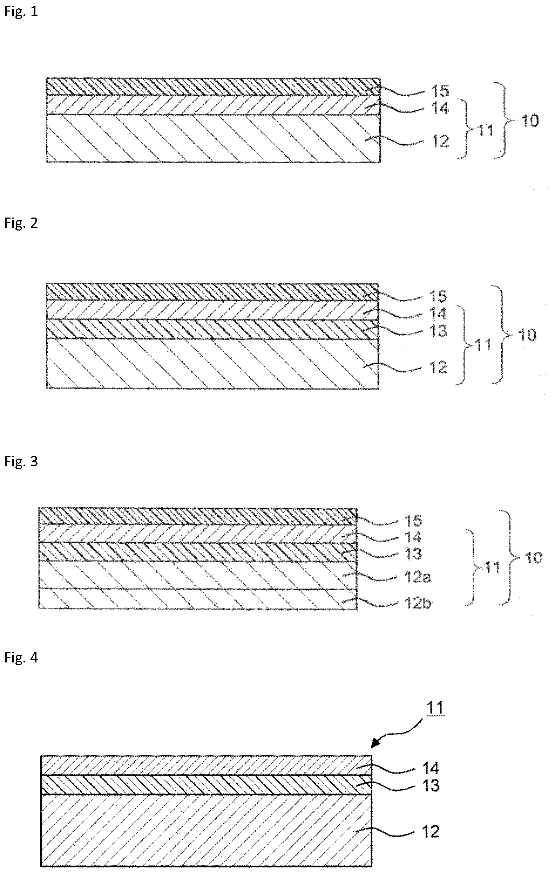

A barrier laminated film 10 shown in Fig. 1 includes an unstretched laminated film 11 and a vapor deposited film 15. The laminated film 11 includes a polyolefin resin layer 12 and a gas barrier resin layer 14. In a barrier laminated film 10 shown in Fig. 2, the unstretched laminated film 11 includes an adhesive resin layer 13 between the polyolefin resin layer 12 and the gas barrier resin layer 14.

A barrier laminated film 10 shown in Fig. 3 is a barrier sealant film, and the polyolefin resin layer 12 includes a first resin layer 12a containing a polyolefin and a second resin layer 12b containing a polyolefin and a heat seal modifier. The second resin layer 12b serves as a surface layer on one side of the barrier laminated film 10. In one embodiment, an intermediate layer (not shown) containing a polyolefin may be disposed between the first resin layer 12a and the second resin layer 12b.

The resin substrate is an unstretched resin substrate and is preferably an unstretched coextruded resin substrate produced by a blown film coextrusion process, and the layers forming the resin substrate are coextruded resin layers. From the viewpoint of heat sealability, the resin film is an unstretched resin film and is preferably an unstretched coextruded resin film produced by a blown film coextrusion process, and the layers forming the resin film are coextruded resin layers.

Examples of the blown film coextrusion process include an air-cooled blown film process and a water-cooled blown film process. The air-cooled blown film process is preferred because the film formation rate is high and a wide film can be produced, and an upward air-cooled blown film process is more preferred. Examples of the melt extruder used for the blown film coextrusion process include a single screw extruder, a twin screw extruder, a vented extruder, and a tandem extruder. Since the laminated film has a multilayer structure, a multilayer annular die and a plurality of melt extruders are used.

An embodiment of the blown film coextrusion process will next be described.

First, materials forming the layers are dried and each suppled to a corresponding melt extruder heated to a temperature higher than or equal to its melting temperature (Tm) to Tm + 100°C to melt the material, and then the molten materials are extruded from the multilayer annular die into a tubular shape. In this case, air is supplied to the tubular molten resins from below to inflate the tube to a prescribed diameter, and cooling air is blown onto the outer side of the tube from below. The inflated tubular body is referred to as a bubble. Next, the bubble is flattened into a film shape using guide plates and pinch rolls, and the film is wound in a winding unit. The flattened film in a tubular form may be wound so as to maintain its tubular shape. Alternatively, opposite edges of the film may be removed using, for example, a slitter to separate the film into two films, and the resulting films may be wound independently. An unstretched laminated film can thereby be formed.

The thickness of the laminated film is preferably 6 µm or more and more preferably 12 µm or more and is preferably 110 µm or less and more preferably 60 µm or less. When the thickness is more than or equal to the lower limit, the recyclability of a packaging container and the heat sealability of the barrier sealant film, for example, can be improved. When the thickness is less than or equal to the upper limit, the processability of the barrier laminated film, for example, can be improved.

### <Polyolefin resin layer>

In one embodiment, the polyolefin resin layer contains a polyolefin as a main component. Examples of the polyolefin include polypropylene, polyethylene, and polymethylpentene. The polyolefin resin layer is preferably a polypropylene resin layer or a polyethylene resin layer.

From the viewpoint of film formability and processability, the melt flow rate (MFR) of the polyolefin is preferably 0.1 g/10 minutes or more, more preferably 0.2 g/10 minutes or more, still more preferably 0.3 g/10 minutes or more, and particularly preferably 0.5 g/10 minutes or more and is preferably 50 g/10 minutes or less, more preferably 30 g/10 minutes or less, still more preferably 20 g/10 minutes or less, and particularly preferably 10 g/10 minutes or less. In the present disclosure, the MFR of the polyolefin is measured using method A described in JIS K 7210-1:2014 under the condition of a load of 2.16 kg. The measurement temperature of the MFR is set according to the melting temperature of the polyolefin etc. and is, for example, 190°C for polyethylene and is 230°C for polypropylene.

Preferably, the laminated film is produced by a blown film coextrusion process. In this case, the MFR of the polyolefin is preferably 0.2 g/10 minutes or more and more preferably 0.5 g/10 minutes or more and is preferably 5.0 g/10 minutes or less and more preferably 2.0 g/10 minutes or less. When the MFR is more than or equal to the lower limit, processability into the laminated film, for example, can be improved. When the MFR is less than or equal to the upper limit, the film formability, for example, can be improved.

The laminated film may be produced by a T-die coextrusion process. In this case, the MFR of the polyolefin is preferably 5.0 g/10 minutes or more and 20 g/10 minutes or less. When the MFR is more than or equal to the lower limit, processability into the laminated film, for example, can be improved. When the MFR is less than or equal to the upper limit, the occurrence of rupture, for example, of the laminated film can be reduced.

The content of the polyolefin in the polyolefin resin layer is preferably more than 50% by mass, more preferably 80% by mass or more, still more preferably 85% by mass or more, yet more preferably 90% by mass or more, and particularly preferably 93% by mass or more or 95% by mass or more.

The polyolefin resin layer may contain a resin material other than the polyolefin. Examples of such a resin material include (meth)acrylic resins, vinyl resins, cellulose resins, polyamides, polyesters, and ionomer resins. The polyolefin resin layer may contain an additive. Examples of the additive include a crosslinking agent, an antioxidant, an antiblocking agent, a lubricant, an ultraviolet absorber, a light stabilizer, a filler, a reinforcing agent, an antistatic agent, a compatibilizer, a pigment, and a modifier resin.

In one embodiment, the polyolefin resin layer may be subjected to surface treatment. In this case, the adhesion between the polyolefin resin layer and another layer, for example, can be improved. Examples of the surface treatment method include: physical treatment such as corona discharge treatment, ozone treatment, low-temperature plasma treatment using oxygen gas and/or nitrogen gas, and glow discharge treatment; and chemical treatment such as oxidizing treatment using a chemical.

An adhesion improving layer may be provided on the surface of the polyolefin resin layer.

The polyolefin resin layer may have a single layer structure or may have a multilayer structure. When the polyolefin resin layer has a multilayer structure, the number of layers included in the polyolefin resin layer is preferably 2 or more and more preferably 3 or more and is preferably 7 or less and more preferably 5 or less.

The thickness of the polyolefin resin layer is preferably 5 µm or more and more preferably 10 µm or more and is preferably 100 µm or less and more preferably 50 µm or less. When the polyolefin resin layer has a multilayer structure, it is preferable that its total thickness is within the above range. When the thickness is more than or equal to the lower limit, the strength, heat resistance, and recyclability of the barrier laminated film, for example, can be improved. When the thickness is less than or equal to the upper limit, the processability of the barrier laminated film, for example, can be improved.

### (Polypropylene resin layer)

In one embodiment, the polypropylene resin layer contains polypropylene as a main component. When the barrier laminated film includes the polypropylene resin layer, the oil resistance of a packaging container produced using the barrier laminated film, for example, can be improved.

The polypropylene may be any of a propylene homopolymer (homopolypropylene), a propylene random copolymer (random polypropylene) such as a propylene-α-olefin random copolymer, and a propylene block copolymer (block polypropylene) such as a propylene-α-olefin block copolymer or may be a mixture of two or more selected from these polymers. From the viewpoint of reducing environmental loads, the polypropylene used may be biomass-derived polypropylene or mechanically or chemically recycled polypropylene.

The propylene homopolymer is a polymer composed only of propylene. The propylene random copolymer is a random copolymer of propylene and an α-olefin other than propylene. The propylene block copolymer is a copolymer including a polymer block composed of propylene and a polymer block composed of an α-olefin other than propylene.

The α-olefin other than propylene is, for example, an α-olefin having 2 to 20 carbon atoms, and specific examples thereof include ethylene, 1-butene, 1-pentene, 1-hexene, 1-octene, 1-decene, 1-dodecene, 1-tetradecene, 1-hexadecene, 1-octadecene, 1-eicosene, 3-methyl-1-butene, 4-methyl-1-pentene, and 6-methyl-1-heptene.

From the viewpoint of transparency, the polypropylene is preferably a propylene random copolymer. When importance is placed on the stiffness and heat resistance of a packaging container, a propylene homopolymer is preferred. When importance is placed on the shock resistance of a packaging container, a propylene block copolymer is preferred.

From the viewpoint of heat resistance and heat sealability, the density of the polypropylene is, for example, 0.88 g/cm³ or more and 0.92 g/cm³ or less. In the present disclosure, the density is measured using method D (density gradient tube method, 23°C) described in JIS K 7112: 1999.

From the viewpoint of the heat resistance of the barrier substrate, the melting point (Tm) of the polypropylene in is preferably 120°C or higher, more preferably 125°C or higher, and still more preferably 140°C or higher and is preferably 170°C or lower. From the viewpoint of the balance between the heat resistance and heat sealability of the barrier sealant film, the melting point (Tm) of the polypropylene is preferably 120°C or higher, more preferably 125°C or higher, and still more preferably 130°C or higher and is preferably 160°C or lower, more preferably 155°C or lower, and still more preferably 150°C or lower. In the present disclosure, the Tm is the melting peak temperature obtained by differential scanning calorimetry (DSC) according to JIS K 7121: 2012.

The content of the polypropylene in the polypropylene resin layer is preferably more than 50% by mass, more preferably 80% by mass or more, still more preferably 85% by mass or more, yet more preferably 90% by mass or more, and particularly preferably 93% by mass or more or 95% by mass or more.

The polypropylene resin layer may have a single layer structure or may have a multilayer structure.

When the polypropylene resin layer has a multilayer structure, the number of layers included in the polypropylene resin layer is preferably 2 or more and more preferably 3 or more and is preferably 7 or less and more preferably 5 or less.

In one embodiment of the barrier substrate, the polypropylene resin layer includes a first layer formed of a random polypropylene, a second layer formed of a random polypropylene, and a third layer formed of a random polypropylene. In this case, the first layer faces the gas barrier resin layer. The ratio of the thickness of the first layer to the total thickness of the polypropylene resin layer is preferably 30% or more, more preferably 35% or more, and still more preferably 40% or more and is preferably 70% or less, more preferably 65% or less, and still more preferably 60% or less. The ratio of the thickness of the second layer to the total thickness of the polypropylene resin layer is preferably 10% or more, more preferably 15% or more, and still more preferably 20% or more and is preferably 50% or less, more preferably 45% or less, and still more preferably 40% or less. The ratio of the thickness of the third layer to the total thickness of the polypropylene resin layer is preferably 5% or more, more preferably 10% or more, and still more preferably 15% or more and is preferably 35% or less, more preferably 30% or less, and still more preferably 25% or less.

In another embodiment of the barrier substrate, the polypropylene resin layer includes a first layer formed of a random polypropylene, a second layer formed of a homopolypropylene, and a third layer formed of a random polypropylene. In this case, the balance between the stiffness, heat resistance, and shock resistance of a packaging container, for example, can be improved. The ratio of the thickness of the first layer to the total thickness of the polypropylene resin layer is preferably 3% or more, more preferably 5% or more, and still more preferably 8% or more and is preferably 30% or less, more preferably 20% or less, and still more preferably 15% or less. The ratio of the thickness of the second layer to the total thickness of the polypropylene resin layer is preferably 40% or more, more preferably 60% or more, and still more preferably 70% or more and is preferably 94% or less, more preferably 90% or less, and still more preferably 84% or less. The ratio of the thickness of the third layer to the total thickness of the polypropylene resin layer is preferably 3% or more, more preferably 5% or more, and still more preferably 8% or more and is preferably 30% or less, more preferably 20% or less, and still more preferably 15% or less.

In one embodiment of the barrier sealant film, the polypropylene resin layer includes, in the following order, a first resin layer containing a propylene random copolymer, an intermediate layer containing a propylene random copolymer, and a second resin layer containing a propylene random copolymer and a heat seal modifier described later.

### (Polyethylene resin layer)

In one embodiment, the polyethylene resin layer contains polyethylene as a main component. In the present disclosure, the polyethylene is a polymer in which the content of a structural unit derived from ethylene to the total amount of structural units forming the polymer is 50% by mole or more. In this polymer, the content of the structural unit derived from ethylene is preferably 70% by mole or more, more preferably 80% by mole or more, still more preferably 90% by mole or more, and particularly preferably 95% by mole or more. The above content is measured by an NMR method.

The polyethylene may be a homopolymer of ethylene or a copolymer of ethylene and an ethylenically unsaturated monomer other than ethylene. Examples of the ethylenically unsaturated monomer other than ethylene include: α-olefins having 2 to 20 carbon atoms such as propylene, 1-butene, 1-pentene, 1-hexene, 1-octene, 1-decene, 1-dodecene, 1-tetradecene, 1-hexadecene, 1-octadecene, 1-eicosene, 3-methyl-1-butene, 4-methyl-1-pentene, and 6-methyl-1-heptene; vinyl monomers such as vinyl acetate and vinyl propionate; and (meth)acrylates such as methyl (meth)acrylate and ethyl (meth)acrylate.

Examples of the polyethylene include high-density polyethylene, medium-density polyethylene, low-density polyethylene, linear low-density polyethylene, and very low-density polyethylene. From the viewpoint of the strength and heat resistance of the barrier substrate, high-density polyethylene and medium-density polyethylene are preferred. From the viewpoint of processability into the barrier substrate, linear low-density polyethylene and medium-density polyethylene are preferred. From the viewpoint of the heat sealability of the barrier sealant film, low density polyethylene, linear low density polyethylene, and very low density polyethylene are preferred, and linear low density polyethylene is more preferred. From the viewpoint of reducing environmental loads, the polyethylene used may be biomass-derived polyethylene or mechanically or chemically recycled polyethylene.

In the present disclosure, the density of the polyethylene is as follows.

The density of the high-density polyethylene is preferably more than 0.945 g/cm³. The upper limit of the density of the high-density polyethylene is, for example, 0.970 g/cm³ or 0.965 g/cm³. The density of the medium-density polyethylene is preferably more than 0.930 g/cm³ and 0.945 g/cm³ or less. The density of the low-density polyethylene is preferably more than 0.900 g/cm³ and 0.930 g/cm³ or less. The density of the linear low-density polyethylene is preferably more than 0.900 g/cm³ and 0.930 g/cm³ or less. The density of the very low-density polyethylene is preferably 0.900 g/cm³ or less. The lower limit of the density of the very low-density polyethylene is, for example, 0.860 g/cm³. In the present disclosure, the density is measured using method D (density gradient tube method, 23°C) described in JIS K 7112: 1999.

The low-density polyethylene is generally a polyethylene (high-pressure low density polyethylene) obtained by polymerizing ethylene using a high-pressure polymerizing method. The linear low-density polyethylene is generally a polyethylene obtained by polymerizing ethylene and a small amount of α-olefin by a polymerization method using a multisite catalyst such as a Ziegler-Natta catalyst or a single-site catalyst such as a metallocene catalyst.

From the viewpoint of the heat resistance of the barrier substrate, the melting point (Tm) of the polyethylene is preferably 100°C or higher, more preferably 105°C or higher, and still more preferably 110°C or higher and is preferably 140°C or lower. From the viewpoint of the balance between the heat resistance and heat sealability of the barrier sealant film, the melting point (Tm) of the polyethylene is preferably 90°C or higher and is preferably 140°C or lower and more preferably 130°C or lower. In the present disclosure, the Tm is a melting peak temperature obtained by differential scanning calorimetry (DSC) according to JIS K 7121: 2012.

Polyethylenes with different densities or differently branched polyethylenes can be obtained by appropriately selecting a polymerizing method. For example, it is preferable to perform single-stage polymerization or multistage polymerization including two or more stages by any of vapor phase polymerization, slurry polymerization, solution polymerization, and high-pressure ionic polymerization using a multisite catalyst such as a Ziegler-Natta catalyst or a single-site catalyst such as a metallocene catalyst.

The content of the polyethylene in the polyethylene resin layer is preferably more than 50% by mass, more preferably 80% by mass or more, still more preferably 85% by mass or more, yet more preferably 90% by mass or more, and particularly preferably 93% by mass or more or 95% by mass or more.

The polyethylene resin layer may have a single layer structure or may have a multilayer structure. When the polyethylene resin layer has a multilayer structure, the number of layers included in the polyethylene resin layer is preferably 2 or more and more preferably 3 or more and is preferably 7 or less and more preferably 5 or less.

In one embodiment of the barrier substrate, the polyethylene resin layer includes a first layer formed of a linear low-density polyethylene, a second layer formed of a linear low-density polyethylene and a medium-density polyethylene, and a third layer formed of a medium-density polyethylene. In this case, the balance between the interlaminar strength and heat resistance, for example, can be improved. The first layer faces the gas barrier resin layer. The ratio of the thickness of the first layer to the total thickness of the polyethylene resin layer is preferably 30% or more, more preferably 35% or more, and still more preferably 40% or more and is preferably 70% or less, more preferably 65% or less, and still more preferably 60% or less. The ratio of the thickness of the second layer to the total thickness of the polyethylene resin layer is preferably 10% or more, more preferably 15% or more, and still more preferably 20% or more and is preferably 50% or less, more preferably 45% or less, and still more preferably 40% or less. The ratio of the thickness of the third layer to the total thickness of the polyethylene resin layer is preferably 5% or more, more preferably 10% or more, and still more preferably 15% or more and is preferably 35% or less, more preferably 30% or less, and still more preferably 25% or less.

In one embodiment of the barrier sealant film, the polyethylene resin layer includes, in the following order, a first resin layer containing a linear low-density polyethylene, an intermediate layer containing a linear low-density polyethylene, and a second resin layer containing a linear low-density polyethylene and a heat seal modifier described later.

### (Heat seal modifier)

From the viewpoint of improving low-temperature heat sealability, the polyolefin resin layer such as the polyethylene resin layer or the polypropylene resin layer may contain a heat seal modifier. No particular limitation is imposed on the heat seal modifier so long as it is a component having a high affinity for the polyolefin included in the polyolefin resin layer. Examples of the heat seal modifier include olefin-based polymers having a low melting point, and specific examples include olefin-based copolymers. A very low-density polyethylene may also be used.

From the viewpoint of improving the heat sealability, the melting point (Tm) of the olefin-based copolymer used as the heat seal modifier is preferably 115°C or lower, more preferably 110°C or lower, and still more preferably 105°C or lower. No particular limitation is imposed on the lower limit of Tm, but the lower limit is, for example, 50°C, 60°C, or 70°C.

No particular limitation is imposed on the olefin-based copolymer so long as it has a high affinity for the polyolefin and has a low melting point, and examples thereof include olefin-based elastomers and olefin-based plastomers.

Examples of the olefin-based elastomer include polyethylene-based elastomers such as ethylene-α-olefin copolymers and polypropylene-based elastomers such as propylene-α-olefin copolymers. Examples of the α-olefin include α-olefins having preferably 2 to 8 carbon atoms and more preferably 4 to 8 carbon atoms such as ethylene, propylene, 1-butene, 1-hexene, 1-octene, and 4-methyl-1-pentene.

From the viewpoint of improving the heat sealability, the melting point (Tm) of the polypropylene-based elastomer is preferably 140°C or lower and more preferably 135°C or lower. No particular limitation is imposed on the lower limit of Tm, but the lower limit is, for example, 70°C, 80°C, or 90°C.

The term "plastomer" is an antonym of the term "elastomer" (a macromolecule that, when an external force is applied, deforms according to the external force and recovers its original shape when the external force is removed), and the plastomer is a macromolecule that, unlike elastomers, does not undergo elastic deformation but easily undergoes plastic deformation.

Examples of the olefin-based plastomer include polyethylene-based plastomers. The polyethylene-based plastomer is a polyethylene obtained, for example, by copolymerizing ethylene and an α-olefin using a single-site catalyst such as a metallocene catalyst. The α-olefin is preferably an α-olefin having 4 to 8 carbon atoms such as 1-butene, 1-hexene, 1-octene, or 4-methyl-1-pentene. Specific examples of the polyethylene-based plastomer include ethylene-1-butene copolymers, ethylene-1-hexene copolymers, and ethylene-1-octene copolymers.

From the viewpoint of improving the heat sealability, the melting point (Tm) of the polyethylene-based plastomer is preferably 115°C or lower, more preferably 110°C or lower, and still more preferably 105°C or lower. No particular limitation is imposed on the lower limit of Tm, but Tm is, for example, 50°C, 60°C, or 70°C.

The density of the olefin-based copolymer is preferably 0.850 g/cm³ or more, more preferably 0.860 g/cm³ or more, and still more preferably 0.870 g/cm³ or more and is preferably 0.920 g/cm³ or less, more preferably 0.915 g/cm³ or less, and still more preferably 0.910 g/cm³ or less.

From the viewpoint of the film formability and processability, the MFR of the olefin-based copolymer is preferably 0.2 g/10 minutes or more, more preferably 0.3 g/10 minutes or more, and still more preferably 0.5 g/10 minutes or more and is preferably 20 g/10 minutes or less, more preferably 15 g/10 minutes or less, still more preferably 10 g/10 minutes or less, and particularly preferably 5 g/10 minutes or less. The MFR of the olefin-based copolymer is measured using method A described in JIS K 7210-1: 2014 under the conditions of a temperature of 190°C and a load of 2.16 kg.

The content of the heat seal modifier with respect to the total mass of the polyolefin resin layer is preferably 1% by mass or more and more preferably 2% by mass or more and is preferably 30% by mass or less, more preferably 20% by mass or less, still more preferably 10% by mass or less, and particularly preferably 7% by mass or less. In this case, preferred heat sealability can be imparted to, for example, a sealant layer.

The polyolefin resin layer may have a single layer structure or may have a multilayer structure.

In one embodiment, the polyolefin resin layer having a multilayer structure includes a first resin layer containing a polyolefin and a second resin layer containing a polyolefin and a heat seal modifier. An intermediate layer containing a polyolefin may be disposed between the first resin layer and the second resin layer. The second resin layer forms a surface layer on one side of the barrier sealant film. With this structure, both low-temperature heat sealability and good processability, for example, can be achieved. Specific and preferred examples of the polyolefin and the heat seal modifier include those described above.

The content of the polyolefin in the first resin layer and the content of the polyolefin in the intermediate layer are each preferably 80% by mass or more, more preferably 85% by mass or more, still more preferably 90% by mass or more, and particularly preferably 95% by mass or more.

The content of the heat seal modifier in the second resin layer is preferably 10% by mass or more and more preferably 20% by mass or more and is preferably 50% by mass or less. When the content is more than or equal to the lower limit, the heat sealability of the second resin layer, for example, can be improved. When the content is less than or equal to the upper limit, the recyclability of the laminated body, for example, can be improved. The content of the polyolefin in the second resin layer is preferably 50% by mass or more and is preferably 90% by mass or less and more preferably 80% by mass or less.

The thickness of the first resin layer is preferably 5 µm or more, more preferably 10 µm or more, and still more preferably 15 µm or more and is preferably 80 µm or less, more preferably 45 µm or less, and still more preferably 40 µm or less. When the thickness is more than or equal to the lower limit, the recyclability of the barrier sealant film and the heat sealability of the first resin layer, for example, can be improved. When the thickness is less than or equal to the upper limit, the processability of the barrier sealant film, for example, can be improved.

The thickness of the second resin layer is preferably 0.5 µm or more, more preferably 1.0 µm or more, and still more preferably 1.5 µm or more and is preferably 20 µm or less, more preferably 15 µm or less, and still more preferably 10 µm or less. When the thickness is more than or equal to the lower limit, the heat sealability of the second resin layer, for example, can be improved. When the thickness is less than or equal to the upper limit, the barrier sealant film can have, for example, both good recyclability and processability.

### <Printed layer>

The barrier laminated film of the present disclosure such as the barrier substrate may have a printed layer on the surface of the polyolefin resin layer. Examples of an image formed in the printed layer include letters, patterns, symbols, and combinations thereof. The printed layer may be formed using a biomass-derived ink. In this case, the environmental loads, for example, can be further reduced. Examples of the method for forming the printed layer include well-known printing methods such as a gravure printing method, an offset printing method, and a flexographic printing method. In particular, from the viewpoint of reducing environmental loads, a flexographic printing method is preferred.

### <Gas barrier resin layer>

The barrier laminated film of the present disclosure includes the gas barrier resin layer between the polyolefin resin layer and the vapor deposited film. With this structure, the adhesion of the vapor deposited film, for example, can be improve, and the gas barrier performance can also be improved. Generally, the gas barrier resin layer forms a surface layer on one side of the laminated film.

The gas barrier resin layer contains a gas barrier resin. Examples of the gas barrier resin include polyamides such as nylon 6, nylon 6,6, and poly(meta-xylylene adipamide), ethylene-vinyl alcohol copolymers, polyvinyl alcohols, polyacrylonitriles, polyesters, polyurethanes, and (meth)acrylic resins. Of these, from the viewpoint of oxygen barrier performance and water vapor barrier performance, polyamides and ethylene-vinyl alcohol copolymers are preferred.

Examples of the polyamide include aliphatic polyamides and semi-aromatic polyamides. The polyamide is preferably an aliphatic polyamide and more preferably a crystalline aliphatic polyamide. Examples of the aliphatic polyamide include aliphatic homopolyamides and aliphatic copolyamides. In the following examples, the polyamide is denoted also as "PA."

Specific examples of the aliphatic homopolyamide include polycaprolactam (PA6), polyenantholactam (PA7), polyundecanelactam (PA11), polylauryllactam (PA12), polyhexamethylene adipamide (PA66), polytetramethylene dodecamide (PA412), polypentamethylene azelamide (PA59), polypentamethylene sebacamide (PA510), polypentamethylene dodecamide (PA512), polyhexamethylene azelamide (PA69), polyhexamethylene sebacamide (PA610), polyhexamethylene dodecamide (PA612), polynonamethylene adipamide (PA96), polynonamethylene azelamide (PA99), polynonamethylene sebacamide (PA910), polynonamethylene dodecamide (PA912), polydecamethylene adipamide (PA106), polydecamethylene azelamide (PA109), polydecamethylene decamide (PA1010), polydecamethylene dodecamide (PA1012), polydodecamethylene adipamide (PA126), polydodecamethylene azelamide (PA129), polydodecamethylene sebacamide (PA1210), and polydodecamethylene dodecamide (PA1212).

Specific examples of the aliphatic copolyamide include a caprolactam/hexamethylene diaminoadipic acid copolymer (PA6/66), a caprolactam/hexamethylene diaminoazelaic acid copolymer (PA6/69), a caprolactam/hexamethylene diaminosebacic acid copolymer (PA6/610), a caprolactam/hexamethylene diaminoundecanoic acid copolymer (PA6/611), a caprolactam/hexamethylene diaminododecanoic acid copolymer (PA6/612), a caprolactam/aminoundecanoic acid copolymer (PA6/11), a caprolactam/lauryl lactam copolymer (PA6/12), a caprolactam/hexamethylene diaminoadipic acid/lauryl lactam copolymer (PA6/66/12), a caprolactam/hexamethylene diaminoadipic acid/hexamethylene diaminosebacic acid copolymer (PA6/66/610), and a caprolactam/hexamethylene diaminoadipic acid/hexamethylene diaminododecanedicarboxylic acid (PA6/66/612).

The relative viscosity of the aliphatic polyamide is preferably 1.5 or more, more preferably 2.0 or more, and still more preferably 2.5 or more and is preferably 5.0 or less, more preferably 4.5 or less, and still more preferably 4.0 or less. The relative viscosity of the aliphatic polyamide is measured by dissolving 1 g of the polyamide in 100 mL of 96% concentrated sulfuric acid and then measuring the relative viscosity at 25°C according to JIS K 6920-2: 2009.

The semi-aromatic polyamide is a polyamide having a structural unit derived from an aromatic diamine and a structural unit derived from an aliphatic dicarboxylic acid or a polyamide having a structural unit derived from an aliphatic diamine and a structural unit derived from an aromatic dicarboxylic acid. Examples of the semi-aromatic polyamide include a polyamide formed from an aromatic diamine and an aliphatic dicarboxylic acid and a polyamide formed from an aliphatic diamine and an aromatic dicarboxylic acid.

Examples of the semi-aromatic polyamide include polyhexamethylene terephthalamide (PA6T), polyhexamethylene isophthalamide (PA6I), polynonamethylene terephthalamide (PA9T), a polyhexamethylene adipamide/polyhexamethylene terephthalamide copolymer (PA66/6T), a polyhexamethylene adipamide/polyhexamethylene isophthalamide copolymer (PA66/6I), a polyhexamethylene terephthalamide/polycaproamide copolymer (PA6T/6), a polyhexamethylene isophthalamide/polycaproamide copolymer (PA6I/6), a polyhexamethylene terephthalamide/polydodecamide copolymer (PA6T/12), a polyhexamethylene isophthalamide/polyhexamethylene terephthalamide copolymer (PA6I/6T), a polyhexamethylene terephthalamide/poly(2-methylpentamethylene terephthalamide) copolymer (PA6T/M5T), a polyhexamethylene adipamide/polyhexamethylene terephthalamide/polyhexamethylene isophthalamide copolymer (PA66/6T/6I), a polyhexamethylene adipamide/polycaproamide/polyhexamethylene isophthalamide copolymer (PA66/6/6I), and poly(meta-xylylene adipamide) (PAMXD6).

The melt volume rate (MVR) of the semi-aromatic polyamide is preferably 5 cm³/10 minutes or more and more preferably 10 cm³/10 minutes or more and is preferably 200 cm³/10 minutes or less and more preferably 100 cm³/10 minutes or less. The MVR is measured according to ISO 1133 at a temperature of 275°C and a load to 5 kg.

In one embodiment, the gas barrier resin layer contains a crystalline aliphatic polyamide. Examples of the crystalline aliphatic polyamide include PA6, PA11, PA12, PA66, PA610, PA612, PA6/66, and PA6/66/12.

The melting point (Tm) of the crystalline aliphatic polyamide is preferably 180°C or higher, more preferably 185°C or higher, and still more preferably 190°C or higher and is preferably 300°C or lower, more preferably 250°C or lower, and still more preferably 230°C or lower.

In the ethylene-vinyl alcohol copolymer (EVOH), the content of the structural unit derived from ethylene (the ethylene content) is preferably 20% by mole or more and more preferably 25% by mole or more and is preferably 60% by mole or less and more preferably 50% by mole or less. When the ethylene content is more than or equal to the lower limit, the processability of the barrier laminated film, for example, can be improved. When the ethylene content is less than or equal to the upper limit, the oxygen barrier performance and water vapor barrier performance of the barrier laminated film, for example, can be improved. The ethylene content can be measured by an NMR method.

The melting point (Tm) of the EVOH is preferably 130°C or higher, more preferably 140°C or higher, and still more preferably 150°C or higher and is preferably 200°C or lower, more preferably 195°C or lower, and still more preferably 190°C or lower.

From the viewpoint of the film formability and processability, the melt flow rate (MFR) of the EVOH is preferably 0.1 g/10 minutes or more, more preferably 0.3 g/10 minutes or more, and still more preferably 0.5 g/10 minutes or more and is preferably 30 g/10 minutes or less, more preferably 20 g/10 minutes or less, still more preferably 10 g/10 minutes or less, and particularly preferably 5.0 g/10 minutes or less. The MFR of the EVOH is measured according to ASTM D1238 under the conditions of a temperature of 190°C and a load of 2.16 kg, but the measurement temperature may be 210°C, which depends on the melting point of the EVOH.

The difference between the melting point of the gas barrier resin contained in the gas barrier resin layer and the melting point of the polypropylene contained in the polypropylene resin layer or the melting point of the polyethylene contained in the polyethylene resin layer is preferably 100°C or smaller, more preferably 80°C or smaller, and still more preferably 70°C or smaller. When the difference is less than or equal to the upper limit, formability into the laminated film, for example, can be improved.

The content of the gas barrier resin in the gas barrier resin layer is preferably 50% by mass or more, more preferably 75% by mass or more, and still more preferably 80% by mass or more, 85% by mass or more, or 90% by mass or more. In this case, the oxygen barrier performance and water vapor barrier performance of the barrier laminated film, for example, can be improved.

The gas barrier resin layer may contain any of the above-described additives.

The thickness of the gas barrier resin layer is preferably 0.5 µm or more and more preferably 1.0 µm or more and is preferably 10 µm or less, more preferably 5.0 µm or less, still more preferably 4.0 µm or less, and particularly preferably 3.0 µm or less. When the thickness is more than or equal to the lower limit, the oxygen barrier performance and water vapor barrier performance of the barrier laminated film, for example, can be improved. When the thickness is less than or equal to the upper limit, the recyclability of the barrier laminated film, for example, can be improved.

In one embodiment, it is preferable that the thickness of the gas barrier resin layer is smaller than the thickness of the polyolefin resin layer. In this case, the recyclability of the barrier laminated film, for example, can be improved. The thickness of the gas barrier resin layer is smaller than the thickness of the polyolefin resin layer by preferably 5 µm or more and more preferably 10 µm or more.

In some conventional barrier laminated films, a gas barrier resin layer is disposed between polyolefin resin layers in order to obtain high gas barrier performance, and the structures of a multilayer annular die and a plurality of melt extruders in a film blowing machine are designed so as to increase the thickness of the gas barrier resin layer. From the viewpoint of mono-materialization, the inventors of the present disclosure have conducted studies on a design in which the thickness of the gas barrier resin layer is small. In this case, however, the gas barrier performance is not always sufficient. The inventors of the present disclosure have conducted further studies on this issue and found that the gas barrier performance of an unstretched laminated film produced by a blown film coextrusion process is significantly improved by providing the gas barrier resin layer not as an intermediate layer but as an outer layer and providing a vapor deposited film on the surface of the gas barrier resin layer. With this structure, the gas barrier performance can be improved, and also the gas barrier resin layer can be reduced in thickness, so that the content of the polyolefin can be improved. This is preferred in terms of mono-materialization.

### <Adhesive resin layer>

The laminated film may include an adhesive resin layer between the polyolefin resin layer and the gas barrier resin layer. In this case, the adhesion between the polyolefin resin layer and the gas barrier resin layer, for example, can be improved.

The adhesive resin layer contains a resin material. Examples of the resin material include polyolefins, modified polyolefins, vinyl resins, polyethers, polyesters, polyamides, polyurethanes, silicone resins, epoxy resins, and phenolic resins. In particular, from the viewpoint of the recyclability and adhesion, polyolefins and modified polyolefins are preferred, and modified polyolefins such as acid-modified polyolefins are more preferred.

Examples of the modified polyolefin include polyolefins modified by unsaturated carboxylic acids such as maleic acid and fumaric acid, acid anhydrides thereof, esters thereof, and metal salts thereof, and particular examples include graft-modified polyolefins. Of these resin materials, modified polyolefins are preferred because a structure suitable for a mono-material packaging material can be obtained.

From the viewpoint of the film formability and processability, the melt flow rate (MFR) of the modified polyolefin is preferably 0.1 g/10 minutes or more, more preferably 0.3 g/10 minutes or more, and still more preferably 0.5 g/10 minutes or more and is preferably 50 g/10 minutes or less, more preferably 30 g/10 minutes or less, still more preferably 10 g/10 minutes or less, and particularly preferably 5.0 g/10 minutes or less. The MFR of the modified polyolefin is measured according to ASTM D1238 under the conditions of a temperature of 190°C and a load of 2.16 kg, but the measurement temperature may be changed according to the melting point of the modified polyolefin.

The adhesive resin layer may contain any of the above-described additives.

The thickness of the adhesive resin layer is preferably 0.5 µm or more and more preferably 1.0 µm or more and is preferably 10 µm or less and more preferably 7.0 µm or less. When the thickness is more than or equal to the lower limit, the adhesion described above, for example, can be improved. When the thickness is less than or equal to the upper limit, the recyclability of the barrier laminated film, for example, can be improved.

In one embodiment, the laminated film is an unstretched coextruded resin film. In one embodiment, the laminated film is an unstretched resin film obtained by coextruding a material forming the polyolefin resin layer, a material forming an adhesive resin layer when the laminated film includes the adhesive resin layer, and a material forming the gas barrier resin layer using a well-known process such as a blown film process or a T-die process, preferably a blown film coextrusion process.

### <Vapor deposited film>

The barrier laminated film includes the vapor deposited film on the gas barrier resin layer. In one embodiment, the barrier laminated film includes the vapor deposited film on a surface of the gas barrier resin layer. By disposing the vapor deposited film on the gas barrier resin layer, for example, the gas barrier performance of the laminated film, specifically its oxygen barrier performance and water vapor barrier performance, can be improved. When the vapor deposited film is a vapor deposited metal film, the brightness can be improved. In a packaging container produced using the barrier laminated film, a reduction in the mass of the contents of the packaging container can be suppressed.

Examples of the vapor deposited film include a vapor deposited film containing one or two or more metals, a vapor deposited film containing one or two or more inorganic oxides, and a vapor deposited film containing one or two or more metals and one or two or more inorganic oxides. Examples of the metal include aluminum, chromium, tin nickel, copper, silver, gold, and platinum. Examples of the inorganic oxide include aluminum oxide, silicon oxide, magnesium oxide, calcium oxide, zirconium oxide, titanium oxide, boron oxide, hafnium oxide, barium oxide, and silicon oxycarbide (carbon-containing silicon oxide). Of these, a vapor deposited aluminum film, a vapor deposited aluminum oxide (alumina) film, a vapor deposited silicon oxide (silica) film, and a vapor deposited silicon oxycarbide film are preferred.

The thickness of the vapor deposited film is preferably 1 nm or more, more preferably 5 nm or more, and still more preferably 10 nm or more and is preferably 150 nm or less, more preferably 100 nm or less, and still more preferably 80 nm or less. When the thickness is more than or equal to the lower limit, the oxygen barrier performance and water vapor barrier performance of the barrier laminated film, for example, can be improved. When the thickness is less than or equal to the upper limit, the occurrence of cracking in the vapor deposited film, for example, can be reduced, and the recyclability of the packaging container can be improved.

When the vapor deposited film is a vapor deposited aluminum film, the optical density (OD value) of the vapor deposited aluminum film is preferably 2.0 or more and 3.5 or less. In this case, for example, while the barrier laminated film productivity is maintained, the oxygen barrier performance and the water vapor barrier performance can be improved. The OD value is measured according to JIS K 7361-1: 1997.

Preferably, the surface of the vapor deposited film is subjected to the surface treatment described above. In this case, the adhesion between the vapor deposited film and its adjacent layer, for example, can be improved.

Examples of the method for forming the vapor deposited film include: physical vapor deposition methods (PVD methods) such as a vacuum vapor deposition method, a sputtering method, and an ion plating method; and chemical vapor deposition methods (CVD methods) such as a plasma chemical vapor deposition method, a thermal chemical vapor deposition method, and a photochemical vapor deposition method. The vapor deposited film may be a composite film including different vapor deposited films formed using a combination of a physical vapor deposition method and a chemical vapor deposition method.

The degree of vacuum in the vapor deposition chamber is preferably about 10⁻² to about 10⁻⁸ mbar before the introduction of oxygen and is preferably about 10⁻¹ to 10⁻⁶ mbar after the introduction of oxygen. The amount of oxygen introduced etc. vary depending on the size of the vapor deposition apparatus. The oxygen introduced may contain any amount of an inert gas such as argon gas, helium gas, or nitrogen gas used as a carrier gas so long as the inert gas does not cause any problem. The conveying speed of the film on which the vapor deposited film is to be formed is, for example, 10 m/min or more and 800 m/min or less.

The vapor deposited film may be a single layer film formed through a single vapor deposition step or may be a multilayer film formed through a plurality of vapor deposition steps. When the vapor deposited film is a multilayer film, the layers may be formed of the same component or formed of different components. Therse layers may be formed using the same method or different methods.

### <Barrier coat layer>

In one embodiment, the barrier laminated film may further include a barrier coat layer on the vapor deposited film. Specifically, the barrier laminated film may further include the barrier coat layer on a surface of the vapor deposited film that is opposite to the surface on the gas barrier resin layer side. In this case, the oxygen barrier performance and water vapor barrier performance of the barrier laminated film, for example, can be improved. When, for example, the vapor deposited film is formed of an inorganic oxide such as aluminum oxide or silicon oxide, the occurrence of cracking in the vapor deposited film can be effectively reduced.

In one embodiment, the barrier coat layer contains a gas barrier resin. Example of the gas barrier resin include ethylene-vinyl alcohol copolymers, polyvinyl alcohols, polyacrylonitriles, polyesters, polyamides such as nylon 6, nylon 6,6, and poly(meta-xylylene adipamide), polyurethanes, and (meth)acrylic resins.

The content of the gas barrier resin in the barrier coat layer is preferably 50% by mass or more, more preferably 60% by mass or more, and still more preferably 70% by mass or more. With this structure, the gas barrier performance of the barrier coat layer, for example, can be improved.

The barrier coat layer may contain any of the above-described additives.

The thickness of the barrier coat layer containing the gas barrier resin is preferably 0.01 µm or more and more preferably 0.1 µm or more and is preferably 10 µm or less and more preferably 5 µm or less. When the thickness is more than or equal to the lower limit, the gas barrier performance, for example, can be improved. When the thickness is less than or equal to the upper limit, the processability of the barrier laminated film and the recyclability of the packaging container, for example, can be improved.

The barrier coat layer can be formed, for example, by dissolving or dispersing materials such as the gas barrier resin in water or an appropriate organic solvent to prepare a coating solution, then applying the coating solution to the surface of the vapor deposited film, and drying the coating solution.

In another embodiment, the barrier coat layer is a gas barrier coating film formed by mixing a metal alkoxide, a water-soluble polymer, and an optional silane coupling agent, optionally adding water, an organic solvent, and a sol-gel method catalyst to obtain a gas barrier composition, applying the gas barrier composition to the surface of the vapor deposited film, and drying the gas barrier composition. The gas barrier coating film contains hydrolyzed polycondensates formed as a result of hydrolysis and polycondensation of the metal alkoxide etc. By disposing the above barrier coating layer on the vapor-deposited film, the occurrent of cracking in the vapor deposited film can be effectively reduced when the deposited film is formed of an inorganic oxide.

The metal alkoxide is represented, for example, by formula (1).

R¹ₙM(OR²)ₘ (1)

In formula (1), R¹ and R² each independently represent an organic group having 1 to 8 carbon atoms, and M represents a metal atom. n represents an integer of 0 or more, and m represents an integer of 1 or more. n + m represents the valence of M.

Examples of the organic groups represented by R¹ and R² include alkyl groups having 1 to 8 carbon atoms such as a methyl group, an ethyl group, a n-propyl group, an isopropyl group, a n-butyl group, an isobutyl group, a sec-butyl group, a t-butyl group, a n-hexyl group, and a n-octyl group.

The metal atom M is, for example, silicon, zirconium, titanium, or aluminum.

Examples of the metal alkoxide include alkoxysilanes such as tetramethoxysilane, tetraethoxysilane, tetrapropoxysilane, and tetrabutoxysilane.

Examples of the water-soluble polymer include hydroxy group-containing polymers such as polyvinyl alcohols and ethylene-vinyl alcohol copolymers. Any one of a polyvinyl alcohol and an ethylene-vinyl alcohol copolymer or a combination of them may be used according to the desired physical properties such as oxygen barrier performance, water vapor barrier performance, water resistance, and weather resistance, or a gas barrier coating film obtained using a polyvinyl alcohol and a gas barrier coating film obtained using an ethylene-vinyl alcohol copolymer may be laminated together. The amount of the water-soluble polymer used with respect to 100 parts by mass of the metal alkoxide is preferably 5 parts by mass or more and 500 parts by mass or less.

The silane coupling agent used may be a known organic reactive group-containing organoalkoxysilane and is preferably an organoalkoxysilane having an epoxy group, and examples thereof include γ-glycidoxypropyltrimethoxysilane, γ-glycidoxypropylmethyldiethoxysilane, and β-(3,4-epoxycyclohexyl)ethyltrimethoxysilane. The amount of the silane coupling agent used with respect to 100 parts by mass of the metal alkoxide is preferably 1 part by mass or more and 20 parts by mass or less.

The gas barrier composition may contain water in an amount of preferably 0.1 moles or more and 100 moles or less and more preferably 0.5 moles or more and 60 moles or less with respect to 1 mole of the metal alkoxide. When the content of water is more than or equal to the lower limit, the oxygen barrier performance and water vapor barrier performance of the barrier laminated film, for example, can be improved. When the content of water is less than or equal to the upper limit, the hydrolysis rection, for example, can proceed rapidly.

The gas barrier composition may contain an organic solvent. Examples of the organic solvent include methyl alcohol, ethyl alcohol, n-propyl alcohol, isopropyl alcohol, and n-butyl alcohol.

The sol-gel method catalyst is preferably an acid or an amin-based compound.

Examples of the acid include mineral acids such as sulfuric acid, hydrochloric acid, and nitric acid and organic acids such as acetic acid and tartaric acid. The amount of the acid used with respect to 1 mole of the total amount of the metal alkoxide and the alkoxide moiety (for example, the silicate moiety) of the silane coupling agent is preferably 0.001 moles or more and 0.05 moles or less.

The amine-based compound is preferably a tertiary amine substantially insoluble in water but soluble in an organic solvent, and examples thereof include N,N-dimethylbenzylamine, tripropylamine, tributylamine, and tripentylamine. The amount of the amine-based compound used with respect to 100 parts by mass of the total amount of the metal alkoxide and the silane coupling agent is preferably 0.01 parts by mass or more and more preferably 0.03 parts by mass or more and is preferably 1.0 parts by mass or less and more preferably 0.3 parts by mass or less.

Examples of the method for applying the gas barrier composition include coating means such as roll coating using a gravure roll coater etc., spray coating, spin coating, dipping, brushing, bar coating, and an applicator.

One embodiment of the method for forming the gas barrier coating film will be described.

The metal alkoxide, the water-soluble polymer, the sol-gel method catalyst, water, the organic solvent, the optional silane coupling agent, and other optional components are mixed to prepare a gas barrier composition. In this composition, a polycondensation reaction proceeds gradually. The composition is applied to the vapor deposited film using an ordinary method and dried. During the drying, the polycondensation of the metal alkoxide and the water-soluble polymer (and also the silane coupling agent when the composition contains the silane coupling agent) further proceeds, and a composite polymer layer is formed. The above procedure may be repeated to stack a plurality of composite polymer layers. For example, the applied composition is heated to a temperature of preferably 20°C or higher, more preferably 50°C or higher, and still more preferably 70°C or higher and preferably 150°C or lower, more preferably 120°C or lower, and still more preferably 100°C or lower for 1 second or longer and 10 minutes or shorter. In this manner, the gas barrier coating film can be formed.

The thickness of the gas barrier coating film is preferably 0.01 µm or more and more preferably 0.1 µm or more and is preferably 100 µm or less, more preferably 50 µm or less, and still more preferably 5 µm or less. In this case, for example, the gas barrier performance can be improved, and the occurrence of cracking in the vapor deposited film formed of an inorganic oxide can be reduced. Moreover, the recyclability and processability of the packaging container can be improved.

### [Second embodiment: laminated film]

A laminated film in a second embodiment of the present disclosure will be described.

The laminated film in the second embodiment of the present disclosure includes, in the following order, a polyolefin resin layer, an adhesive resin layer, and a gas barrier resin layer. The laminated film of the present disclosure is suitable for an intermediate substrate or a sealant film. The adhesive resin layer contains an acid-modified resin as a main component. The gas barrier resin layer contains at least one resin selected from ethylene-vinyl alcohol copolymers and polyamides.

The laminated film is preferably an unstretched film. The unstretched film means a film that has not been intentionally subjected to stretching treatment (a film that has not been stretched in order to align molecules). The details of the stretching treatment will be described later. The term "unstretched film" is intended to include a film inevitably stretched during extrusion or when the film is coiled.

A laminated film 11 shown in Fig. 4 includes, in the following order, a polyolefin resin layer 12, an adhesive resin layer 13, and a gas barrier resin layer 14.

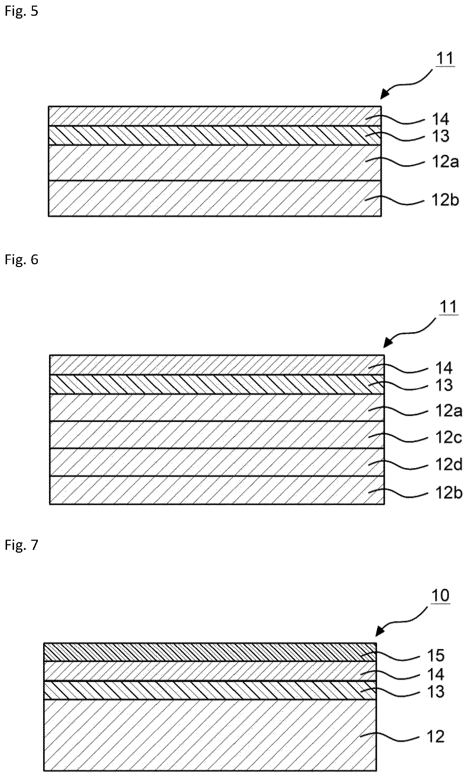

A laminated film 11 shown in Fig. 5 includes, as the polyolefin resin layer 12 in the following order, a first resin layer 12a containing a polyolefin and a second resin layer 12b containing a polyolefin and a heat seal modifier, and the second resin layer 12b serves as one surface layer of the laminated film 11.

A laminated film 11 shown in Fig. 6 includes, as the polyolefin resin layer 12 in the following order, a first resin layer 12a containing a polyolefin, a third resin layer 12c containing a polyolefin, a fourth resin layer 12d containing a polyolefin, and a second resin layer 12b containing a polyolefin and a heat seal modifier, and the second resin layer 12b serves as one surface layer of the laminated film 11.

The laminated film including the polyolefin resin layer, the adhesive resin layer, and the gas barrier resin layer is preferably an unstretched resin film and more preferably an unstretched coextruded resin film formed by a coextrusion T-die casting film forming process. The layers included in the resin film are each a coextruded resin layer. In one embodiment, the resin film is a coextruded resin film including preferably three or more layers and more preferably five or more layers and preferably nine or less layers and more preferably seven or less layers. The gas barrier resin layer formed can have a small thickness when multilayer coextrusion is used. In one embodiment, the laminated film is an unstretched resin film obtained by a coextrusion T-die casting film forming process using a material forming the polyolefin resin layer, a material forming the adhesive resin layer, and a material forming the gas barrier resin layer. This laminated film is preferred as a sealant film from the viewpoint of, for example, heat sealability and is also preferred as an intermediate substrate described later.

One embodiment of the coextrusion T-die casting will next be described. The materials for forming the layers are supplied to respective extruders, and predetermined amounts of the materials are extruded using gear pumps of the respective extruders, supplied to a multi-manifold die, and subjected to coextrusion casting to thereby obtain a laminated film. For example, in the extruders, the screw temperature for the gas barrier resin is set to 230°C or higher and 240°C or lower; the screw temperature for the acid-modified resin is set to 230°C or higher and 240°C or lower; the screw temperature for the polyolefin is set to 240°C or higher and 260°C or lower.

The content of the polyolefin (specifically polypropylene or polyethylene) in the laminated film is preferably more than 50% by mass, more preferably 60% by mass or more, still more preferably 70% by mass or more, and particularly preferably 80% by mass or more. This laminated film is preferred in terms of, for example, recyclability. The content of the polyolefin in the laminated film means the ratio of the amount of the polyolefin to the total amount of the resin materials in the layers forming the laminated film.

The thickness of the laminated film is preferably 6 µm or more and more preferably 12 µm or more and is preferably 110 µm or less and more preferably 60 µm or less. The laminated film having a thickness more than or equal to the lower limit has, for example, high strength, good heat sealability, and good recyclability. The laminated film having a thickness less than or equal to the upper limit has, for example, good processability. In the present description, the thicknesses of the laminated film, its layers, etc. are each an average of thicknesses measured at 10 points in a scanning electron microscope (SEM) image obtained by observing a cross section perpendicular to the film surface under the SEM.

### <Polyolefin resin layer>

In one embodiment, the polyolefin resin layer contains a polyolefin as a main component. Examples of the polyolefin include polyethylene, polypropylene, and polymethylpentene. The polyolefin resin layer is preferably a polyethylene resin layer or a polypropylene resin layer.

From the viewpoint of processability into the laminated film, the melt flow rate (MFR) of the polyolefin is preferably 0.5 g/10 minutes or more, more preferably 1 g/10 minutes or more, still more preferably 1.5 g/10 minutes or more, and yet more preferably 2 g/10 minutes or more. From the viewpoint of film formability by casting, the MFR of the polyolefin is preferably 50 g/10 minutes or less, more preferably 40 g/10 minutes or less, still more preferably 30 g/10 minutes or less, yet more preferably 20 g/10 minutes or less, and particularly preferably 10 g/10 minutes or less. In the present disclosure, the MFR of the polyolefin is measured using method A described in JIS K 7210-1:2014 under the condition of a load of 2.16 kg. The measurement temperature of the MFR is set according to the melting point of the polyolefin etc. and is, for example, 190°C for polyethylene and is 230°C for polypropylene.

The content of the polyolefin in the polyolefin resin layer is preferably more than 50% by mass, more preferably 55% by mass, still more preferably 60% by mass or more, yet more preferably 80% by mass or more, even more preferably 85% by mass or more, and particularly preferably 90% by mass or more or 93% by mass or more.

The polyolefin resin layer may contain any of the above-described resin materials other than the polyolefin.

The polyolefin resin layer may contain any of the above-described additives.

In one embodiment, the polyolefin resin layer may be subjected to the surface treatment described above. In this case, the adhesion between the polyolefin resin layer and another layer, for example, can be improved.

An adhesion improving layer may be disposed on the surface of the polyolefin resin layer.

The laminated film may include two or more polyolefin resin layers. The number of polyolefin resin layers is preferably 2 or more and more preferably 3 or more and is preferably 7 or less and more preferably 5 or less.

The thickness of the polyolefin resin layer is preferably 5 µm or more and more preferably 10 µm or more and is preferably 100 µm or less and more preferably 50 µm or less. When the laminated film includes two or more polyolefin resin layers, it is preferable that the total thickness of the polyolefin resin layers is within the above range. When the thickness of the polyolefin resin layer included in the laminated film is more than or equal to the lower limit, the laminated film has, for example, high strength, good heat resistance, and good recyclability. When the thickness of the polyolefin resin layer included in the laminated film is less than or equal to the upper limit, the laminated film has, for example, good processability.

### (Polyethylene resin layer)

In one embodiment, the polyethylene resin layer contains polyethylene as a main component. The details of the polyethylene are as described above and are omitted in this section. Examples of the polyethylene include high-density polyethylene, medium-density polyethylene, low-density polyethylene, linear low-density polyethylene, and very low-density polyethylene, and high-density polyethylene, medium-density polyethylene, low-density polyethylene, and linear low-density polyethylene are preferred. The polyethylene used may be biomass-derived polyethylene or mechanically or chemically recycled polyethylene, from the viewpoint of reducing environmental loads.

From the viewpoint of the strength, heat resistance, heat sealability, etc., the melting point (Tm) of the polyethylene is preferably 90°C or higher and more preferably 95°C or higher and is preferably 140°C or lower and more preferably 130°C or lower. In the present disclosure, Tm is a melting peak temperature obtained by differential scanning calorimetry (DSC) according to JIS K 7121: 2012.

The content of the polyethylene in the polyethylene resin layer is preferably more than 50% by mass, more preferably 55% by mass or more, still more preferably 60% by mass or more, yet more preferably 80% by mass or more, even more preferably 85% by mass or more, and particularly preferably 90% by mass or more or 93% by mass or more.

The laminated film may include two or more polyethylene resin layers. The number of polyethylene resin layers is preferably 2 or more and more preferably 3 or more and is preferably 7 or less and more preferably 5 or less.

In one embodiment, the laminated film includes, as the polyethylene resin layer in the following order, a first resin layer containing a linear low-density polyethylene and a second resin layer containing a linear low-density polyethylene and the above-described heat seal modifier (preferably a polyethylene-based plastomer). This laminated film is suitable as a sealant film.

In one embodiment, the laminated film includes, as the polyethylene resin layer in the following order, a first resin layer containing a linear low-density polyethylene, a third resin layer containing a high-density polyethylene, a fourth resin layer containing a linear low-density polyethylene, and a second resin layer containing a linear low-density polyethylene and the heat seal modifier.

The first resin layer may contain the linear low-density polyethylene as a main component or may contain the linear low-density polyethylene and a low-density polyethylene. The third resin layer may contain the high-density polyethylene as a main component or may contain the high-density polyethylene and a low-density polyethylene. The fourth resin layer may contain the linear low-density polyethylene as a main component or may contain the linear low-density polyethylene and a low-density polyethylene.

The density of the third resin layer may be higher than the density of the first resin layer; the density of the fourth resin layer may be lower than the density of the third resin layer; the density of the second resin layer may be lower than the density of the fourth resin layer. In this laminated film, for example, the low-temperature heat sealability, interlayer adhesion, strength, and stiffness are well balanced. The density of each layer is measured using method D (density gradient tube method, 23°C) described in JIS K 7112: 1999.

In the above embodiment, the ratios of the thicknesses of the first and second resin layers to the total thickness of the polyethylene resin layer are each independently preferably 3% or more, more preferably 5% or more, and still more preferably 7% or more and are each independently preferably 25% or less, more preferably 20% or less, and still more preferably 15% or less. In the above embodiment, the ratio of the thickness of the third resin layer to the total thickness of the polyethylene resin layer is preferably 35% or more and more preferably 40% or more and is preferably 75% or less and more preferably 70% or less.

In one embodiment, the laminated film includes, as the polyethylene resin layer in the following order, a fifth resin layer containing a linear low-density polyethylene and a sixth resin layer containing a high-density polyethylene. The fifth resin layer can contribute to, for example, an improvement in the adhesion to the adhesive resin layer. The sixth resin layer can contribute to, for example, an improvement in the stiffness and processability of the laminated film. The laminated film may include two or more sixth resin layers. This laminated film has, for example, high stiffness and processability and is suitable for an intermediate substrate.

The fifth resin layer may contain the linear low-density polyethylene as a main component or may contain the linear low-density polyethylene and a low-density polyethylene. The sixth resin layer may contain the high-density polyethylene as a main component or may contain the high-density polyethylene and a low-density polyethylene.

In the above embodiment, the ratio of the thickness of the fifth resin layer to the total thickness of the polyethylene resin layer is preferably 3% or more, more preferably 5% or more, and still more preferably 7% or more and is preferably 25% or less, more preferably 20% or less, and still more preferably 15% or less. In the above embodiment, the ratio of the total thickness of the sixth resin layer(s) to the total thickness of the polypropylene resin layer is preferably 50% or more and more preferably 60% or more and is preferably 97% or less and more preferably 95% or less.

### (Polypropylene resin layer)

In one embodiment, the polypropylene resin layer contain polypropylene as a main component. The laminated film including the polypropylene resin layer has, for example, good oil resistance. The polypropylene may be any of a propylene homopolymer, a propylene random copolymer, and a propylene block copolymer or may be a mixture of two or more selected from the above copolymers. From the viewpoint of reducing environmental loads, the polypropylene used may be biomass-derived polypropylene or mechanically or chemically recycled polypropylene. The details of the polypropylene are as described above and are omitted in this section.

The density of the polypropylene is, for example, 0.88 g/cm³ or more and 0.92 g/cm³ or less. From the viewpoint of the strength, heat resistance, heat sealability, etc., the melting point (Tm) of the polypropylene is preferably 120°C or higher and more preferably 125°C or higher and is preferably 170°C or lower and more preferably 165°C or lower.

The content of the polypropylene in the polypropylene resin layer is preferably more than 50% by mass, more preferably 55% by mass or more, still more preferably 60% by mass or more, yet more preferably 80% by mass or more, even more preferably 85% by mass or more, and particularly preferably 90% by mass or more or 93% by mass or more.

The laminated film may include two or more polypropylene resin layers. The number of polypropylene resin layers is preferably 2 or more and more preferably 3 or more and is preferably 7 or less and more preferably 5 or less.

In one embodiment, the laminated film includes, as the polypropylene resin layer in the following order, a first resin layer containing a propylene random copolymer as a main component and a second resin layer containing a propylene random copolymer and the above-described heat seal modifier (preferably a polypropylene-based elastomer). This laminated film is suitable as a sealant film.

In one embodiment, the laminated film includes, as the polypropylene resin layer in the following order, a first resin layer containing a propylene random copolymer as a main component, a third resin layer containing a propylene homopolymer as a main component, a fourth resin layer containing a propylene random copolymer as a main component, and a second resin layer containing a propylene random copolymer and the heat seal modifier. The first resin layer can contribute to, for example, an improvement in the adhesion to the adhesive resin layer. The third resin layer can contribute to, for example, an improvement in the stiffness of the laminated film. In this laminated film, for example, the low-temperature heat sealability, interlayer adhesion, strength, and stiffness are well balanced.

In one embodiment, the melting point of the third resin layer is higher than the melting point of the first resin layer; the melting point of the fourth resin layer is lower than the melting point of the third resin layer; the melting point of the second resin layer is lower than or equal to the melting point of the fourth resin layer. The melting point of each of the layers can be obtained by differential scanning calorimetry (DSC) according to JIS K 7121: 2012.

In the above embodiment, the ratios of the thicknesses of the first and second resin layers to the total thickness of the polypropylene resin layer are each independently preferably 3% or more, more preferably 5% or more, and still more preferably 7% or more and are each independently preferably 25% or less, more preferably 20% or less, and still more preferably 15% or less. In the above embodiment, the ratio of the thickness of the third resin layer to the total thickness of the polypropylene resin layer is preferably 35% or more and more preferably 40% or more and is preferably 75% or less and more preferably 70% or less.

In one embodiment, the laminated film includes, as the polypropylene resin layer in the following order, a fifth resin layer containing a propylene random copolymer as a main component, a sixth resin layer containing a propylene homopolymer as a main component, and a seventh resin layer containing a propylene random copolymer as a main component. This laminated film is suitable as an intermediate substrate. The fifth and seventh resin layers can each contribute to an improvement in the adhesion to the adhesive resin layer or an adhesive layer. The sixth resin layer can contribute to, for example, an improvement in the stiffness of the laminated film. The laminated film may include two or more sixth resin layers. In this laminated film, for example, the interlayer adhesion, strength, and stiffness are well balanced.

In the above embodiment, the ratios of the thicknesses of the fifth and seventh resin layers to the total thickness of the polypropylene resin layer are each independently preferably 3% or more, more preferably 5% or more, and still more preferably 7% or more and are each independently preferably 25% or less, more preferably 20% or less, and still more preferably 15% or less. In the above embodiment, the ratio of the total thickness of the sixth resin layer(s) to the total thickness of the polypropylene resin layer is preferably 40% or more and more preferably 50% or more and is preferably 94% or less and more preferably 90% or less.

### (Heat seal modifier)

From the viewpoint of improving low-temperature heat sealability, the polyolefin resin layer such as the polyethylene resin layer or the polypropylene resin layer may contain the heat seal modifier described above. The laminated film including such a polyolefin resin layer is suitable as a sealant film. The details of the heat seal modifier are as described above and are omitted in this section.

In one embodiment, the laminated film includes, as the polyolefin resin layer in the following order, a first resin layer containing a polyolefin and a second resin layer containing a polyolefin and the heat seal modifier. An intermediate layer containing a polyolefin (such as the third or fourth resin layer described above) may be disposed between the first resin layer and the second resin layer. In this case, the second resin layer forms one surface layer of the laminated film. With this structure, for example, good low-temperature heat sealability and processability can be achieved simultaneously. Specific and preferred examples of the polyolefin and the heat seal modifier are the same as those described above.

The content of the polyolefin in each of the first resin layer and the intermediate layer (such as the third or fourth resin layer described above) is preferably 80% by mass or more, more preferably 85% by mass or more, still more preferably 90% by mass or more, and particularly preferably 95% by mass or more.

The content of the heat seal modifier in the second resin layer is preferably 10% by mass or more and more preferably 20% by mass or more and is preferably 55% by mass or less and more preferably less than 50% by mass. When the content is more than or equal to the lower limit, the heat sealability of the second resin layer, for example, can be improved. When the content is less than or equal to the upper limit, the recyclability of the laminated film, for example, can be improved. The content of the polyolefin in the second resin layer is preferably 45% by mass or more and more preferably more than 50% by mass and is preferably 90% by mass or less and more preferably 80% by mass or less.

The ratio of the thickness of the first resin layer to the total thickness of the polyolefin resin layer is preferably 3% or more, more preferably 5% or more, and still more preferably 7% or more and is preferably 25% or less, more preferably 20% or less, and still more preferably 15% or less.

The ratio of the thickness of the second resin layer to the total thickness of the polyolefin resin layer is preferably 3% or more, more preferably 5% or more, and still more preferably 7% or more and is preferably 25% or less, more preferably 20% or less, and still more preferably 15% or less.

### <Gas barrier resin layer>

The laminated film of the present disclosure includes the gas barrier resin layer. This laminated film has, for example, good gas barrier performance such as oxygen barrier performance and water vapor barrier performance. In one embodiment, the gas barrier resin layer forms a surface layer on one side of the laminated film.

The gas barrier resin layer contains at least one selected from ethylene-vinyl alcohol copolymers and polyamides. The gas barrier resin layer containing such a component has, for example, good gas barrier performance.

In one embodiment, the laminated film of the present disclosure includes the polyolefin resin layer, the adhesive resin layer containing an acid-modified polyolefin, and the gas barrier resin layer containing an ethylene-vinyl alcohol copolymer (which hereinafter may be referred to also as "EVOH"). The adhesive resin layer is provided in order to improve the interlayer adhesion of the laminated film because the adhesion between the polyolefin resin layer and the gas barrier resin layer is insufficient in some cases. In one embodiment, the adhesive resin layer is in contact with the gas barrier resin layer.

The inventors of the present disclosure have found that, when a laminated film including a gas barrier resin layer containing EVOH and an adhesive resin layer containing an acid-modified polyolefin is produced using a coextrusion T-die casting film forming process, aggregates are formed particularly in opposite edge portions of the laminated film in some cases. In these cases, it is necessary to cut and dispose of the opposite edge portions with the aggregates formed therein, and this is one cause of an increase in cost. The reason for the formation of the aggregates may be that the reaction of the EVOH and the acid-modified polyolefin proceeds excessively in a portion between the adhesive resin layer and the gas barrier resin and therefore gel-like particles composed of high-molecular weight materials and streaks are formed. When a casting film forming process is used, variations in the flow channel lengths and residence times of the resins at different positions tend to be larger than those when a film blowing process is used. In this case, different positions have different thermal histories, and also the forming temperature is higher, so that the aggregates are likely to be formed. When a stretched film is formed, the aggregates etc. are unlikely to be formed during extrusion because the thickness of the film is large. Therefore, even when stretching treatment is performed after the extrusion to reduce the thickness of the film, the stretched film obtained can have a good appearance. However, when an unstretched film is formed, the aggregates etc. may be likely to be formed because the thickness of the film during extrusion is small. Accordingly, the inventors of the present disclosure have focused on inhibiting the reaction of the EVOH and the acid-modified polyolefin. Then the inventors have found that the formation of the aggregates can be reduced, for example, by adjusting the content of ethylene in the EVOH, the degree of acid modification of the acid-modified polypropylene, etc. within specific ranges to thereby reduce the number of active sites for the reaction and by controlling the MFRs of the materials. The reason described above is a presumption and in no way limits the details of the present disclosure.

In a laminated film obtained by a casting film forming process, the degree of occurrence of curling can be less than that in a laminated film obtained by a film blowing process. This may be because of the following reason. In a laminated film including, in the following order, a polyolefin resin layer, an adhesive resin layer, and a gas barrier resin layer, the degree and rate of crystallization of the polyolefin resin differ from the degree and rate of crystallization of the gas barrier resin. In the film blowing process, cooling performed after the formation of the film is generally air cooling. Therefore, the cooling proceeds slowly, and crystallization tends to proceed sufficiently. When the crystallization of the polyolefin resin proceeds sufficiently, the polyolefin resin layer undergoes volumetric shrinkage, and curling is likely to occur. However, in the casting film forming process, the colling after the formation of the film is generally performed by bringing the film into contact with cooling rolls. In this case, the film is cooled rapidly, and therefore crystallization does not proceed to a large extent. Therefore, the degree of volumetric shrinkage of the polyolefin resin layer is small, and curling is unlikely to occur.

When a laminated film obtained by the casting film forming process is used as a sealant layer included in a packaging material, this laminated film allows the packaging material to be heat-sealed at a lower temperature than that when a laminated film obtained by the film blowing process is used. This may be because of the following reason. As described above, in the laminated film obtained by the film blowing process, the degree of crystallization of the polyolefin resin layer is high, and therefore higher thermal energy is required during heat sealing, so that the sealing temperature is high. However, in the laminated film obtained by the casting film forming process, the degree of crystallization of the polyolefin resin layer is low, and therefore the sealing temperature during heat sealing can be low. For example, in mono-material (single-material) packaging, it is sometimes important that the package can be heat-sealed at low temperature.

In the ethylene-vinyl alcohol copolymer (EVOH), the content of the structural unit derived from ethylene (the ethylene content) is preferably 30% by mole or more, more preferably 35% by mole or more, still more preferably 38% by mole or more, and particularly preferably 40% by mole or more. In the EVOH with an ethylene content more than or equal to the lower limit, for example, the amount of groups (OH groups) reactable with the acid-modified resin is small, so that the reaction described above tends not to proceed excessively.

The content of ethylene in the EVOH is preferably 60% by mole or less and more preferably 50% by mole or less. In the EVOH with an ethylene content less than or equal to the upper limit, the oxygen barrier performance and water vapor barrier performance of the laminated film, for example, can be improved.

The content of the ethylene can be measured by an NMR method.

The average degree of saponification of the EVOH is preferably 90% by mole or more, more preferably 95% by mole or more, and still more preferably 99% by mole or more. The average degree of saponification is measured according to JIS K 6726: 1994 (a solution obtained by dissolving the EVOH uniformly in a water/methanol solvent is used).

The melting point (Tm) of the EVOH is preferably 130°C or higher, more preferably 140°C or higher, and still more preferably 150°C or higher and is preferably 200°C or lower, more preferably 195°C or lower, and still more preferably 190°C or lower.

From the viewpoint of film formability by casting and processability, the melt flow rate (MFR) of the EVOH is preferably 0.1 g/10 minutes or more, more preferably 0.3 g/10 minutes or more, and still more preferably 0.5 g/10 minutes or more and is preferably 30 g/10 minutes or less, more preferably 20 g/10 minutes or less, still more preferably 10 g/10 minutes or less, and particularly preferably 5 g/10 minutes or less. The MFR of the EVOH is measured using method A described in JIS K 7210-1: 2014 under the conditions of a temperature of 190°C and a load of 2.16 kg, and the measurement temperature may be 210°C, which depends on the melting point of the EVOH.

The details of the polyamide are as described above and are omitted in this section.

The gas barrier resin layer is, for example, a layer containing an ethylene-vinyl alcohol copolymer as a main component, a layer containing a polyamide as a main component, or a layer containing a resin mixture of an ethylene-vinyl alcohol copolymer and a polyamide as a main component.

The content of the gas barrier resin in the gas barrier resin layer is preferably 50% by mass or more, more preferably 75% by mass or more, and still more preferably 80% by mass or more, 85% by mass or more, or 90% by mass or more. The laminated film including this gas barrier resin layer has, for example, good gas barrier performance.

The gas barrier resin layer may contain any of the above-described additives.

The thickness of the gas barrier resin layer is preferably 0.5 µm or more and more preferably 1 µm or more and is preferably 10 µm or less and more preferably 5 µm or less. The laminated film including the gas barrier resin layer having a thickness more than or equal to the lower limit has, for example, good gas barrier performance. The laminated film including the gas barrier resin layer having a thickness less than or equal to the upper limit has, for example, good recyclability.

When the gas barrier resin layer containing the EVOH is located at the outermost surface of the coextruded resin film, the gas barrier resin layer is likely to be affected by heat during coextrusion, and the aggregates described above are formed in some cases. By increasing the thickness of the gas barrier resin layer, the formation of the aggregates tends to be suppressed. However, from the viewpoint of mono-materialization and cost, there is a demand for a thin gas barrier resin layer in some cases. When the gas barrier resin layer is thin, the aggregates described above tend to be formed under the influence of heat, but the formation of the aggregates tends to be suppressed by the use of the above-described means. This may be because the reaction of the EVOH and the acid-modified polyolefin is prevented from proceeding excessively.

In one embodiment, it is preferable that the thickness of the gas barrier resin layer is smaller than the thickness of the polyolefin resin layer. This laminated film has, for example, good recyclability. The thickness of the gas barrier resin layer is smaller than the thickness of the polyolefin resin layer by preferably 5 µm or more and more preferably 10 µm or more.

### <Adhesive resin layer>

The laminated film of the present disclosure includes the adhesive resin layer between the polyolefin resin layer and the gas barrier resin layer. In this laminated film, for example, the interlayer adhesion between the polyolefin resin layer and the gas barrier resin layer is high.

The adhesive resin layer contains an acid-modified resin. Examples of the acid-modified resin include acid-modified polyolefins and acid-modified vinyl resins. In particular, from the viewpoint of recyclability and adhesion, acid-modified polyolefins are preferred, and acid-modified polyethylenes and acid-modified polypropylenes are more preferred. When the polyolefin resin layer is a polyethylene resin layer, the acid-modified resin is preferably an acid-modified polyethylene. When the polyolefin resin layer is a polypropylene resin layer, the acid-modified resin is preferably an acid-modified polypropylene.

The acid-modified polyolefin is, for example, a polyolefin modified by an acid-modification component and is, in particular, a polyolefin graft-modified by an acid-modification component. Examples of the acid-modification component include unsaturated carboxylic acids such as maleic acid, fumaric acid, acrylic acid, methacrylic acid, itaconic acid, citraconic acid, tetrahydrophthalic acid, and methyltetrahydrophthalic acid, acid anhydrides thereof, esters thereof, and metal salts thereof. The acid-modified polyolefin is preferably a maleic acid-modified polyolefin (which includes a maleic anhydride-modified polyolefin) and more preferably maleic acid-modified polyethylene or maleic acid-modified polypropylene.

The melt flow rate (MFR) of the acid-modified polyolefin is preferably 1 g/10 minutes or more, more preferably 3 g/10 minutes or more, still more preferably 5 g/10 minutes or more, yet more preferably 7 g/10 minutes or more, and particularly preferably 9 g/10 minutes or more. Since, for example, the flow velocity of the acid-modified polyolefin having an MFR more than or equal to the lower limit during film formation by coextrusion casting is high, retention of the acid-modified polyolefin in the die can be suppressed. Therefore, excessive progress of the above-described reaction with the EVOH tends to be suppressed even when the temperature of the die and the temperature of the resin during the film formation by casting are increased.

From the viewpoint of film formability, the MFR of the acid-modified polyolefin is preferably 50 g/10 minutes or less, more preferably 40 g/10 minutes or less, still more preferably 30 g/10 minutes or less, yet more preferably 20 g/10 minutes or less, and particularly preferably 15 g/10 minutes or less.

The MFR of the acid-modified polyolefin is measured using method A described in JIS K 7210-1: 2014 under the condition of a load of 2.16 kg. The measurement temperature of the MFR is set according to the melting point of the acid-modified polyolefin etc. and is, for example, 190°C for acid-modified polyethylene and 230°C for acid-modified polypropylene.

The content of the structural unit derived from the acid-modification component in the acid-modified polyolefin is preferably 3% by mass or less. In the acid-modified polyolefin with the above content less than or equal to the upper limit, for example, the amount of groups reactable with the EVOH is small, and excessive progress of the above-described reaction tends to be suppressed. No particular limitation is imposed on the lower limit of the content of the structural unit derived from the acid-modification component in the acid-modified polyolefin, and the lower limit may be, for example, 0.001% by mass, 0.005% by mass, or 0.01% by mass.

The content of the structural unit derived from the acid-modification component is measured by infrared spectroscopy.

A sample taken from the adhesive resin layer is used to obtain an infrared absorption spectrum (IR spectrum) with the horizontal axis representing wavenumber (cm⁻¹) and the vertical axis representing absorption intensity by attenuated total reflection (ATR) spectroscopy using an infrared spectrophotometer, and then the intensities of peaks are computed. Specifically, in the IR spectrum, the intensity 1 of a peak attributed to C=O stretching vibration in the range of 1700 to 1800 cm⁻¹ (preferably in the range of 1710 to 1745 cm⁻¹) is computed, and the intensity 2 of a peak attributed to C-H deformation vibration in the range of 1400 to 1500 cm⁻¹ (preferably in the range of 1450 to 1470 cm⁻¹) is computed.

The IR intensity ratio (intensity 1 / intensity 2) is preferably less than 0.4, more preferably 0.35 or less, still more preferably 0.3 or less, yet more preferably 0.25 or less, and particularly preferably 0.2 or less, 0.15 or less, or 0.1 or less. In this adhesive resin layer, the formation of the aggregates described above tends to be reduced. This may be because the degree of acid modification of the acid-modified polypropylene is appropriately low and therefore the above-described reaction can be appropriately suppressed. The IR intensity ratio (intensity 1 / intensity 2) is preferably 0.01 or more, more preferably 0.02 or more, and still more preferably 0.03 or more. This adhesive resin layer tends to also have good adhesion to the gas barrier resin layer.

The infrared absorption spectrum using the infrared spectrophotometer is measured under the following measurement conditions.

### (Measurement conditions)

Measurement apparatus: Fourier transform infrared spectrophotometer Nicolet 6700 (manufactured by Thermo Scientific)
Measurement method: Macro ATR (prism used: germanium (Ge))
Measurement environment: temperature 25°C
Resolution: 4 cm⁻¹
Number of times of integration: 32
Incident angle: 45°

The adhesive resin layer may contain any of the above-described additives.

The thickness of the adhesive resin layer is preferably 0.5 µm or more and more preferably 1 µm or more and is preferably 10 µm or less and more preferably 7 µm or less. In the laminated film including the adhesive resin layer having a thickness more than or equal to the lower limit, for example, the adhesion described above is good. The laminated film including the adhesive resin layer having a thickness less than or equal to the upper limit has, for example, good recyclability.

### <Vapor deposited film and barrier coat layer>

A vapor deposited film may be disposed on the gas barrier resin layer of the laminated film of the present disclosure to form a barrier laminated film. This barrier laminated film includes the laminated film of the present disclosure and the vapor deposited film disposed on the gas barrier resin layer of the laminated film. The barrier laminated film may include, in the following order, the polyolefin resin layer, the adhesive resin layer, the gas barrier resin layer, and the vapor deposited film. In one embodiment, the barrier laminated film includes the vapor deposited film on the surface of the gas barrier resin layer. Preferably, the gas barrier resin layer is in contact with the vapor deposited film. The barrier laminated film including the vapor deposited film on the gas barrier resin layer has, for example, good gas barrier performance, specifically good oxygen barrier performance and water vapor barrier performance. A barrier laminated film including a vapor deposited metal film as the vapor deposited film has, for example, high brightness. With a packaging container including this barrier laminated film as a substrate or a sealant film, a reduction in the mass of the contents of the packaging container can be small.

The barrier laminated film may further include a barrier coat layer on the vapor deposited film. Specifically, the barrier laminated film may have the barrier coat layer on the surface of the vapor deposited film that is opposite to the surface facing the gas barrier resin layer.

The details of the vapor deposited film and the barrier coat layer are as described above and are omitted in this section.

A barrier laminated film 10 shown in Fig. 7 includes a vapor deposited film 15 and an unstretched laminated film including, in the following order, a polyolefin resin layer 12, an adhesive resin layer 13, and a gas barrier resin layer 14. The vapor deposited film 15 is disposed on the gas barrier resin layer 14.

### [Third embodiment: laminated body]

A laminated body in a third embodiment of the present disclosure includes, in the following order, at least:
a polyolefin resin substrate;
an intermediate substrate; and
a sealant layer.

The laminated body in the third embodiment is suitable for a packaging material.

The polyolefin resin substrate is a stretched substrate, i.e., a substrate subjected to stretching treatment. The intermediate substrate is the barrier laminated film in the first embodiment or the laminated film in the second embodiment (which may be the barrier laminated film). The sealant layer is a resin layer containing a polyolefin as a main component. This laminated body has, for example, good shock resistance.

In one embodiment, the main component of the resin forming the polyolefin resin substrate, the main component of the resin forming the polyolefin resin layer of the intermediate substrate, and the main component of the resin forming the sealant layer are each a polyolefin. In this case, the recyclability of the laminated body, for example, can be improved.

For example, the polyolefin resin substrate is a polyethylene resin substrate containing polyethylene as a main component; the polyolefin resin layer in the intermediate substrate is a polyethylene resin layer containing polyethylene as a main component; the sealant layer is a polyethylene resin layer containing polyethylene as a main component.

Alternatively, the polyolefin resin substrate is a polypropylene resin substrate containing polypropylene as a main component; the polyolefin resin layer in the intermediate substrate is a polypropylene resin layer containing polypropylene as a main component; the sealant layer is a polypropylene resin layer containing polypropylene as a main component.

Alternatively, the polyolefin resin substrate is a polypropylene resin substrate containing polypropylene as a main component; the polyolefin resin layer in the intermediate substrate is a polypropylene resin layer containing polypropylene as a main component; the sealant layer is a polyethylene resin layer containing polyethylene as a main component.

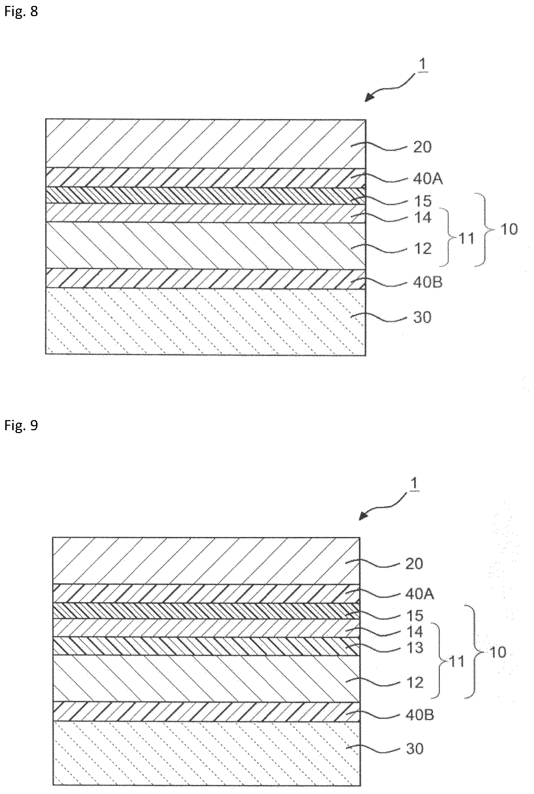

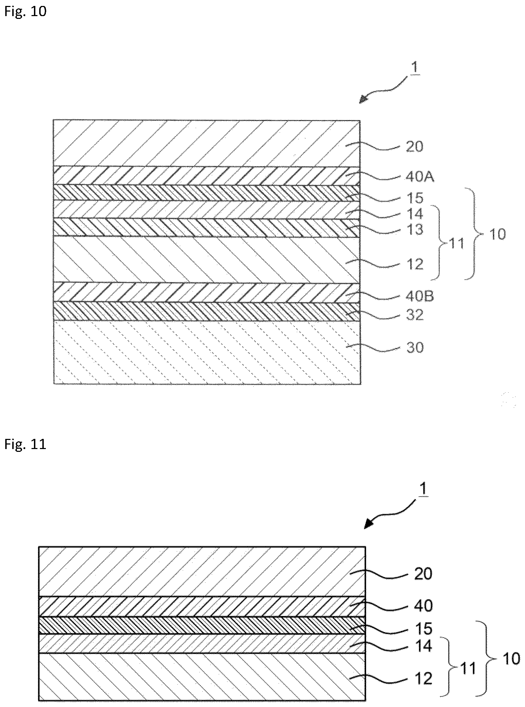

A laminated body 1 shown in Fig. 8 includes, in the following order, a polyolefin resin substrate 20, an adhesive layer 40A, a barrier laminated film 10, an adhesive layer 40B, and a sealant layer 30. The barrier laminated film 10 includes a vapor deposited film 15 and an unstretched resin substrate 11 including a polyolefin resin layer 12 and a gas barrier resin layer 14. In this example, the polyolefin resin layer 12 is in contact with the adhesive layer 40B, and the vapor deposited film 15 is in contact with the adhesive layer 40A. In one embodiment, the laminated body 1 further includes an unillustrated printed layer on the polyolefin resin substrate 20. The printed layer is generally formed on the surface of the polyolefin resin substrate 20 that is located on the sealant layer 30 side. In a laminated body 1 shown in Fig. 9, the unstretched resin substrate 11 includes an adhesive resin layer 13 between the polyolefin resin layer 12 and the gas barrier resin layer 14. A laminated body 1 shown in Fig. 10 further includes a vapor deposited film 32 on the surface of the sealant layer 30 that is on the barrier laminated film 10 side. A laminated film may be used instead of the barrier laminated film 10.

The laminated body in the third embodiment of the present disclosure includes at least three components, i.e., the polyolefin resin substrate, the intermediate substrate, and the sealant layer. The laminated body in the third embodiment exhibits better gas barrier performance (in particular, oxygen barrier performance and water vapor barrier performance) than a two-component laminated body including a barrier substrate and a sealant layer. Even when the laminated body having the structure described above is subjected to, for example, heat treatment, the vapor deposited film is protected appropriately, and higher gas barrier performance is achieved.

### [Fourth embodiment: laminated body]

A laminated body in a fourth embodiment of the present disclosure includes, in the following order, at least:
a polyolefin resin substrate; and
a sealant layer.

The laminated body in the fourth embodiment is suitable for a packaging material.

The polyolefin resin substrate is a stretched substrate, i.e., a substrate subjected to stretching treatment.

The sealant layer is the barrier laminated film in the first embodiment described above or the laminated film in the second embodiment described above (which may be the barrier laminated film). In this case, the barrier laminated film or the laminated film is disposed such as the gas barrier resin layer faces the substrate.

In one embodiment, the main component of the resin forming the polyolefin resin substrate and the main component of the resin forming the polyolefin resin layer in the barrier laminated film or the laminated film are each a polyolefin, and this can improve, for example, the recyclability of the laminated body.

For example, the polyolefin resin substrate is a polyethylene resin substrate containing polyethylene as a main component, and the polyolefin resin layer in the barrier laminated film or the laminated film is a polyethylene resin layer containing polyethylene as a main component.

Alternatively, the polyolefin resin substrate is a polypropylene resin substrate containing polypropylene as a main component, and the polyolefin resin layer in the barrier laminated film or the laminated film is a polypropylene resin layer containing polypropylene as a main component.

Alternatively, the polyolefin resin substrate is a polypropylene resin substrate containing polypropylene as a main component, and the polyolefin resin layer in the barrier laminated film or the laminated film is a polyethylene resin layer containing polyethylene as a main component.

A laminated body 1 shown in Fig. 11 includes, in the following order, a polyolefin resin substrate 20, an adhesive layer 40, and a barrier laminated film 10. The barrier laminated film 10 includes a vapor deposited film 15 and an unstretched resin film 11 including a polyolefin resin layer 12 and a gas barrier resin layer 14. In one embodiment, the laminated body 1 further includes an unillustrated printed layer on the polyolefin resin substrate 20. The printed layer is generally formed on the surface of the polyolefin resin substrate 20 that is on the barrier laminated film 10 side. A laminated film may be used instead of the barrier laminated film 10.

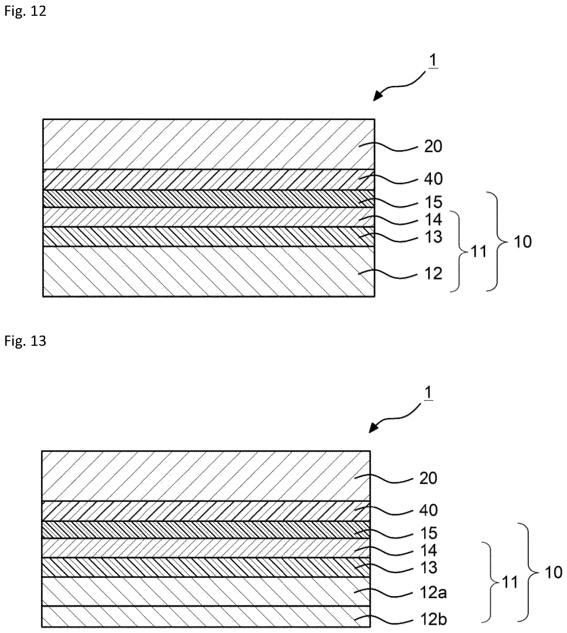

In a laminated body 1 shown in Fig. 12, the unstretched resin film 11 includes an adhesive resin layer 13 between the polyolefin resin layer 12 and the gas barrier resin layer 14. In a laminated body 1 shown in Fig. 13, the polyolefin resin layer 12 includes a first resin layer 12a containing a polyolefin and a second resin layer 12b containing a polyolefin and the heat seal modifier, and the second resin layer 12b forms a surface layer on one side of the laminated body 1. In one embodiment, an intermediate layer (not shown) containing a polyolefin may be disposed between the first resin layer 12a and the second resin layer 12b. A laminated film may be used instead of the barrier laminated film 10.

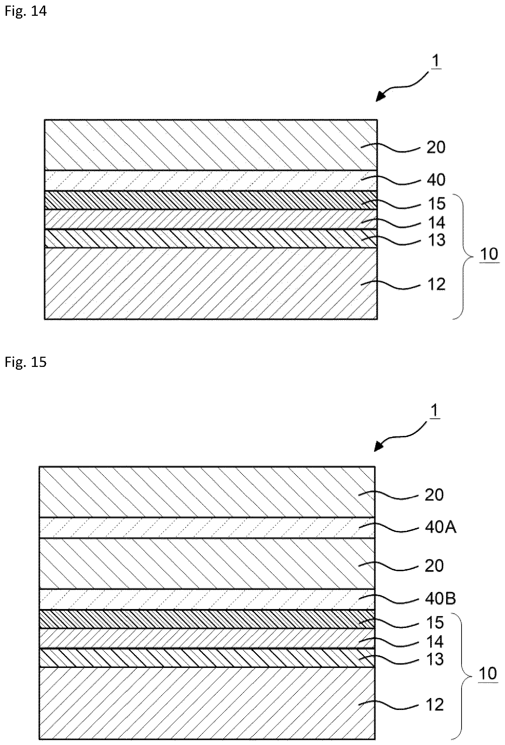

A laminated body 1 shown in Fig. 14 includes, in the following order, a polyolefin resin substrate 20, an adhesive layer 40, and a barrier laminated film 10 serving as a sealant layer. The barrier laminated film 10 includes, in the following order, a polyolefin resin layer 12, an adhesive resin layer 13, a gas barrier resin layer 14, and a vapor deposited film 15. A laminated body 1 shown in Fig. 15 includes, in the following order, a polyolefin resin substrate 20, an adhesive layer 40A, a polyolefin resin substrate 20, an adhesive layer 40B, and a barrier laminated film 10 serving as a sealant layer. A laminated film may be used instead of the barrier laminated film 10. In one embodiment, the laminated body 1 further includes an unillustrated printed layer on the polyolefin resin substrate 20. The printed layer is generally formed on the surface of the polyolefin resin substrate 20 that faces the barrier laminated film 10.

Specific examples of the layer structure of the laminated body of the present disclosure are shown below.
(1) A laminated body including, in the following order, a polypropylene resin substrate, an optional printed layer, an adhesive layer, and the laminated film of the present disclosure serving as a sealant layer (including an optional vapor deposited film, a gas barrier resin layer, an acid-modified polypropylene resin layer, and a polypropylene resin layer).
(2) A laminated body including, in the following order, a polyethylene resin substrate, an optional printed layer, an adhesive layer, the laminated film of the present disclosure serving as a sealant layer (including an optional vapor deposited film, a gas barrier resin layer, an acid-modified polyethylene resin layer, and a polyethylene resin layer).
(3) A laminated body including, in the following order, a polypropylene resin substrate, an optional printed layer, an adhesive layer, and the laminated film of the present disclosure serving as a sealant layer (including an optional vapor deposited film, a gas barrier resin layer, an acid-modified polyethylene resin layer, and a polyethylene resin layer).
(4) A laminated body including, in the following order, a polypropylene resin substrate, an optional printed layer, an adhesive layer, the laminated film of the present disclosure serving as an intermediate substrate (including an optional vapor deposited film, a gas barrier resin layer, an acid-modified polypropylene resin layer, and a polypropylene resin layer), an adhesive layer, and a polypropylene-based sealant layer.
(5) A laminated body including, in the following order, a polypropylene resin substrate, an optional printed layer, an adhesive layer, the laminated film of the present disclosure serving as an intermediate substrate (including an optional vapor deposited film, a gas barrier resin layer, an acid-modified polypropylene resin layer, and a polypropylene resin layer), an adhesive layer, and a polyethylene-based sealant layer.
(6) A laminated body including, in the following order, a polyethylene resin substrate, an optional printed layer, an adhesive layer, the laminated film of the present disclosure serving as an intermediate substrate (including an optional vapor deposited film, a gas barrier resin layer, an acid-modified polyethylene resin layer, and a polyethylene resin layer), an adhesive layer, and a polyethylene-based sealant layer.

In one embodiment, the main component of the resin forming the polyolefin resin substrate and the main component of the resin forming the polyolefin resin layer in the laminated film are each a polyolefin. In this case, for example, the recyclability of the laminated body can be improved.

The content of the polyolefin (specifically polypropylene or polyethylene) with respect to the total mass of the laminated body of the present disclosure is preferably 80% by mass or more, more preferably 85% by mass or more, still more preferably 88% by mass or more, and particularly preferably 90% by mass or more. In this case, for example, the laminated body can be used to produce a monomaterialized packaging container, and therefore the recyclability of the packaging container can be improved. No particular limitation is imposed on the upper limit of the content of the polyolefin, but the upper limit may be, for example, 99% by mass or 95% by mass. The content of the polyolefin in the laminated body means the ratio of the amount of the polyolefin to the sum of the amounts of the resin materials in the layers forming the laminated body.

### <Polyolefin resin substrate>

In one embodiment, the polyolefin resin substrate contains a polyolefin as a main component. Examples of the polyolefin include polypropylene, polyethylene, and polymethylpentene. The polyolefin resin substrate is preferably a polypropylene resin substrate or a polyethylene resin substrate.

From the viewpoint of the film formability and processability, the MFR of the polyolefin is preferably 0.1 g/10 minutes or more, more preferably 0.2 g/10 minutes or more, still more preferably 0.3 g/10 minutes or more, and yet more preferably 0.5 g/10 minutes or more and is preferably 50 g/10 minutes or less, more preferably 30 g/10 minutes or less, and still more preferably 10 g/10 minutes or less.

The content of the polyolefin in the polyolefin resin substrate is preferably more than 50% by mass, more preferably 80% by mass or more, still more preferably 85% by mass or more, yet more preferably 90% by mass or more, and particularly preferably 95% by mass or more.

The polyolefin resin substrate may contain a resin material other than the polyolefin. Examples of this resin material include (meth)acrylic resins, vinyl resins, cellulose resins, polyamides, polyesters, and ionomer resins.

The polyolefin resin substrate may contain any of the above-described additives.

In one embodiment, the polyolefin resin substrate is a substrate subjected to stretching treatment, i.e., a stretched substrate. Such a substrate has, for example, high strength, good heat resistance, and high transparency. The stretching treatment may be uniaxial stretching or may be biaxial stretching. The stretching ratio when the stretching is performed in the machine direction (the direction of the flow of the substrate, the MD direction) is preferably 2 or more and more preferably 3 or more and is preferably 10 or less and more preferably 7 or less. The stretching ratio when the stretching is performed in the width direction (the direction perpendicular to the MD direction, the TD direction) is preferably 2 or more and more preferably 3 or more and is preferably 10 or less and more preferably 7 or less. When the stretching ratio is 2 or more, the strength, heat resistance, and transparency of the substrate, for example, can be improved, and the printability of the substrate can be improved. From the viewpoint of the rupture limit of the substrate, the stretching ratio is preferably 10 or less.

The polyolefin resin substrate can be produced, for example, by subjecting a polyolefin or a polyolefin resin composition to a T-die process, a blown film process, etc. to form a film and then stretching the film. In the blown film process, the formation of the film and the stretching of the film can be performed simultaneously.

In one embodiment, the polyolefin resin substrate may be subjected to the surface treatment described above. In this case, for example, the adhesion between the polyolefin resin substrate and another layer can be improved.

An adhesion improving layer may be provided on the surface of the polyolefin resin substrate.

The haze value of the polyolefin resin substrate is preferably 25% or less, more preferably 15% or less, and still more preferably 10% or less. The smaller the haze value, the better. However, in one embodiment, the lower limit of the haze value may be 0.1% or 1%. The haze value of the substrate is measured according to JIS K 7136: 2000.

The polyolefin resin substrate may have a single layer structure or may have a multilayer structure.

The thickness of the polyolefin resin substrate is preferably 5 µm or more, more preferably 8 µm or more, and still more preferably 10 µm or more and is preferably 300 µm or less, more preferably 100 µm or less, and still more preferably 50 µm or less. When the thickness is more than or equal to the lower limit, the strength and heat resistance of the laminated body, for example, can be improved. When the thickness is less than or equal to the upper limit, the processability of the laminated body, for example, can be improved.

### (Polypropylene resin substrate)

In one embodiment, the polypropylene resin substrate contains polypropylene as a main component. When the laminated body of the present disclosure includes the polypropylene resin substrate, the oil resistance of a packaging container produced using the laminated body, for example can be improved.

The polypropylene may be any of a propylene homopolymer, a propylene random copolymer, and a propylene block copolymer or may be a mixture of two or more selected from these polymers. From the viewpoint of reducing environmental loads, the polypropylene used may be biomass-derived polypropylene or mechanically or chemically recycled polypropylene. The details of these materials are as described above.

From the viewpoint of transparency, the polypropylene is preferably a propylene random copolymer. When importance is placed on the stiffness and heat resistance of the packaging container, a propylene homopolymer is preferred. When importance is placed on the shock resistance of the packaging container, a propylene block copolymer is preferred.

From the viewpoint of the heat resistance, the melting point (Tm) of the polypropylene is preferably 120°C or higher, more preferably 130°C or higher, and still more preferably 150°C or higher and is preferably 170°C or lower.

The content of the polypropylene in the polypropylene resin substrate is preferably more than 50% by mass, more preferably 80% by mass or more, still more preferably 85% by mass or more, yet more preferably 90% by mass or more, and particularly preferably 95% by mass or more. With this structure, the recyclability of the laminated body, for example, can be improved.

The polypropylene resin substrate may have a single layer structure or may have a multilayer structure.

### (Polyethylene resin substrate)

In one embodiment, the polyethylene resin substrate contains polyethylene as a main component. The details of the polyethylene are as described above. Examples of the polyethylene include high-density polyethylene, medium-density polyethylene, low-density polyethylene, linear low-density polyethylene, and very low-density polyethylene. From the viewpoint of the strength and heat resistance of the polyethylene resin substrate, high-density polyethylene and medium-density polyethylene are preferred. From the viewpoint of reducing environmental loads, the polyethylene used may be biomass-derived polyethylene or mechanically or chemically recycled polyethylene.

From the viewpoint of the heat resistance, the melting point (Tm) of the polyethylene is preferably 100°C or higher, more preferably 105°C or higher, and still more preferably 110°C or higher and is preferably 140°C or lower.

The content of the polyethylene in the polyethylene resin substrate is preferably more than 50% by mass, more preferably 80% by mass or more, still more preferably 85% by mass or more, yet more preferably 90% by mass or more, and particularly preferably 95% by mass or more. With this structure, the recyclability of the laminated body, for example, can be improved.

In one embodiment, the polyethylene resin substrate is a uniaxially stretched film or a biaxially stretched film, is, for example, a uniaxially stretched film, and is more specifically a uniaxially stretched film subjected to stretching treatment in the machine direction (MD).

The polyethylene resin substrate may have a single layer structure or may have a multilayer structure. In the following description, a polyethylene resin substrate having a multilayer structure and subjected to stretching treatment is referred to also as a "stretched multilayer PE substrate." The stretched multilayer PE substrate is preferred because its strength, heat resistance, and stretchability can be improved.

In the stretched multilayer PE substrate, the densities of the polyethylenes included in the layers of the substrate may be the same or different. For example, in the stretched multilayer PE substrate, the layers may be designed so as to have a gradient in density (density gradient). When the stretched multilayer PE substrate has a density gradient, its strength, heat resistance, and stretchability, for example, can be improved.

The stretched multilayer PE substrate has a multilayer structure including two or more layers. In one embodiment, the number of layers in the stretched multilayer PE substrate is preferably 3 or more and is preferably 7 or less and more preferably 5 or less. The number of layers in the stretched multilayer PE substrate is preferably an odd number and is, for example, 3, 5, or 7. Since the stretched multilayer PE substrate has a multilayer structure, the balance between the stiffness, strength, heat resistance, printability, and stretchability of the substrate can be improved. It is preferable that each of the layers in the stretched multilayer PE substrate is formed of polyethylene.

The stretched multilayer PE substrate can be produced, for example, by subjecting a plurality of resin materials or resin compositions to a blown film process or a T-die process to form a film laminate and then stretching the laminate. As a result of the stretching treatment, the transparency, stiffness, strength, and heat resistance of the substrate can be improved, so that the substrate can be suitably used, for example, as a substrate of a packaging material.

In one embodiment, the stretched multilayer PE substrate is obtained by subjecting a laminate (precursor) having a multilayer structure to stretching treatment. Specifically, the laminate can be produced by coextruding the resin materials forming these layers into a tubular shape to form a film. Alternatively, the laminate can be produced by coextruding the resin materials forming these layers into a tubular shape and then compression-bonding layers facing each other using, for example, a rubber roller. By producing the laminate using any of the above methods, the number of defective products can be significantly reduced, and the production efficiency can be improved.

When a T-die process is used to produce the stretched multilayer PE substrate, the melt flow rates (MFRs) of the polyethylenes forming the layers are each preferably 3.0 g/10 minutes or more and 20 g/10 minutes or less, from the viewpoint of the film formability and processability into the stretched multilayer PE substrate.

When a blown film process is used to produce the stretched multilayer PE substrate, the melt flow rates (MFRs) of the polyethylenes forming the layers are each preferably 0.2 g/10 minutes or more and 5.0 g/10 minutes or less, from the viewpoint of the film formability and processability into the stretched multilayer PE substrate.

The stretched multilayer PE substrate is obtained, for example, by stretching any of the laminates described above. The preferred stretching ratio is as described above. The film blowing machine can also be used to stretch the laminate. Since the stretched multilayer PE substrate can be produced in this manner, the production efficiency can be further improved.

Some embodiments of the stretched multilayer PE substrate will be described. A layer with a polyethylene content of 80% by mass or more is referred to as a "polyethylene layer." For example, a layer with a high-density polyethylene content of 80% by mass or more is referred to as a "high-density polyethylene layer."

A stretched multilayer PE substrate in a first embodiment includes, in the following order, a medium-density polyethylene layer, a high-density polyethylene layer, a blend layer containing a medium-density polyethylene and a high-density polyethylene, a high-density polyethylene layer, and a medium-density polyethylene layer. With this structure, the printability of the substrate, for example can be improved, and its strength and heat resistance can be improved. Moreover, the stretchability of the unstretched laminate can be improved.

The mass ratio of the medium-density polyethylene to the high-density polyethylene (the medium-density polyethylene / the high-density polyethylene) in the blend layer including the medium-density polyethylene and the high-density polyethylene is preferably 0.25 or more and more preferably 0.4 or more and is preferably 4 or less and more preferably 2.4 or less.

A stretched multilayer PE substrate in a second embodiment includes, in the following order, a medium-density polyethylene layer, a medium-density polyethylene layer, a blend layer containing a medium-density polyethylene and a linear low-density polyethylene, a medium-density polyethylene layer, and a medium-density polyethylene layer. With this structure, the printability of the substrate, for example, can be improved, and its strength and heat resistance can be improved. Moreover, the stretchability of the unstretched laminate can be improved.

The mass ratio of the medium-density polyethylene to the linear low-density polyethylene (the medium-density polyethylene / the linear low-density polyethylene) in the blend layer containing the medium-density polyethylene and the linear low-density polyethylene is preferably 0.25 or more and more preferably 0.4 or more and is preferably 4 or less and more preferably 2.4 or less.

A stretched multilayer PE substrate in a third embodiment includes, in the following order, a blend layer containing a medium-density polyethylene and a high-density polyethylene, a blend layer containing a medium-density polyethylene and a linear low-density polyethylene, a linear low-density polyethylene layer, a blend layer containing a medium-density polyethylene and a linear low-density polyethylene, and a blend layer containing a medium-density polyethylene and a high-density polyethylene. With this structure, the printability of the substrate, for example, can be improved, and its strength and heat resistance can be improved. Moreover, the stretchability of the unstretched laminate can be improved. In the stretched multilayer PE substrate in the third embodiment, a blend layer containing a medium-density polyethylene and a linear low-density polyethylene may be used instead of the linear low-density polyethylene layer.

The mass ratios of the medium-density polyethylene and the high-density polyethylene (the medium-density polyethylene / the high-density polyethylene) in the blend layers containing the medium-density polyethylene and the high-density polyethylene are each independently preferably 0.25 or more and more preferably 0.4 or more and are each independently preferably 4 or less and more preferably 2.4 or less.

The mass ratio of the medium-density polyethylene to the linear low-density polyethylene (the medium-density polyethylene / the linear low-density polyethylene) in each blend layer containing the medium-density polyethylene and the linear low-density polyethylene is preferably 0.25 or more and more preferably 0.4 or more and is preferably 4 or less and more preferably 2.4 or less.

A stretched multilayer PE substrate in a fourth embodiment includes, in the following order, a blend layer containing a high-density polyethylene and a medium-density polyethylene, a medium-density polyethylene layer, a blend layer containing a linear low-density polyethylene and a medium-density polyethylene, a medium-density polyethylene layer, and a blend layer containing a high-density polyethylene and a medium-density polyethylene. With this structure, the printability of the substrate, for example, can be improved, and its strength and heat resistance can be improved. Moreover, the stretchability of the unstretched laminate can be improved.

The mass ratios of the medium-density polyethylene to the high-density polyethylene (the medium-density polyethylene / the high-density polyethylene) in the blend layers containing the high-density polyethylene and the medium-density polyethylene are each independently preferably 0.25 or more and more preferably 0.4 or more and are each independently preferably 4 or less and more preferably 2.4 or less.

The mass ratio of the linear low-density polyethylene to the medium-density polyethylene (the linear low-density polyethylene / the medium-density polyethylene) in the blend layer containing the linear low-density polyethylene and the medium-density polyethylene is preferably 0.25 or more and more preferably 0.4 or more and is preferably 4 or less and more preferably 2.4 or less.

A stretched multilayer PE substrate in a fifth embodiment includes, in the following order, a first layer containing a medium-density polyethylene and a high-density polyethylene, a second layer containing a high-density polyethylene, a third layer containing a linear low-density polyethylene, a fourth layer containing a high-density polyethylene, and a fifth layer containing a medium-density polyethylene and a high-density polyethylene.

A stretched multilayer PE substrate in a sixth embodiment includes, in the following order, a first layer containing a medium-density polyethylene and a high-density polyethylene, a second layer containing a medium-density polyethylene and a linear low-density polyethylene, a third layer containing a linear low-density polyethylene, a fourth layer containing a high-density polyethylene, and a fifth layer containing a medium-density polyethylene and a high-density polyethylene.

When an image is printed on a substrate, the substrate may be subjected to pretreatment, i.e., surface treatment such as corona discharge treatment, in some cases. The durability of a layer containing a medium-density polyethylene against the surface treatment tends to be higher than that of a layer containing only a high-density polyethylene as the polyethylene. Therefore, the layer containing a medium-density polyethylene has good ink adhesion during printing after the surface treatment. A layer containing a medium-density polyethylene and a high-density polyethylene also has heat resistance necessary for printing and heat sealing. The layer containing a medium-density polyethylene contributes to an improvement in the stretchability of a laminate serving as a precursor of the stretched multilayer PE substrate.

The mass ratios of the medium-density polyethylene to the high-density polyethylene (the medium-density polyethylene / the high-density polyethylene) in the first and fifth layers are each independently preferably 1.1 or more and more preferably 1.5 or more and are each independently preferably 5 or less and more preferably 3 or less. In this case, the balance between the ink adhesin and heat resistance can be further improved.

The total contents of the medium-density polyethylene and the high-density polyethylene in the first and fifth layers are each independently preferably 80% by mass or more, more preferably 90% by mass or more, and still more preferably 95% by mass or more. In this case, the ink adhesion to the substrate and its heat resistance can be further improved.

In the fifth embodiment, the second layer and the fourth layer each contribute to an improvement in the heat resistance of the substrate. Specifically, since not only the first and fifth layers but also the second and fourth layers contain a high-density polyethylene, the heat resistance of the substrate can be further improved.

In the fifth embodiment, the second layer and the fourth layer may each independently further contain a low-density polyethylene. In this case, the balance between the heat resistance, stiffness, and processability of the substrate can be further improved.

In the fifth embodiment, the mass ratios of the high-density polyethylene to the low-density polyethylene (the high-density polyethylene / the low-density polyethylene) in the second and fourth layers are each independently preferably 1 or more and more preferably 1.5 or more and are each independently preferably 4 or less and more preferably 3 or less. In this case, the balance between the heat resistance, stiffness, and processability of the substrate can be further improved.

In the fifth embodiment, the contents of the high-density polyethylene in the second and fourth layers are each independently preferably more than 50% by mass, more preferably 55% by mass or more, and still more preferably 60% by mass or more. In this case, the heat resistance of the substrate can be further improved.

In the fifth embodiment, the total contents of the high-density polyethylene and the low-density polyethylene in the second and fourth layers are each independently preferably 80% by mass or more, more preferably 90% by mass or more, and still more preferably 95% by mass or more. In this case, the balance between the heat resistance, stiffness, and processability of the substrate can be further improved.

In the sixth embodiment, the second layer contains the medium-density polyethylene and the linear low-density polyethylene. The second layer contributes to an improvement in the interlaminar strength of the multilayer substrate. By disposing the second layer between the third layer and the first layer, the difference in density between these layers can be reduced. In this case, the interlaminar strength can be improved, and the occurrence of delamination can be reduced.

In the sixth embodiment, the mass ratio of the medium-density polyethylene to the linear low-density polyethylene (the medium-density polyethylene / the linear low-density polyethylene) in the second layer is preferably 1.1 or more and more preferably 1.5 or more and is preferably 5 or less and more preferably 3 or less. In this case, the balance between the interlaminar strength, heat resistance, stiffness, and processability of the multilayer substrate can be further improved.

In the sixth embodiment, the total content of the medium-density polyethylene and the linear low-density polyethylene in the second layer is preferably 80% by mass or more, more preferably 90% by mass or more, and still more preferably 95% by mass or more. In this case, the balance between the interlaminar strength, heat resistance, stiffness, and processability of the multilayer substrate can be further improved.

In the sixth embodiment, the fourth layer contributes to an improvement in the heat resistance of the substrate. Specifically, since not only the first layer and the fifth layer but also the fourth layer contains high-density polyethylene, the heat resistance of the substrate can be further improved.

In the sixth embodiment, the content of the high-density polyethylene in the fourth layer is preferably 80% by mass or more, more preferably 90% by mass or more, and still more preferably 95% by mass or more. In this case, the heat resistance of the multilayer substrate can be further improved.

The thicknesses of the second and fourth layers are each independently preferably 0.5 µm or more and more preferably 1 µm or more and are each independently preferably 15 µm or less, more preferably 10 µm or less, and still more preferably 8 µm or less. In this case, the heat resistance of the substrate can be further improved.

The third layer contributes to an improvement in the stretchability of the laminate used as the precursor of the stretched multilayer PE substrate.

The third layer may further contain a low-density polyethylene.

The content of the linear low-density polyethylene in the third layer is preferably more than 50% by mass, more preferably 60% by mass or more, still more preferably 70% by mass or more, and yet more preferably 80% by mass or more, 90% by mass or more, or 95% by mass or more. In this case, the balance between the heat resistance, stiffness, and stretchability can be further improved.

When the third layer contains a low-density polyethylene, the content of the low-density polyethylene is preferably less than 50% by mass, more preferably 40% by mass or less, and still more preferably 30% by mass or less and is preferably 5% by mass or more and more preferably 10% by mass or more.

In the sixth embodiment, the third layer may further contain a medium-density polyethylene. In this case, the mass ratio of the medium-density polyethylene to the linear low-density polyethylene (the medium-density polyethylene / the linear low-density polyethylene) in the third layer is preferably 0.25 or more and more preferably 0.4 or more and is preferably 4 or less and more preferably 2.4 or less. In this case, the balance between the interlaminar strength and the stretchability can be further improved. The total content of the medium-density polyethylene and the linear low-density polyethylene in the third layer is preferably 80% by mass or more, more preferably 90% by mass or more, and still more preferably 95% by mass or more. In this case, the balance between the heat resistance, stiffness, and stretchability can be further improved.

The thickness of the third layer is preferably 1 µm or more, more preferably 2 µm or more, and still more preferably 5 µm or more and is preferably 50 µm or less, more preferably 40 µm or less, and still more preferably 30 µm or less. In this case, the balance between the heat resistance, stiffness, and stretchability can be further improved.

The ratio of the total thickness of the second and fourth layers to the thickness of the third layer (the total thickness of the second and fourth layers / the thickness of the third layer) is preferably 0.1 or more, more preferably 0.2 or more, and still more preferably 0.5 or more and is preferably 10 or less, more preferably 5 or less, and still more preferably 2 or less. In this case, the stiffness, strength, and heat resistance of the substrate can be further improved.

In the stretched multilayer PE substrates in the first to sixth embodiments, the thicknesses of the two surface resin layers are each independently preferably 0.5 µm or more and more preferably 1 µm or more and are each independently preferably 10 µm or less, more preferably 8 µm or less, and still more preferably 5 µm or less. In this case, for example, the heat resistance and printability of the substrate can be further improved. In some embodiments of the stretched multilayer PE substrates in the fifth and sixth embodiments, the two surface resin layers are the first and fifth layers.

In the stretched multilayer PE substrates in the first to sixth embodiments, it is preferable that the thicknesses of the two surface resin layers are each smaller than the total thickness of the three inner layers (which is referred to as a multilayer intermediate layer). The ratio of the thickness of each of the two surface resin layers to the total thickness of the multilayer intermediate layer (the surface resin layer / the multilayer intermediate layer) is preferably 0.05 or more and more preferably 0.1 or more and is preferably 0.8 or less, more preferably 0.7 or less, and still more preferably 0.4 or less. In this case, the stiffness, strength, and heat resistance of the substrate, for example, can be further improved. In some embodiments of the stretched multilayer PE substrates in the fifth and sixth embodiments, the multilayer intermediate layer includes the second to fourth layers.

A stretched multilayer PE substrate in a seventh embodiment includes, in the following order, a, high-density polyethylene layer and a medium-density polyethylene layer. Since the high-density polyethylene layer serves as a surface resin layer of the substrate, the strength and heat resistance of the substrate, for example, can be improved. Since the substrate includes the medium-density polyethylene layer, the stretchability of the unstretched laminate, for example, can be improved.

A stretched multilayer PE substrate in an eighth embodiment includes, in the following order, a, high-density polyethylene layer, a medium-density polyethylene layer, and a high-density polyethylene layer. In this structure, the strength and heat resistance of the substrate, for example, can be improved, and the occurrence of curling of the substrate can be reduced. Moreover, the stretchability of the unstretched laminate can be improved.

In the stretched multilayer PE substrates in the seventh and eighth embodiments, it is preferable that the thickness of the high-density polyethylene layer is less than or equal to the thickness of the medium-density polyethylene layer. The ratio of the thickness of the high-density polyethylene layer to the thickness of the medium-density polyethylene layer is preferably 0.1 or more and more preferably 0.2 or more and is preferably 1 or less and more preferably 0.5 or less.

A stretched multilayer PE substrate in a ninth embodiment includes, in the following order, a high-density polyethylene layer, a medium-density polyethylene layer, one of a low-density polyethylene layer, a linear low-density polyethylene layer, and a very low-density polyethylene layer (these three low-density polyethylene layers are collectively denoted as "low-density polyethylene layers etc." for the sake of simplifying the description), a medium-density polyethylene layer, and a high-density polyethylene layer. With this structure, the stretchability of the unstretched laminate, for example, can be improved, and the strength and heat resistance of the substrate can be improved. Moreover, the occurrence of curling of the substrate can be reduced.

In the stretched multilayer PE substrate in the ninth embodiment, it is preferable that the thickness of the high-density polyethylene layer is less than or equal to the thickness of the medium-density polyethylene layer. The ratio of the thickness of the high-density polyethylene layer to the thickness of the medium-density polyethylene layer is preferably 0.1 or more and more preferably 0.2 or more and is preferably 1 or less and more preferably 0.5 or less.

In the stretched multilayer PE substrate in the ninth embodiment, it is preferable that the thickness of the high-density polyethylene layer is more than or equal to the thickness of the one of the low-density polyethylene layers etc. The ratio of the thickness of the high-density polyethylene layer to the thickness of the one of the low-density polyethylene layers etc. is preferably 1 or more and is preferably 4 or less and more preferably 2 or less.

In other embodiments, the stretched multilayer PE substrate may be a substrate including, in the following order, a high-density polyethylene layer, a high-density polyethylene layer, a blend layer containing a medium-density polyethylene and a high-density polyethylene, a high-density polyethylene layer, and a high-density polyethylene or may be a substrate including, in the following order, a medium-density polyethylene layer, a high-density polyethylene layer, a linear low-density polyethylene layer, a high-density polyethylene layer, and a medium-density polyethylene layer.

The stretched multilayer PE substrate may also be a substrate including, in the following order, a high-density polyethylene layer, a blend layer containing a high-density polyethylene and a medium-density polyethylene, one of the low-density polyethylene layers etc., a blend layer containing a high-density polyethylene and a medium-density polyethylene, and a high-density polyethylene layer.

At least one layer selected from the layers included in the stretched multilayer PE substrate may contain a slip agent. In this case, the processability of the substrate, for example, can be improved. For example, in the stretched multilayer PE substrates in the fifth and sixth embodiments described above, the third layer may contain a slip agent, or all the first to fifth layers may contain a slip agent.

Examples of the slip agent include amide-based lubricants, fatty acid esters such as glycerin fatty acid esters, hydrocarbon-based waxes, higher fatty acid-based waxes, metallic soaps, hydrophilic silicones, silicone-modified (meth)acrylic resins, silicone-modified epoxy resins, silicone-modified polyethers, silicone-modified polyesters, silicone-(meth)acrylic block copolymers, polyglycerol-modified silicones, and paraffins. The slip agent is preferably an amide-based lubricant. Examples of the amide-based lubricant include saturated fatty acid amides, unsaturated fatty acid amides, substituted amides, methylolamides, saturated fatty acid bisamides, unsaturated fatty acid bisamides, fatty acid ester amides, and aromatic bisamides. Of these, unsaturated fatty acid amides are preferred, and erucic acid amide is more preferred.

In the stretched multilayer PE substrate, the content of the slip agent in the layer containing the slip agent is preferably 0.01% by mass or more and more preferably 0.03% by mass or more and is preferably 3% by mass or less and more preferably 1% by mass or less. In this case, the processability of the substrate can be further improved.

### <Printed layer>

The laminated body of the present disclosure may include a printed layer on a surface of the substrate such as the polyolefin resin substrate or the intermediate substrate. Examples of the image formed in the printed layer include letters, patterns, symbols, and combinations thereof. The printed layer may be formed, for example, using a biomass-derived ink. In this case, the environmental loads, for example, can be further reduced. The method for forming the printed layer is as described above.

The printed layer may be formed on any surface of the polyolefin resin substrate. It is preferable that the printed layer is formed on the surface of the polyolefin resin substrate that is on the sealant layer side because the contact between the printed layer and the outside air can be suppressed, so that aged deterioration of the printed layer can be reduced. The printed layer may be formed on any surface of the intermediate substrate.

### intermediate substrate>

The laminated body in the third embodiment of the present disclosure includes, as the intermediate substrate, the barrier laminated film described above or the laminated film described above. The details of these films are as described above and are omitted in this section. Preferably, the barrier laminated film is disposed such that the vapor deposited film faces the polyolefin resin substrate and the polyolefin resin layer faces the sealant layer.

### <Sealant layer>

The laminated body of the present disclosure includes the sealant layer.

In one embodiment, the sealant layer is a resin layer containing a polyolefin as a main component. The sealant layer is formed of the same resin material as that of the polyolefin resin substrate and/or the same resin material as that of the polyolefin resin layer, i.e., formed of a polyolefin. In this case, mono-materialization of a packaging container can be achieved. It is unnecessary to separate the substrate and the sealant layer in the used collected packaging container from each other, and therefore the recyclability of the packaging container can be improved. In one embodiment, the polyolefin is polypropylene, and the use of the sealant layer formed of polypropylene can improve the oil resistance of a packaging container produced using this laminated body.

The polyolefin is preferably polyethylene or polypropylene.

From the viewpoint of the film formability and processability, the MFR of the polyolefin included in the sealant layer is preferably 0.1 g/10 minutes or more, more preferably 0.3 g/10 minutes or more, and still more preferably 0.5 g/10 minutes or more and is preferably 50 g/10 minutes or less, more preferably 30 g/10 minutes or less, and still more preferably 20 g/10 minutes or less.

When a T-die process is used to produce the sealant layer, the MFR of the polyolefin is preferably 5.0 g/10 minutes or more and 20 g/10 minutes or less. When the MFR is more than or equal to the lower limit, processability into the sealant layer, for example, can be improved. When the MFR is less than or equal to the upper limit, the rupture of the sealant layer, for example, can be suppressed.

When a blown film process is used to produce the sealant layer, the MFR of the polyolefin is preferably 0.5 g/10 minutes or more and 5.0 g/10 minutes or less. When the MFR is more than or equal to the lower limit, processability into the sealant layer, for example, can be improved. When the MFR is less than or equal to the upper limit, the film formability, for example, can be improved.

The content of the polyolefin in the sealant layer is preferably more than 50% by mass, more preferably 70% by mass or more, still more preferably 75% by mass or more, yet more preferably 80% by mass or more, even more preferably 85% by mass or more, and particularly preferably 90% by mass or more. In this case, the recyclability of the packaging container, for example, can be improved.

The sealant layer may contain any of the above-described additives.

The thickness of the sealant layer is preferably 5 µm or more and more preferably 10 µm or more and is preferably 100 µm or less, more preferably 80 µm or less, and still more preferably 50 µm or less. When the sealant layer has a multilayer structure, it is preferable that the total thickness is within the above range. When the thickness is more than or equal to the lower limit, the heat sealability of the sealant layer and the recyclability of the packaging container, for example, can be improved. When the thickness is less than or equal to the upper limit, the processability of the laminated body, for example, can be improved.

From the viewpoint of the heat sealability, the sealant layer is preferably an unstretched resin film and more preferably an unstretched coextruded resin film, and the layers forming the sealant layer are coextruded resin layers. The resin film can be produced, for example, by using a casting process, a T-die process, a blown film process, etc.

For example, an unstretched resin film corresponding to the sealant layer may be stacked on the barrier substrate with an optional adhesive layer interposed therebetween, or the sealant layer may be formed by melt extrusion of a polyolefin or a polyolefin resin composition onto the barrier substrate. The adhesive layer is, for example, an adhesive layer described later.

In one embodiment, the sealant layer is a resin layer containing polyethylene as a main component. Examples of the polyethylene include high-density polyethylene, medium-density polyethylene, low-density polyethylene, linear low-density polyethylene, and very low-density polyethylene. From the viewpoint of the heat sealability, low-density polyethylene, linear low-density polyethylene, and very low-density polyethylene are preferred. From the viewpoint of reducing environmental loads, biomass-derived polyethylene and/or recycled polyethylene may be used.

From the viewpoint of the balance between the heat resistance and heat sealability, the melting point (Tm) of the polyethylene included in the sealant layer is preferably 90°C or higher and is preferably 140°C or lower and more preferably 130°C or lower.

The content of the polyethylene in the sealant layer is preferably more than 50% by mass, more preferably 80% by mass or more, still more preferably 90% by mass or more, and yet more preferably 92% by mass or more. In this case, the recyclability of the packaging container, for example, can be improved.

In one embodiment, the sealant layer is a resin layer containing polypropylene as a main component. When the sealant layer is formed of polypropylene, the oil resistance of the packaging container produced using the laminated body can also be improved.

Examples of the polypropylene include propylene homopolymers, propylene random copolymers such as propylene-α-olefin random copolymers, and propylene block copolymers such as propylene-α-olefin block copolymers. The details of the α-olefin are as described above. From the viewpoint of reducing environmental loads, biomass-derived polypropylene and/or recycled polypropylene may be used.

From the viewpoint of heat sealability, the density of the polypropylene is, for example, 0.88 g/cm³ or more and 0.92 g/cm³ or less. In the present disclosure, the density is measured using method D (density gradient tube method, 23°C) described in JIS K 7112: 1999.

From the viewpoint of the balance between the heat resistance and heat sealability, the melting point (Tm) of the polypropylene included in the sealant layer is preferably 120°C or higher, more preferably 125°C or higher, and still more preferably 130°C or higher and is preferably 160°C or lower, more preferably 155°C or lower, and still more preferably 150°C or lower.

The content of the polypropylene in the sealant layer is preferably more than 50% by mass, more preferably 70% by mass or more, and still more preferably 75% by mass or more. In this case, the recyclability of the packaging container, for example, can be improved.

From the viewpoint of improving low-temperature heat sealability, the sealant layer may contain a heat seal modifier. No particular limitation is imposed on the heat seal modifier so long as it is a component having a good affinity for the polyolefin included in the sealant layer, and the heat seal modifier is, for example, an olefin-based polymer having a low melting point and is specifically an olefin-based copolymer. A very low-density polyethylene may be used. The details of the heat seal modifier such as an olefin-based copolymer are as described above and are omitted in this section.

In one embodiment, the content of the heat seal modifier with respect to the total mass of the sealant layer is preferably 5% by mass or more and more preferably 10% by mass or more and is preferably 40% by mass or less and more preferably 30% by mass or less. In this case, suitable heat sealability, for example, can be imparted to the sealant layer. This content is preferably applicable to the content of the heat seal modifier with respect to the total mass of a sealant layer containing polypropylene as a main component, but this is not a limitation.

In one embodiment, the content of the heat seal modifier with respect to the total mass of the sealant layer is preferably 1% by mass or more and more preferably 2% by mass or more and is preferably 20% by mass or less and more preferably 15% by mass or less. In this case, suitable heat sealability, for example, can be imparted to the sealant layer. This content is preferably applicable to the content of the heat seal modifier with respect to the total mass of a sealant layer containing polyethylene as a main component, but this is not a limitation.

The sealant layer may have a single layer structure or may have a multilayer structure. In one embodiment, the sealant layer having a multilayer structure includes a first sealant layer containing a polyolefin and a second sealant layer containing a polyolefin and the heat seal modifier. The sealant layer is disposed such that the first sealant layer is located closer to the barrier substrate than the second sealant layer. With this structure, for example, good low-temperature heat sealability and good processability can be achieved simultaneously. The first sealant layer may have a multilayer structure. In one embodiment, the number of layers in the multilayer structure is 3 or more and 5 or less.

The content of the polyolefin in the first sealant layer is preferably 80% by mass or more, more preferably 85% by mass or more, still more preferably 90% by mass or more, and particularly preferably 95% by mass or more.

The content of the heat seal modifier in the second sealant layer is preferably 10% by mass or more and more preferably 20% by mass or more and is preferably 55% by mass or less, more preferably 50% by mass or less, and still more preferably 45% by mass or less. When the content is more than or equal to the lower limit, the heat sealability of the second sealant layer, for example, can be improved. When the content is less than or equal to the upper limit, the recyclability of the laminated body, for example, can be improved. The content of the polyolefin in the second sealant layer is preferably 45% by mass or more, more preferably 50% by mass or more, and still more preferably 55% by mass or more and is preferably 90% by mass or less and more preferably 80% by mass or less.

The thickness of the first sealant layer is preferably 5 µm or more and more preferably 10 µm or more and is preferably 50 µm or less, more preferably 40 µm or less, still more preferably 35 µm or less, yet more preferably 30 µm or less, and particularly preferably 20 µm or less. When the thickness is more than or equal to the lower limit, the recyclability of the laminated body and the heat sealability of the first sealant layer, for example, can be improved. When the thickness is less than or equal to the upper limit, the processability of the laminated body, for example, can be improved.

The thickness of the second sealant layer is preferably 1 µm or more, more preferably 2 µm or more, still more preferably 3 µm or more, yet more preferably 5 µm or more, and particularly preferably 10 µm or more and is preferably 50 µm or less, more preferably 40 µm or less, and still more preferably 30 µm or less. When the thickness is more than or equal to the lower limit, the heat sealability of the second sealant layer, for example, can be improved. When the thickness is less than or equal to the upper limit, the laminated body can have, for example, good recyclability and processability simultaneously.

In one embodiment of the sealant layer having a multilayer structure, a surface layer on the side opposite to the substrate contains a polyolefin and the heat seal modifier. The content of the heat seal modifier in the surface layer is preferably 10% by mass or more and more preferably 20% by mass or more and is preferably 55% by mass or less and more preferably less than 50% by mass. The content of the polyolefin in the surface layer is preferably 45% by mass or more and more preferably more than 50% by mass and is preferably 90% by mass or less and more preferably 80% by mass or less. The sealant layer having the above-described surface layer has, for example, good heat sealability and good recyclability.

The thickness of the surface layer is preferably 1 µm or more and more preferably 2 µm or more and is preferably 20 µm or less, more preferably 15 µm or less, and still more preferably 10 µm or less. The sealant layer including the above-described surface layer has, for example, good heat sealability and good recyclability.

In one embodiment, the laminated body of the present disclosure includes, as the sealant layer, the above-described barrier laminated film or the above-described laminated film. In this case, the barrier laminated film or the laminated film is disposed such that the gas barrier resin layer faces the substrate. The details of the barrier laminated film and the laminated film are as described above, and their description is omitted in this section. In one embodiment, the polyolefin resin layer in the barrier laminated film or the laminated film is formed of the same resin material as that for the polyolefin resin substrate, i.e., formed of a polyolefin. Specifically, when the polyethylene resin substrate is used, the polyolefin resin layer is a polyethylene resin layer. When the polypropylene resin substrate is used, the polyolefin resin layer is a polypropylene resin layer. In this case, mono-materialization of the packaging container can be achieved. It is unnecessary to separate the substrate and the sealant layer in the used collected packaging container from each other, and therefore the recyclability of the packaging container can be improved.

### <Vapor deposited film>

The laminated body of the present disclosure may further include a vapor deposited film on the surface of the sealant layer that is on the polyolefin resin substrate side (see the vapor deposited film 32 in Fig. 10). In this case, the gas barrier performance of the laminated body, for example, can be further improved. The details of the vapor deposited film are as described above, and its description is omitted in this section.

### <Adhesive layer>

The laminated body of the present disclosure may include an adhesive layer between any layers, i.e., between the substrate and the sealant layer, between the polyolefin resin substrate and the intermediate substrate or the polyolefin resin substrate, or between the intermediate substrate or the polyolefin resin substrate and the sealant layer. This laminated body has, for example, good adhesion between the layers.

In one embodiment, the laminated body of the present disclosure includes a first adhesive layer between the polyolefin resin substrate and the intermediate substrate. In one embodiment, the laminated body of the present disclosure includes a second adhesive layer between the intermediate substrate and the sealant layer. In these cases, the adhesion between these layers can be improved.

In one embodiment, the laminated body of the present disclosure includes an adhesive layer between the polyolefin resin substrate and the sealant layer that is the barrier laminated film or laminated film described above. In this case, for example, the adhesion between these layers can be improved.

The adhesive layer is formed, for example, of an adhesive. The adhesive may be any of a onecomponent curable adhesive, a two-component curable adhesive, and a non-curable adhesive. The adhesive may be a non-solvent-type adhesive or may be a solvent-type adhesive. In one embodiment, the laminated body of the present disclosure includes at least three components, i.e., the polyolefin resin substrate, the intermediate substrate, and the sealant layer. In this case, when the laminated body is produced using the adhesive, the laminated body can be produced without the application of the adhesive directly to the vapor deposited film, and the deterioration of the vapor deposited film can be reduced.

Examples of the adhesive include polyether-based adhesives, polyester-based adhesives, polyurethane-based adhesives, silicone-based adhesives, epoxy-based adhesives, rubber-based adhesives, vinyl-based adhesives, olefin-based adhesives, and phenol-based adhesives. Of these, polyurethane-based adhesives are preferred, and two-component curable polyurethane-based adhesives are more preferred.

The thickness of the adhesive layer is preferably 0.1 µm or more, more preferably 0.2 µm or more, still more preferably 0.5 µm or more, and particularly preferably 0.8 µm or more and is preferably 10 µm or less, more preferably 8 µm or less, still more preferably 6 µm or less, and particularly preferably 5 µm or less.

The adhesive layer can be formed by applying the adhesive to an object to be coated using a well-known method and optionally drying the adhesive, and examples of the coating method include a direct gravure roll coating method, a gravure roll coating method, a kiss coating method, a reverse roll coating method, a fountain method, and a transfer roll coating method.

In one embodiment, the laminated body of the present disclosure may be produced by laminating the substrate and the sealant film, laminating the polyolefin resin substrate and the intermediate substrate, laminating the polyolefin resin substrate and the sealant film, or laminating the polyolefin resin substrate, the intermediate substrate, and a resin film corresponding to the sealant layer by a non-solvent laminating method using a non-solvent-type adhesive or by a dry laminating method using a solvent-type adhesive.

In one embodiment, the laminated body of the present disclosure may be produced by laminating the polyolefin resin substrate and the barrier laminated film or the laminated film by a non-solvent laminating method using a non-solvent-type adhesive or by a dry laminating method using a solvent-type adhesive.

### [Packaging container]

The laminated body of the present disclosure can be preferably used for packaging material applications.

The packaging material is used to produce a packaging container. The packaging material includes the laminated body of the present disclosure. By using at least the packaging material including the laminated body of the present disclosure, a packaging container can be produced.

The packaging container of the present disclosure includes the laminated body of the present disclosure. Examples of the packaging container include packaging bags, tube containers, and lidded containers. A lidded container includes a container main body having a storage portion and a lid member bonded (heat-sealed) to the container main body so as to seal the storage portion.

The packaging container includes a heat sealed portion. Examples of the heat sealing method include bar sealing, rotating roll sealing, belt sealing, impulse sealing, high-frequency sealing, and ultrasonic sealing.

Examples of the packaging bag include various types of packaging bags such as standing pouch bags, one-side seal bags, two-side seal bags, three-side seal bags, four-side seal bags, envelope seal bags, butt seal (pillow seal) bags, pleated seal bags, flat bottom seal bags, square bottom seal bags, and gusseted bags. Specific examples of the packaging bag include small pouches and standing pouches. The packaging container may include an easy-open portion. Examples of the easy-open portion include a notch portion serving as a starting point for tearing the packaging container and a half-cut line formed, for example, by laser processing or using a cutter as a tear line of the packaging container.

The packaging container may have a venting mechanism. The venting mechanism is configured such that, when the vapor pressure inside the packaging container reaches a prescribed value or higher, the inner and outer sides of the packaging container communicate with each other to release the vapor so that the vapor is prevented from being released from portions other than the venting mechanism.

The venting mechanism includes, for example, a venting seal portion protruding from a side seal portion toward the inside of the packaging container and a non-sealed portion isolated from a content storage portion by the venting seal portion. The non-sealed portion is in communication with the outside of the packaging container. The packaging container filled with contents and heat sealed at its opening may be heated using, for example, a microwave oven. In this case, the pressure inside the packaging container increases, and the venting seal portion is separated. The vapor passes through the separated portion of the venting seal portion and the non-sealed portion and is then released to the outside.

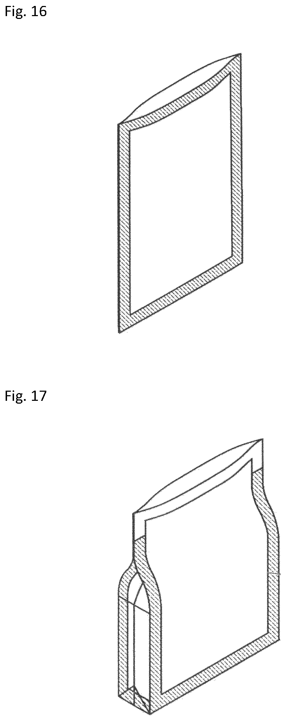

In one embodiment, a packaging bag can be produced by folding the laminated body of the present disclosure in two such that the substrate is on the outer side and the sealant layer is on the inner side and then heat-sealing edges etc. of the folded laminated body. In another embodiment, a packaging bag can be produced by stacking a plurality of laminated bodies of the present disclosure with their sealant layers facing each other and then heat-sealing edges etc. of the laminated bodies. The packaging bag may be formed entirely of the laminated body or may be formed partially of the laminated body. Fig. 16 shows an example of the packaging bag. In Fig. 16, diagonally shaded portions represent heat-sealed portions.

In one embodiment, the laminated body of the present disclosure is used for a lid of a lidded container. The lidded container includes a container main body having a storage portion and the lid bonded (heat-sealed) to the container main body so as to seal the storage portion. In this case, the lid, i.e., the sealant layer of the laminated body, and the container main body have been heat-sealed together. Examples of the shape of the container main body include a cup shape and a closed-end cylindrical shape. The container main body is formed, for example, of polystyrene, polypropylene, polyethylene, or paper.

Examples of the contents to be contained in the packaging container include liquids, solids, powders, and gels. The contents may be an edible material or may be a non-edible material such as a chemical product, a cosmetic product, a pharmaceutical agent, a metal component, or an electronic component. After the packaging container is filled with the contents, the packaging container can be sealed by heat-sealing the opening of the packaging container.

A small pouch and a standing pouch will be described as specific examples of the packaging bag.

The small pouch is a small packaging bag and is used to contain contents in an amount of, for example, 1 g or more and 200 g or less. Examples of the contents contained in the small pouch include: sauces, soy sauces, dressings, ketchups, syrups, cooking liquors, and other liquid and viscous seasonings; liquid soups, powdered soups, and fruit juices; spices; liquid beverages, jelly beverages, instant foods, other foods and drinks; metal members and electronic members.

The standing pouch is used, for example, to contain contents in an amount of 50 g or more and 2000 g or less. Examples of the contents contained in the standing pouch include: shampoos, rinses, conditioners, hand soaps, body soaps, aromatics, deodorants, deodorizers, insect repellents, and detergents; dressings, cooking oils, mayonnaise, and other liquid and viscous seasonings; liquid beverages, jelly beverages, instant foods, and other foods and drinks; creams; metal members and electronic members.

In one embodiment, the standing pouch includes a trunk (side sheet) and a bottom portion (bottom sheet). The side sheet and the bottom sheet may be formed from the same member or different members. The bottom sheet allows the side sheet to maintain its shape, so that the pouch can stand on its own and be used as a self-standing pouch. A storage space for storing the contents is formed in a region surrounded by the side sheet and the bottom sheet. In the standing pouch, only the trunk may be formed from the laminated body of the present disclosure, or only the bottom portion may be formed from the laminated body of the present disclosure. Alternatively, both the trunk and the bottom portion may be formed from the laminated body of the present disclosure.

The standing pouch may have a venting mechanism. The venting mechanism includes a venting seal portion protruding from a side seal portion toward the inside of the packaging container and a non-sealed portion isolated from the content storage portion by the venting seal portion. The non-sealed portion is in communication with the outside of the packaging container.

In one embodiment, the side sheet may be formed by making the bag such that the sealant layer included in the laminated body of the present disclosure serves as the innermost layer. In one embodiment, the side sheet can be formed by preparing two laminated bodies of the present disclosure, stacking the laminated bodies such that their sealant layers face each other, and heat-sealing their opposite side edge portions to form a bag.

In another embodiment, the side sheet may be formed by preparing two laminated bodies of the present disclosure, stacking the laminated bodies such that their sealant layers face each other, inserting two laminated bodies folded in a V-shape with their sealant layers facing outward between the opposite side edge portions of the stacked laminated bodies, and heat-sealing the side edge portions. With this production method, a standing pouch having a trunk with side gussets can be obtained. Fig. 17 shows an example of the standing pouch. In Fig. 17, diagonally shaded portions represent heat sealed portions.

In one embodiment, the bottom sheet may be formed by inserting the laminated body of the present disclosure into the lower portion of the side sheet formed into a bag and then heat-sealing them. More specifically, the bottom sheet may be formed by inserting the laminated body folded in a V-shape with the sealant layer facing outward into the lower portion of the side sheet formed into a bag and then heat-sealing them.

In one embodiment, the bottom portion is formed by preparing two laminated bodies described above, stacking them such that their sealant layers face each other, then folding another laminated body in a V-shape such that the sealant layer faces outward, inserting the folded laminated body between the lower portions of the laminated bodies facing each other, and heat-sealing them. Next, two sides adjacent to the bottom portion are heat-sealed to form a trunk. In this manner, the standing pouch in this embodiment can be formed.

The present disclosure relates to, for example, the following [1-1] to [1-11].
[1-1] A barrier substrate including at least: an unstretched resin substrate including at least a polyolefin resin layer and a gas barrier resin layer; and a vapor deposited film disposed on the gas barrier resin layer, wherein the resin substrate is formed by a blown film coextrusion process.
[1-2] The barrier substrate according to [1-1], wherein the polyolefin resin layer contains polypropylene or polyethylene as a main component.
[1-3] The barrier substrate according to [1-1] or [1-2], wherein the gas barrier resin layer contains at least one gas barrier resin selected from polyamides, ethylene-vinyl alcohol copolymers, polyvinyl alcohols, polyacrylonitriles, polyesters, polyurethanes, and (meth)acrylic resins.
[1-4] The barrier substrate according to any of [1-1] to [1-3], wherein the resin substrate further includes an adhesive resin layer between the polyolefin resin layer and the gas barrier resin layer.
[1-5] A laminated body including, in the following order, at least a polyolefin resin substrate, the barrier substrate according to any of [1-1] to [1-4], and a sealant layer, wherein the polyolefin resin substrate is a stretched substrate, and wherein the sealant layer is a resin layer containing a polyolefin as a main component.
[1-6] The laminated body according to [1-4] or [1-5], wherein the sealant layer is an unstretched resin film.
[1-7] The laminated body according to any of [1-4] to [1-6], further including a first adhesive layer between the polyolefin resin substrate and the barrier substrate and a second adhesive layer between the barrier substrate and the sealant layer.
[1-8] The laminated body according to any of [1-4] to [1-7], wherein the polyolefin resin substrate is a substrate containing polypropylene as a main component; the polyolefin resin layer in the barrier substrate is a layer containing polypropylene as a main component; and the sealant layer is a layer containing polypropylene as a main component, or wherein the polyolefin resin substrate is a substrate containing polyethylene as a main component; the polyolefin resin layer in the barrier substrate is a layer containing polyethylene as a main component; and the sealant layer is a layer containing polyethylene as a main component.
[1-9] The laminated body according to any of [1-4] to [1-8], wherein the content of the polyolefin with respect to the total mass of the laminated body is 80% by mass or more.
[1-10] The laminated body according to any of [1-4] to [1-9], wherein the laminated body is used for a packaging material.
[1-11] A packaging container including the laminated body according to any of [1-4] to [1-10].

The present disclosure relates to, for example, the following [2-1] to [2-11].
[2-1] A barrier sealant film including at least: an unstretched resin film including at least a polyolefin resin layer and a gas barrier resin layer; and a vapor deposited film disposed on the gas barrier resin layer, wherein the resin film is formed by a blown film coextrusion process.
[2-2] The barrier sealant film according to [2-1], wherein the polyolefin resin layer contains polyethylene or polypropylene as a main component.
[2-3] The barrier sealant film according to [2-1] or [2-2], wherein the gas barrier resin layer contains at least one gas barrier resin selected from polyamides, ethylene-vinyl alcohol copolymers, polyvinyl alcohols, polyacrylonitriles, polyesters, polyurethanes, and (meth)acrylic resins.
[2-4] The barrier sealant film according to any of [2-1] to [2-3], wherein the resin film further includes an adhesive resin layer between the polyolefin resin layer and the gas barrier resin layer.
[2-5] The barrier sealant film according to any of [2-1] to [2-4], wherein the polyolefin resin layer includes a first resin layer containing a polyolefin and a second resin layer containing a polyolefin and a heat seal modifier, and wherein the second resin layer forms one surface layer of the barrier sealant film.
[2-6] A laminated body including, in the following order, at least a polyolefin resin substrate and a sealant layer, wherein the polyolefin resin substrate is a stretched substrate, and wherein the sealant layer is the barrier sealant film according to any of [2-1] to [2-5].
[2-7] The laminated body according to [2-6], further including an adhesive layer between the polyolefin resin substrate and the barrier sealant film.
[2-8] The laminated body according to [2-6] or [2-7], wherein the polyolefin resin substrate is a substrate containing polyethylene as a main component; and the polyolefin resin layer in the barrier sealant film is a layer containing polyethylene as a main component, or wherein the polyolefin resin substrate is a substrate containing polypropylene as a main component; and the polyolefin resin layer in the barrier sealant film is a layer containing polypropylene as a main component.
[2-9] The laminated body according to any of [2-6] to [2-8], wherein the content of the polyolefin with respect to the total mass of the laminated body is 80% by mass or more.
[2-10] The laminated body according to any of [2-6] to [2-9], wherein the laminated body is used for a packaging material.
[2-11] A packaging container including the laminated body according to any of [2-6] to [2-10].

The present disclosure relates to, for example, the following [3-1] to [3-10].
[3-1] A laminated body including, in the following order, at least a polypropylene resin substrate, a barrier substrate, and a sealant layer, wherein the polypropylene resin substrate is a stretched substrate, wherein the barrier substrate includes at least an unstretched resin substrate including at least a polypropylene resin layer and a gas barrier resin layer and a vapor deposited film disposed on the gas barrier resin layer, and wherein the sealant layer is a resin layer containing polypropylene.
[3-2] The laminated body according to [3-1], wherein the gas barrier resin layer contains at least one gas barrier resin selected from polyamides, ethylene-vinyl alcohol copolymers, polyvinyl alcohols, polyacrylonitriles, polyesters, polyurethanes, and (meth)acrylic resins.
[3-3] The laminated body according to [3-1] or [3-2], wherein the resin substrate further includes an adhesive resin layer between the polypropylene resin layer and the gas barrier resin layer.
[3-4] The laminated body according to any of [3-1] to [3-3], wherein the resin substrate is an unstretched coextruded resin film.
[3-5] The laminated body according to any of [3-1] to [3-4], wherein the barrier substrate is disposed such that the vapor deposited film faces the polypropylene resin substrate and that the polypropylene resin layer faces the sealant layer.
[3-6] The laminated body according to any of [3-1] to [3-5], wherein the sealant layer is an unstretched resin film.
[3-7] The laminated body according to any of [3-1] to [3-6], further including a first adhesive layer between the polypropylene resin substrate and the barrier substrate and a second adhesive layer between the barrier substrate and the sealant layer.
[3-8] The laminated body according to any of [3-1] to [3-7], wherein the content of the polypropylene with respect to the total mass of the laminated body is 80% by mass or more.
[3-9] The laminated body according to any of [3-1] to [3-8], wherein the laminated body is used for a packaging material.
[3-10] A packaging container including the laminated body according to any of [3-1] to [3-9].

The present disclosure relates to, for example, the following [4-1] to [4-24].
[4-1] A laminated film including, in the following order, a polyolefin resin layer, an adhesive resin layer, and a gas barrier resin layer, wherein the adhesive resin layer contains an acid-modified resin as a main component, and wherein the gas barrier resin layer contains at least one resin selected from ethylene-vinyl alcohol copolymers and polyamides.
[4-2] The laminated film according to [4-1], wherein the laminated film is an unstretched cast film.
[4-3] The laminated film according to [4-1] or [4-2], wherein the gas barrier resin layer is a layer containing an ethylene-vinyl alcohol copolymer as a main component, a layer containing a polyamide as a main component, or a layer containing a resin mixture of an ethylene-vinyl alcohol copolymer and a polyamide as a main component.
[4-4] The laminated film according to any of [4-1] to [4-3], wherein the content of a structural unit derived from ethylene in the ethylene-vinyl alcohol copolymer is 30% by mole or more and 60% by mole or less, and wherein the ethylene-vinyl alcohol copolymer has a melt flow rate (MFR) of 0.1 g/10 minutes or more and 5 g/10 minutes or less.
[4-5] The laminated film according to any of [4-1] to [4-4], wherein the acid-modified resin is an acid-modified polyolefin.
[4-6] The laminated film according to [4-5], wherein the acid-modified polyolefin is at least one selected from acid-modified polyethylenes and acid-modified polypropylenes.
[4-7] The laminated film according to any of [4-1] to [4-6], wherein the polyolefin resin layer is a polypropylene resin layer containing polypropylene as a main component, wherein the adhesive resin layer contains an acid-modified polypropylene as a main component, wherein the gas barrier resin layer is a layer containing an ethylene-vinyl alcohol copolymer as a main component, wherein, in the adhesive resin layer, the ratio (intensity 1 / intensity 2) of the intensity 1 of a peak attributed to C=O stretching vibration in the range of 1700 to 1800 cm⁻¹ to the intensity 2 of a peak attributed to C-H deformation vibration in the range of 1400 to 1500 cm⁻¹ is less than 0.4, the intensity 1 and the intensity 2 being measured by an attenuated total reflection (ATR) method using an infrared spectrophotometer.
[4-8] The laminated film according to [4-7], wherein the content of a structural unit derived from ethylene in the ethylene-vinyl alcohol copolymer is 30% by mole or more and 60% by mole or less, wherein the ethylene-vinyl alcohol copolymer has a melt flow rate (MFR) of 0.1 g/10 minutes or more and 5 g/10 minutes or less, and wherein the acid-modified polypropylene has an MFR of 1 g/10 minutes or more and 15 g/10 minutes or less.
[4-9] The laminated film according to any of [4-1] to [4-8], wherein the polyolefin resin layer is a polyethylene resin layer containing polyethylene as a main component or a polypropylene resin layer containing polypropylene as a main component.
[4-10] The laminated film according to any of [4-1] to [4-9], wherein the polyolefin resin layer includes a first resin layer containing a polyolefin and a second resin layer containing a polyolefin and a heat seal modifier, and wherein the second resin layer forms one surface layer of the laminated film.
[4-11] The laminated film according to any of [4-1] to [4-10], wherein the laminated film is a sealant film.
[4-12] The laminated film according to any of [4-1] to [4-11], wherein the laminated film is used as a sealant layer included in a packaging material including a substrate and the sealant layer.
[4-13] The laminated film according to any of [4-1] to [4-10], wherein the laminated film is used as a substrate included in a packaging material including the substrate and a sealant layer.
[4-14] The laminated film according to any of [4-1] to [4-10], wherein the laminated film is used as an intermediate substrate included in a packaging material including, in the following order, a polyolefin resin substrate, the intermediate substrate, and a sealant layer.
[4-15] A barrier laminated film including the laminated film according to any of [4-1] to [4-14] and a vapor deposited film disposed on the gas barrier resin layer in the laminated film.
[4-16] A laminated body including, in the following order, a polyolefin resin substrate and a sealant layer, wherein the polyolefin resin substrate is a stretched substrate, and wherein the sealant layer is the laminated film according to any of [4-1] to [4-12] or the barrier laminated film according to [4-15].
[4-17] A laminated body including, in the following order, a polyolefin resin substrate, an intermediate substrate, and a sealant layer, wherein the polyolefin resin substrate is a stretched substrate, and wherein the intermediate substrate is the laminated film according to any of [4-1] to [4-10] or the barrier laminated film according to [4-15].
[4-18] The laminated body according to [4-16], further including an adhesive layer between the polyolefin resin substrate and the sealant layer.
[4-19] The laminated body according to [4-16] or [4-18], wherein the polyolefin resin substrate is a polyethylene resin substrate containing polyethylene as a main component; and the polyolefin resin layer in the sealant layer is a polyethylene resin layer containing polyethylene as a main component, or wherein the polyolefin resin substrate is a polypropylene resin substrate containing polypropylene as a main component; and the polyolefin resin layer in the sealant layer is a polypropylene resin layer containing polypropylene as a main component, or wherein the polyolefin resin substrate is a polypropylene resin substrate containing polypropylene as a main component; and the polyolefin resin layer in the sealant layer is a polyethylene resin layer containing polyethylene as a main component.
[4-20] The laminated body according to [4-17], further including a first adhesive layer between the polyolefin resin substrate and the intermediate substrate and a second adhesive layer between the intermediate substrate and the sealant layer.
[4-21] The laminated body according to [4-17] or [4-20], wherein the polyolefin resin substrate is a polyethylene resin substrate containing polyethylene as a main component; the polyolefin resin layer in the intermediate substrate is a polyethylene resin layer containing polyethylene as a main component; and the sealant layer is a polyethylene resin layer containing polyethylene as a main component, or wherein the polyolefin resin substrate is a polypropylene resin substrate containing polypropylene as a main component; the polyolefin resin layer in the intermediate substrate is a polypropylene resin layer containing polypropylene as a main component; and the sealant layer is a polypropylene resin layer containing polypropylene as a main component, or wherein the polyolefin resin substrate is a polypropylene resin substrate containing polypropylene as a main component; the polyolefin resin layer in the intermediate substrate is a polypropylene resin layer containing polypropylene as a main component; and the sealant layer is a polyethylene resin layer containing polyethylene as a main component.
[4-22] The laminated body according to any of [4-16] to [4-21], wherein the content of the polyolefin with respect to the total mass of the laminated body is 80% by mass or more.
[4-23] The laminated body according to any of [4-16] to [4-22], wherein the laminated body is a packaging material.
[4-24] A packaging container including the laminated body according to any of [4-16] to [4-23].

### EXAMPLES

### [Evaluation of oxygen barrier performance]

Each of barrier substrates, barrier sealant films, laminated bodies, and barrier laminated films obtained in Examples and Comparative Examples was cut into A4 size, and its oxygen permeability (cc/m²/day/atm) was measured using an oxygen permeability measurement apparatus (OXTRAN 2/20 manufactured by MOCON, U.S.) according to JIS K 7126-2: 2006 in an environment of a temperature of 23°C and a relative humidity of 90%.

### [Evaluation of water vapor barrier performance]

Each of the barrier substrates, barrier sealant films, laminated bodies, and barrier laminated films obtained in the Examples and Comparative Examples was cut into A4 size, and its water vapor permeability (g/m²/day) was measured using a water vapor permeability measurement apparatus (PERMATRAN 3/31 manufactured by MOCON, U.S.) according to JIS K 7129-2: 2019 in an environment of a temperature of 40°C and a relative humidity or 90%.

### [Heat sealability test]

One of the laminated bodies obtained in the Examples and Comparative Examples was cut to a size of 10 cm × 10 cm to produce a sample piece. The sample piece was folded in two with the sealant layer (sealant film) facing inward, and its 1 cm × 10 cm region was heat-sealed under the conditions of a temperature of 130°C (for a polyethylene-based laminated body) or a temperature of 150°C (for a polypropylene-based laminated body) and a pressure of 1 kgf/cm² for 1 second.

The heat-sealed sample piece was cut into a strip with a width of 15 mm. Non-heat-sealed opposite edge portions were held in a tensile tester (RTC-1310A manufactured by ORIENTEC Co., Ltd.), and its peel strength (N/15 mm) was measured according to JIS Z 0238: 1998 under the conditions of a rate of 300 mm/minute, a peel angle of 90°, and a load range of 50 N.

### [A. Barrier substrate]

The barrier substrate and laminated body of the present disclosure will be specifically described based on Examples, but the barrier substrate and laminated body of the present disclosure are not limited to the Examples.

### [Example 1-1A]

A 6-66 copolymer nylon resin (NY, product name: Ultlamid C40LN manufactured by BASF, density: 1.12 g/cm³, melting point: 189°C, relative viscosity: 4.0) forming a gas barrier resin layer,
a maleic acid-modified polyolefin ((product name: ADMER QF551T manufactured by Mitsui Chemicals, Inc., density: 0.89 g/cm³, melting point: 135°C, MFR: 2.5 g/10 minutes) forming an adhesive resin layer, and
polypropylene (1) (random PP, product name: RB707CF manufactured by BOREALIS, density: 0.90 g/cm³, melting point: 145°C, MFR: 1.5 g/10 minutes) forming polypropylene resin layers
were subjected to five-layer coextrusion film forming by a blown film process, and a resin substrate having a total thickness of 25 µm and including a gas barrier resin layer (2 µm) / an adhesive resin layer (3 µm) / a polypropylene (1) resin layer (10 µm) / a polypropylene (1) resin layer (6 µm) / a polypropylene (1) resin layer (4 µm) was thereby produced. Numerical values in parentheses indicate the thicknesses of the layers.

A vapor deposited aluminum film having a thickness of 60 nm was formed on the gas barrier resin layer of the above-produced resin substrate by a PVD method to thereby obtain a barrier substrate. The optical density (OD value) of the formed vapor deposited film was measured and found to be 3.0.

A biaxially stretched polypropylene film (product name: P2171 manufactured by TOYOBO CO., LTD.) having a thickness of 20 µm with one surface subjected to corona discharge treatment was prepared as a polypropylene resin substrate. An image was formed on the corona discharge-treated surface of the biaxially stretched polypropylene film by a gravure printing method using a solvent-type gravure ink (FINART manufactured by DIC Graphics Corporation).

The barrier substrate and the biaxially stretched polypropylene film were laminated with a two-component curable polyurethane adhesive (product name: RU-77T/H-7 manufactured by ROCK PAINT Co., Ltd.) interposed therebetween such that the vapor deposited aluminum film-formed surface of the barrier substrate and the image formed surface of the biaxially stretched polypropylene film faced each other to thereby obtain a laminated body.

Polypropylene (2) (random PP, product name: FL7540L manufactured by TPC, density: 0.90 g/cm³, melting point: 138°C, MFR: 7.0 g/10 minutes) and a polyolefin plastomer (product name: COHERE 8102L manufactured by SABIC, density: 0.902 g/cm³, melting point: 98°C, MFR: 1.0 g/10 minutes) were mixed at a ratio of polypropylene (2): 60% by mass and polyolefin plastomer: 40% by mass to prepare a polyolefin blend (1).

Next, the polypropylene (2) and the polyolefin blend (1) were subjected to multilayer extrusion using a T-die process to form a film having a structure including a polypropylene (2) resin layer (15 µm) / a polyolefin blend (1) resin layer (20 µm), and an unstretched polypropylene film (sealant film) having a thickness of 35 µm was thereby obtained. Numerical values in parentheses indicate the thicknesses of the layers.

The above-obtained laminated body and the sealant film were laminated with a two-component curable polyurethane adhesive (product name: RU-77T/H-7 manufactured by ROCK PAINT Co., Ltd.) interposed therebetween such that the polypropylene (1) resin layer included in the barrier substrate and the polypropylene (2) resin layer in the sealant film faced each other to thereby obtain a laminated body (polypropylene-based laminated body).

### [Example 1-2A]

A laminated body was obtained using the same procedure as in Example 1-1A except that the resin forming the gas barrier resin layer was changed to a 6-66 copolymer nylon resin (NY, product name Ultlamid C33 manufactured by BASF, density: 1.12 g/cm³, melting point: 196°C, relative viscosity: 3.3).

### [Example 1-3A]

A laminated body was obtained using the same procedure as in Example 1-1A except that the resin forming the gas barrier resin layer was changed to an ethylene-vinyl alcohol copolymer (EVOH, product name: EVAL E171B manufactured by KURARAY Co., Ltd., density: 1.14 g/cm³, melting point: 165°C, MFR: 1.7 g/10 minutes, ethylene content: 44% by mole).

### [Comparative Example 1-1A]

A laminated body was obtained using the same procedure as in Example 1-1A except that the structure of the resin substrate was changed to a structure composed of a polypropylene (1) resin layer having a thickness of 25 µm. The vapor deposited aluminum film was formed on the polypropylene (1) resin layer.

### [Example 2-1A]

### <Production of barrier substrate>

50 Parts of a linear low-density polyethylene (product name: Exceed XP8656ML manufactured by Exxon Mobil Corporation, density: 0.916 g/cm³, melting point: 121°C, MFR: 0.5 g/10 minutes) and 50 parts of a medium-density polyethylene (product name: Enable 4002MC manufactured by Exxon Mobil Corporation, density: 0.938 g/cm³, melting point: 128°C, MFR: 0.25 g/10 minutes) were mixed to thereby obtain a polyethylene blend (1).
A 6-66 copolymer nylon resin (NY, product name: Ultlamid C40LN manufactured by BASF, density: 1.12 g/cm³, melting point: 189°C, relative viscosity: 4.0) forming a gas barrier resin layer,
a maleic acid-modified polyolefin (product name: ADMER AT1955 manufactured by Mitsui Chemicals, Inc., density: 0.89 g/cm³, MFR: 2.6 g/10 minutes) forming an adhesive resin layer,
a linear low-density polyethylene (product name: Exceed XP8656ML manufactured by Exxon Mobil Corporation, density: 0.916 g/cm³, melting point: 121°C, MFR: 0.5 g/10 minutes) forming a polyethylene resin layer, the polyethylene blend (1) forming a polyethylene resin layer, and a medium-density polyethylene (product name: Enable 4002MC manufactured by Exxon Mobil Corporation, density: 0.938 g/cm³, melting point: 128°C, MFR: 0.25 g/10 minutes) forming a polyethylene resin layer
were subjected to five-layer coextrusion film forming by a blown film process, and a resin substrate having a total thickness of 25 µm and including a gas barrier resin layer (2 µm) / an adhesive resin layer (3 µm) / a linear low-density polyethylene resin layer (10 µm) / a polyethylene blend (1) resin layer (6 µm) / a medium-density polyethylene resin layer (4 µm) was thereby produced. Numerical values in parentheses indicate the thicknesses of the layers.

A vapor deposited aluminum film having a thickness of 60 nm was formed on the gas barrier resin layer of the above-produced resin substrate by a PVD method to thereby obtain a barrier substrate. The optical density (OD value) of the formed vapor deposited film was measured and found to be 3.0.

### <Production of polyethylene resin substrate>

A stretched multilayer substrate (uniaxially stretched polyethylene film) having a thickness of 25 µm and used as a polyethylene resin substrate was prepared as follows. Polyethylenes used in the following Examples and Comparative Examples will be described.
- Medium-density polyethylene (hereinafter referred to as "MDPE"):
   Product name: Enable 4002MC
   Density: 0.940 g/cm³, melting point: 128°C
   MFR: 0.25 g/10 minutes
   Product of Exxon Mobil Corporation
- High-density polyethylene (1) (hereinafter referred to as "HDPE (1)"):
   Product name Elite 5960G
   Density: 0.960 g/cm³, melting point: 134°C,
   MFR: 0.8 g/10 minutes,
   Product of Dow Chemical
- High-density polyethylene (2) (hereinafter referred to as "HDPE (2)"):
   Product name H619F
   Density: 0.965 g/cm³, melting point: 135°C,
   MFR: 0.7 g/10 minutes,
   Product of SCG
- Linear low-density polyethylene (hereinafter referred to as "LLDPE"):
   Product name Exceed XP8656ML
   Density: 0.916 g/cm³, melting point: 121°C,
   MFR: 0.5 g/10 minutes,
   Product of Exxon Mobil Corporation
- Low-density polyethylene (hereinafter referred to as "LDPE"):
   Product name LD2420F
   Density: 0.922 g/cm³, melting point: 112°C,
   MFR: 0.75 g/10 minutes,
   Product of PTT
- Slip agent-containing MB:
   Product name SLIP61 10061-K
   Density: 0.910 g/cm³, MFR: 10 g/10 minutes,
   Polyethylene based, containing 5% by mass of erucic acid amide-based slip agent,
   Product of Ampacet

- Polyethylene blend A1
   70 Parts of MDPE and 30 parts of HDPE (1) were mixed to obtain a polyethylene blend A1 (hereinafter referred to as a "PE blend (A1)") having an average density of 0.948 g/cm³.
- Polyethylene blend B1
   70 Parts of MDPE and 30 parts of LLDPE were mixed to obtain a polyethylene blend B1 (hereinafter referred to as a "PE blend (B1)") having an average density of 0.933 g/cm³.
- Polyethylene blend C1
   98 parts of LLDPE and 2 parts of the slip agent-containing MB were mixed to obtain a polyethylene blend C1 (hereinafter referred to as a "PE blend (C1)") having an average density of 0.916 g/cm³.

The PE blend (A1), the HDPE (2), the PE blend (C1), and the PE blend (B1) were subjected to five-layer coextrusion by a blown film process at a thickness ratio of a PE blend (A1)-1 layer (15 µm) / an HDPE (2) layer (20 µm) / a PE blend (C1) layer (55 µm) / a PE blend (B1) layer (20 µm) / a PE blend (A1)-2 layer (15 µm) to form a tubular film, and a polyethylene film having a total thickness of 125 µm was thereby obtained. The tubular film was folded in two at a nip portion. Numerical values in parentheses indicate the thicknesses of the layers.

The above-produced polyethylene film was stretched at a stretching ratio of 5 in the machine direction (MD), and then the PE blend (A1)-2 layer was subjected to corona discharge treatment. Then an edge portion was slit to obtain two separate films, and stretched multilayer substrates (uniaxially stretched polyethylene films) having a thickness of 25 µm were obtained.

An image was formed on the corona discharge-treated surface of the uniaxially stretched polyethylene film by a gravure printing method using a solvent-type gravure ink (FINART manufactured by DIC Graphics Corporation).

The barrier substrate and the uniaxially stretched polyethylene film were laminated with a two-component curable polyurethane adhesive (product name: RU-77T/H-7 manufactured by ROCK PAINT Co., Ltd.) interposed therebetween such that the vapor deposited aluminum film-formed surface of the barrier substrate and the image-formed surface of the uniaxially stretched polyethylene film faced each other to thereby obtain a laminated body.

A linear low-density polyethylene (product name: Elite 5400G manufactured by Dow Chemical, density: 0.916 g/cm³, melting point: 123°C, MFR: 1.0 g/10 minutes) and
a polyethylene blend (2) that was a mixture of 55 parts of a linear low-density polyethylene (Elite 5400G) and 45 parts of a polyolefin plastomer (product name: COHERE 8102L manufactured by SABIC, density: 0.902 g/cm³, melting point: 98°C, MFR: 1.0 g/10 minutes) with an average density of 0.910 g/cm³
were subjected to multilayer extrusion film forming by a blown film process to thereby obtain an unstretched polyethylene film having a total thickness of 35 µm and including a linear low-density polyethylene resin layer (4 µm) / a linear low-density polyethylene resin layer (6 µm) / a linear low-density polyethylene resin layer (15 µm) / a linear low-density polyethylene resin layer (6 µm) / a polyethylene blend (2) resin layer (4 µm). Numerical values in parentheses indicate the thicknesses of the layers. This unstretched polyethylene film was used as a sealant film as described below.

The above-obtained laminated body and the sealant film were laminated with a two-component curable polyurethane adhesive (product name: RU-77T/H-7 manufactured by ROCK PAINT Co., Ltd.) interposed therebetween such that the medium-density polyethylene resin layer included in the barrier substrate and the linear low-density polyethylene resin layer of the sealant film faced each other to thereby obtain a laminated body (polyethylene-based laminated body).

### [Example 2-2A]

A laminated body was obtained using the same procedure as in Example 2-1A except that the resin forming the gas barrier resin layer was changed to a 6-66 copolymer nylon resin (NY, product name Ultlamid C33 manufactured by BASF, density: 1.12 g/cm³, melting point: 196°C, relative viscosity: 3.3).

### [Example 2-3A]

A laminated body was obtained using the same procedure as in Example 2-1A except that the resin forming the gas barrier resin layer was changed to an ethylene-vinyl alcohol copolymer (EVOH, product name: EVAL E171B manufactured by KURARAY Co., Ltd., density: 1.14 g/cm³, melting point: 165°C, MFR: 1.7 g/10 minutes, ethylene content: 44% by mole).

### [Comparative Example 2-1A]

A laminated body was obtained using the same procedure as in Example 2-1A except that the structure of the resin substrate was changed to a structure composed of a medium-density polyethylene resin layer having a thickness of 25 µm. The vapor deposited aluminum film was formed on the medium-density polyethylene resin layer.

**[Table 1A]**

| Barrier substrate | Oxygen barrier performance test (cc/m²/day/atm) | Water vapor barrier performance test (cc/m²/day/atm) | Heat sealability test (N/15 mm) |
|---|---|---|---|
| Example 1-1A | 1.05 | 0.98 | 25 |
| Example 1-2A | 0.90 | 0.95 | 25 |
| Example 1-3A | 0.52 | 0.61 | 26 |
| Comparative Example 1-1A | 6.85 | 1.22 | 25 |

**[Table 2A]**

| Barrier substrate | Oxygen barrier performance test (cc/m²/day/atm) | Water vapor barrier performance test (cc/m²/day/atm) | Heat sealability test (N/15 mm) |
|---|---|---|---|
| Example 2-1A | 1.24 | 1.37 | 39 |
| Example 2-2A | 1.12 | 1.28 | 38 |
| Example 2-3A | 0.68 | 0.75 | 38 |
| Comparative Example 2-1A | 10.31 | 9.58 | 37 |

### [B. Barrier sealant film]

The barrier sealant film and laminated body of the present disclosure will be specifically described based on Examples, but the barrier sealant film and laminated body of the present disclosure are not limited to the Examples. In the following description, "parts by mass" may be denoted simply as "parts."

Polyethylenes used in the following Examples and Comparative Examples are described below.
- Medium-density polyethylene (hereinafter referred to as "MDPE"):
   Product name Enable 4002MC
   Density: 0.940 g/cm³, melting point: 128°C,
   MFR: 0.25 g/10 minutes,
   Product of Exxon Mobil Corporation
- High-density polyethylene (1) (hereinafter referred to as "HDPE (1)"):
   Product name Elite 5960G
   Density: 0.960 g/cm³, melting point: 134°C,
   MFR: 0.8 g/10 minutes,
   Product of Dow Chemical
- High-density polyethylene (2) (hereinafter referred to as "HDPE (2)"):
   Product name H619F
   Density: 0.965 g/cm³, melting point: 135°C,
   MFR: 0.7 g/10 minutes,
   Product of SCG
- Linear low-density polyethylene (hereinafter referred to as "LLDPE"):
   Product name Exceed XP8656ML
   Density: 0.916 g/cm³, melting point: 121°C,
   MFR: 0.5 g/10 minutes,
   Product of Exxon Mobil Corporation
- Low-density polyethylene (hereinafter referred to as "LDPE"):
   Product name LD2420F
   Density: 0.922 g/cm³, melting point: 112°C,
   MFR: 0.75 g/10 minutes,
   Product of PTT
- Slip agent-containing MB:
   Product name SLIP61 10061-K
   Density: 0.910 g/cm³, MFR: 10 g/10 minutes,
   Polyethylene based, containing 5% by mass of erucic acid amide-based slip agent
   Product of Ampacet

- Polyethylene blend A1
   70 Parts of MDPE and 30 parts of HDPE (1) were mixed to obtain a polyethylene blend A1 (hereinafter referred to as a "PE blend (A1)") having an average density of 0.948 g/cm³.
- Polyethylene blend B1
   70 Parts of MDPE and 30 parts of LLDPE were mixed to obtain a polyethylene blend B1 (hereinafter referred to as a "PE blend (B1)") having an average density of 0.933 g/cm³.
- Polyethylene blend C1
   98 Parts of LLDPE and 2 parts of the slip agent-containing MB were mixed to obtain a polyethylene blend C1 (hereinafter referred to as a "PE blend (C1)") having an average density of 0.916 g/cm³.

### [Example 1-1B]

### <Production of barrier sealant film>

A 6-66 copolymer nylon resin (NY, product name: Ultlamid C40LN manufactured by BASF, density: 1.12 g/cm³, melting point: 189°C, relative viscosity: 4.0) forming a gas barrier resin layer,
a maleic acid-modified polyolefin (product name: ADMER AT1955E manufactured by Mitsui Chemicals, Inc., density: 0.89 g/cm³, MFR: 2.6 g/10 minutes) forming an adhesive resin layer,
a linear low-density polyethylene (product name: Elite 5400G manufactured by Dow Chemical, density: 0.916 g/cm³, melting point: 123°C, MFR: 1.0 g/10 minutes) forming a first resin layer and an intermediate layer, and
a polyethylene blend having an average density of 0.910 g/cm³, forming a second resin layer, and prepared by mixing 55 parts of a linear low-density polyethylene (Elite 5400G) and 45 parts of a polyolefin plastomer (product name: COHERE 8102L manufactured by SABIC, density: 0.902 g/cm³, melting point: 98°C, MFR: 1.0 g/10 minutes),
were subjected to five-layer coextrusion film forming by a blown film process to thereby produce an unstretched polyethylene film having a total thickness of 40 µm and including a gas barrier resin layer (3 µm) / an adhesive resin layer (4 µm) / a linear low-density polyethylene layer (21 µm) / a linear low-density polyethylene layer (8 µm) / a polyethylene blend layer (4 µm). Numerical values in parentheses indicate the thicknesses of the layers.

A vapor deposited aluminum film having a thickness of 60 nm was formed on the gas barrier resin layer of the unstretched polyethylene film by a PVD method to thereby obtain a barrier sealant film. The optical density (OD value) of the formed vapor deposited film was measured and found to be 3.0.

### <Production of stretched multilayer PE substrate>

The PE blend (A1), the HDPE (2), the PE blend (C1), and the PE blend (B1) were subjected to five-layer coextrusion by a blown film process at a thickness ratio of a PE blend (A1)-1 layer (15 µm) / an HDPE (2) layer (20 µm) / a PE blend (C1) layer (55 µm) / a PE blend (B1) layer (20 µm) / a PE blend (A1)-2 layer (15 µm) to form a tubular film, and a polyethylene film having a total thickness of 125 µm was thereby obtained. The tubular film was folded in two at a nip portion. Numerical values in parentheses indicate the thicknesses of the layers.

The above-obtained polyethylene film was stretched at a stretching ratio of 5 in the machine direction (MD), and then the PE blend (A1)-2 layer was subjected to corona discharge treatment. Then an edge portion was slit to obtain two separate films, and stretched multilayer PE substrates having a thickness of 25 µm were obtained.

An image was formed on the corona discharge-treated surface of the above-produced stretched multilayer PE substrate by a gravure printing method using a solvent-type gravure ink (FINART manufactured by DIC Graphics Corporation).

### <Production of laminated body>

The stretched multilayer PE substrate and the barrier sealant film were laminated with a two-component curable polyurethane adhesive (product name: RU-77T/H-7 manufactured by ROCK PAINT Co., Ltd.) interposed therebetween such that the image-formed surface of the stretched multilayer PE substrate and the vapor deposited aluminum film-formed surface of the barrier sealant film faced each other to thereby obtain a laminated body (polyethylene-based laminated body).

### [Example 1-2B]

The same procedure as in Example 1-1B was performed except that, in the production of the barrier sealant film, the resin forming the gas barrier resin layer was changed to a 6-66 copolymer nylon resin (NY, product name: Ultlamid C33LN manufactured by BASF, density: 1.12 g/cm³, melting point: 196°C, relative viscosity: 3.3).

### [Example 1-3B]

The same procedure as in Example 1-1B was performed except that, in the production of the barrier sealant film, the resin forming the gas barrier resin layer was changed to an ethylene-vinyl alcohol copolymer (EVOH, product name: EVAL E171B manufactured by KURARAY Co., Ltd., density: 1.14 g/cm³, melting point: 165°C, MFR: 1.7 g/10 minutes, ethylene content: 44% by mole).

### [Comparative Example 1-1B]

The same procedure as in Example 1-1B was performed except that, in the production of the barrier sealant film, an unstretched polyethylene film formed from a linear low-density polyethylene layer and having a thickness of 40 µm was produced and used. The vapor deposited aluminum film was formed on the linear low-density polyethylene layer.

### [Comparative Example 1-2B]

The same procedure as in Example 1-1B was performed except that, in the production of the barrier sealant film, an unstretched polyethylene film having a total thickness of 40 µm and including a linear low-density polyethylene layer (36 µm) / a polyethylene blend layer (4 µm) was produced and used. Numerical values in parentheses indicate the thicknesses of the layers. The vapor deposited aluminum film was formed on the linear low-density polyethylene layer.

### [Example 2-1B]

### <Production of barrier sealant film>

A 6-66 copolymer nylon resin (NY, product name: Ultlamid C40LN manufactured by BASF, density: 1.12 g/cm³, melting point: 189°C, relative viscosity: 4.0) forming a gas barrier resin layer,
a maleic acid-modified polyolefin (product name ADMER QF551T manufactured by Mitsui Chemicals, Inc., density: 0.89 g/cm³, melting point: 135°C, MFR: 2.5 g/10 minutes) forming an adhesive resin layer,
a polypropylene (random PP, product name: RB707CF manufactured by BOREALIS, density: 0.90 g/cm³, melting point: 145°C, MFR: 1.5 g/10 minutes) forming a first resin layer and an intermediate layer, and
a polypropylene blend having an average density of 0.901 g/cm³, forming a second resin layer, and prepared by mixing 55 parts of a polypropylene (RB707CF) and 45 parts of a polyolefin plastomer (product name: COHERE 8102L manufactured by SABIC, density: 0.902 g/cm³, melting point: 98°C, MFR: 1.0 g/10 minutes)
were subjected to five-layer extrusion film formation by a blown film process to thereby produce an unstretched polypropylene film having a total thickness of 40 µm and including a gas barrier resin layer (3 µm) / an adhesive resin layer (4 µm) / a polypropylene layer (21 µm) / a polypropylene layer (8 µm) / a polypropylene blend layer (4 µm). Numerical values in parentheses indicate the thicknesses of the layers.

A vapor deposited aluminum film having a thickness of 60 nm was formed on the gas barrier resin layer of the above-produced unstretched polypropylene film by a PVD method to thereby obtain a barrier sealant film. The optical density (OD value) of the formed vapor deposited film was measured and found to be 3.0.

A biaxially stretched polypropylene film (product name: P2171 manufactured by TOYOBO CO., LTD.) having a thickness of 20 µm with one surface subjected to corona discharge treatment was prepared as a polypropylene resin substrate. An image was formed on the corona discharge-treated surface of the biaxially stretched polypropylene film by a gravure printing method using a solvent-type gravure ink (FINART manufactured by DIC Graphics Corporation).

### <Production of laminated body>

The polypropylene resin substrate and the barrier sealant film were laminated with a two-component curable polyurethane adhesive (product name: RU-77T/H-7 manufactured by ROCK PAINT Co., Ltd.) interposed therebetween such that the image-formed surface of the polypropylene resin substrate and the vapor deposited aluminum film-formed surface of the barrier sealant film faced each other to thereby obtain a laminated body (polypropylene-based laminated body).

### [Example 2-2B]

The same procedure as in Example 2-1B was performed except that, in the production of the barrier sealant film, the resin forming the gas barrier resin layer was changed to a 6-66 copolymer nylon resin (NY, product name: Ultlamid C33LN manufactured by BASF, density: 1.12 g/cm³, melting point: 196°C, relative viscosity: 3.3).

### [Example 2-3B]

The same procedure as in Example 2-1B was performed except that, in the production of the barrier sealant film, the resin forming the gas barrier resin layer was changed to an ethylene-vinyl alcohol copolymer (EVOH, product name: EVAL E171B manufactured by KURARAY Co., Ltd., density: 1.14 g/cm³, melting point: 165°C, MFR: 1.7 g/10 minutes, ethylene content: 44% by mole).

### [Comparative Example 2-1B]

The same procedure as in Example 2-1B was performed except that, in the production of the barrier sealant film, an unstretched polypropylene film formed from a polypropylene (RB707CF) layer and having a thickness of 40 µm was produced and used. The vapor deposited aluminum film was formed on the polypropylene layer.

### [Comparative Example 2-2B]

The same procedure as in Example 2-1B was performed except that, in the production of the barrier sealant film, an unstretched polypropylene film including a polypropylene layer (36 µm) / a polypropylene blend layer (4 µm) and having a total thickness of 40 µm was produced and used. Numerical values in parentheses indicate the thicknesses of the layers. The vapor deposited aluminum film was formed on the polypropylene layer.

**[Table 1B]**

| Barrier sealant film | Oxygen barrier performance test (cc/m²/day/atm) | Water vapor barrier performance test (cc/m²/day/atm) | Heat sealability test (N/15 mm) |
|---|---|---|---|
| Example 1-1B | 1.14 | 1.07 | 37 |
| Example 1-2B | 0.90 | 0.98 | 35 |
| Example 1-3B | 0.63 | 0.75 | 38 |
| Comparative Example 1-1B | 7.34 | 1.92 | 5 |
| Comparative Example 1-2B | 7.52 | 1.95 | 38 |

**[Table 2B]**

| Barrier sealant film | Oxygen barrier performance test (cc/m²/day/atm) | Water vapor barrier performance test (cc/m²/day/atm) | Heat sealability test (N/15 mm) |
|---|---|---|---|
| Example 2-1B | 1.08 | 0.85 | 28 |
| Example 2-2B | 0.87 | 0.81 | 26 |
| Example 2-3B | 0.61 | 0.69 | 26 |
| Comparative Example 2-1B | 6.98 | 1.45 | 4 |
| Comparative Example 2-2B | 7.12 | 1.49 | 27 |

### [C. Laminated body]

The laminated body of the present disclosure will be specifically described based on Examples, but the laminated body of the present disclosure is not limited to the Examples.

The laminated body of the present disclosure will be described based on Examples.

### [Example 1C]

A 6-nylon resin (NY, product name: Ultlamid B36LN manufactured by BASF, density: 1.13 g/cm³, melting point: 220°C, relative viscosity: 3.6) forming a gas barrier resin layer,
a maleic acid-modified polyolefin (product name: ADMER QF551T manufactured by Mitsui Chemicals, Inc., , density: 0.89 g/cm³, melting point: 135°C, MFR: 2.5 g/10 minutes) forming an adhesive resin layer,
polypropylene (1) (random PP, product name: FL7540L manufactured by TPC, density: 0.90 g/cm³, melting point: 138°C, MFR: 7.0 g/10 minutes) forming a first polypropylene resin layer,
polypropylene (2) (homo PP, product name: FL7013E2 manufactured by TPC, density: 0.90 g/cm³, melting point: 165°C, MFR: 7.0 g/10 minutes) forming a second polypropylene resin layer, and
polypropylene (3) (random PP, product name: FL7642 manufactured by TPC, density: 0.90 g/cm³, melting point: 128°C, MFR: 7.0 g/10 minutes) forming a third polypropylene resin layer
were subjected to coextrusion film forming by a T-die process, and a resin substrate having a total thickness of 25 µm and having a structure including a gas barrier resin layer (2 µm) / an adhesive resin layer (3 µm) / a polypropylene (1) resin layer (2 µm) / a polypropylene (2) resin layer (15.5 µm) / a polypropylene (3) resin layer (2.5 µm) was thereby produced.

A vapor deposited aluminum film having a thickness of 60 nm was formed on the gas barrier resin layer of the above-produced resin substrate by a PVD method to thereby obtain a barrier substrate. The optical density (OD value) of the formed vapor deposited film was measured and found to be 3.0.

A biaxially stretched polypropylene film (product name: P2171 manufactured by TOYOBO CO., LTD.) having a thickness of 20 µm with one surface subjected to corona discharge treatment was prepared as a polypropylene resin substrate. An image was formed on the corona discharge-treated surface of the biaxially stretched polypropylene film by a gravure printing method using a solvent-type gravure ink (FINART manufactured by DIC Graphics Corporation).

The barrier substrate and the biaxially stretched polypropylene film were laminated with a two-component curable polyurethane adhesive (product name: RU-77T/H-7 manufactured by ROCK PAINT Co., Ltd.) interposed therebetween such that the vapor deposited aluminum film-formed surface of the barrier substrate and the image formed surface of the biaxially stretched polypropylene film faced each other to thereby obtain a laminated body.

The polypropylene (1) and a polyolefin plastomer (product name: COHERE 8102L manufactured by SABIC, density: 0.902 g/cm³, melting point: 98°C, MFR: 1.0 g/10 minutes) were mixed at a ratio of the polypropylene (1): 60% by mass and the polyolefin plastomer: 4 0% by mass to prepare a polyolefin blend (1).

Next, the polypropylene (1) and the polyolefin blend (1) were subjected to multilayer extrusion using a T-die process to form a film having a structure including a polypropylene (1) resin layer (15 µm) / a polyolefin blend (1) resin layer (20 µm), and an unstretched polypropylene film (sealant film) having a thickness of 35 µm and forming a sealant layer was thereby obtained.

The above-produced laminated body and the sealant film were laminated with a two-component curable polyurethane adhesive (product name: RU-77T/H-7 manufactured by ROCK PAINT Co., Ltd.) interposed therebetween such that the polypropylene resin layer included in the barrier substrate and the polypropylene (1) resin layer of the sealant film faced each other to thereby obtain a laminated body.

### [Example 2C]

A laminated body was obtained using the same procedure as in Example 1C except that the resin forming the gas barrier resin layer was changed to a 6-66 copolymer nylon resin (NY, product name Ultlamid C33 manufactured by BASF, density: 1.12 g/cm³, melting point: 196°C, relative viscosity: 3.3).

### [Example 3C]

A laminated body was obtained using the same procedure as in Example 1C except that the resin forming the gas barrier resin layer was changed to an ethylene-vinyl alcohol copolymer (EVOH, product name: EVAL E171B manufactured by KURARAY Co., Ltd., density: 1.14 g/cm³, melting point: 165°C, MFR: 1.7 g/10 minutes, ethylene content: 44% by mole).

### [Comparative Example 1C]

A laminated body was obtained using the same procedure as in Example 1C except that the structure of the resin substrate was changed to a structure including a polypropylene (1) resin layer (7 µm) / a polypropylene (2) resin layer (15.5 µm) / a polypropylene (3) resin layer (2.5 µm).

**[Table 1C]**

| Laminated body | Oxygen barrier performance test (cc/m²/day/atm) | Water vapor barrier performance test (cc/m²/day/atm) | Heat sealability test (N/15 mm) |
|---|---|---|---|
| Example 1C | 0.10 | 0.10 | 25 |
| Example 2C | 0.09 | 0.10 | 26 |
| Example 3C | 0.11 | 0.11 | 26 |
| Comparative Example 1C | 3.55 | 0.92 | 25 |

### [D. Laminated film, barrier laminated film, and laminated body]

The laminated film, barrier laminated film, and laminated body of the present disclosure will be specifically described based on Examples, but the laminated film, barrier laminated film, and laminated body of the present disclosure are not limited to the Examples. In the following description, "parts by mass" may be denoted simply as "parts."

### [Resin materials 1]

Resin materials used to produce polyethylene-based laminated films will be described.
- Gas barrier resin
   Ethylene-vinyl alcohol copolymer (EVOH)
   Product name: EVAL E171B manufactured by KURARAY Co., Ltd.
   Density: 1.140 g/cm³, melting point: 165°C,
   MFR: 1.7 g/10 minutes
   Ethylene content: 44% by mole
- Gas barrier resin
   6-66 copolymer nylon resin (Ny)
   Product name: Ultlamid C33LN manufactured by BASF
   Density: 1.12 g/cm³, melting point: 196°C, relative viscosity: 3.3
- Acid-modified resin
   Maleic acid-modified polyethylene
   Product name: ADMER NE827T manufactured by Mitsui Chemicals, Inc.
   Density: 0.910 g/cm³, melting point: 120°C, MFR: 5 g/10 minutes
- High-density polyethylene 1 (hereinafter referred to as "HDPE (1)")
   Product name: XUS81841.27 manufactured by Dow Chemical
   Density: 0.947 g/cm³, melting point: 128°C,
   MFR: 6.0 g/10 minutes
- Linear low-density polyethylene 1 (hereinafter referred to as "LLDPE(1)")
   Product name: Exceed 3527PA manufactured by Exxon Mobil Corporation
   Density: 0.927 g/cm³, melting point: 121°C,
   MFR: 3.5 g/10 minutes
- Linear low-density polyethylene 2 (hereinafter referred to as "LLDPE (2)")
   Product name: Elite 5220G manufactured by Dow Chemical
   Density: 0.915 g/cm³, melting point: 123°C,
   MFR: 3.5 g/10 minutes
- Low-density polyethylene 1 (hereinafter referred to as "LDPE (1)")
   Product name: LD2420H manufactured by PTT
   Density: 0.924 g/cm³, melting point: 111°C,
   MFR: 1.9 g/10 minutes
- Polyolefin plastomer
   Product name: COHERE 8102L manufactured by SABIC
   Density: 0.902 g/cm³, melting point: 98°C,
   MFR: 1.0 g/10 minutes

- Polyethylene blend A
   70 Parts of LLDPE (1) and 30 parts of LDPE (1) were mixed to obtain a polyethylene blend A having an average density of 0.926 g/cm³.
- Polyethylene blend B
   70 Parts of HDPE (1) and 30 parts of LDPE (1) were mixed to obtain a polyethylene blend B having an average density of 0.940 g/cm³.
- Polyethylene blend C
   90 Parts of LLDPE (2) and 10 parts of LDPE (1) were mixed to obtain a polyethylene blend C having an average density of 0.916 g/cm³.
- Polyethylene blend D
   60 Parts of LLDPE (2) and 40 parts of the polyolefin plastomer were mixed to obtain a polyethylene blend D having an average density of 0.910 g/cm³.

### [Resin materials 2]

Resin materials used to produce polypropylene-based laminated films will be described.
- Gas barrier resin
   Ethylene-vinyl alcohol copolymer (EVOH)
   Product name: EVAL E171B manufactured by KURARAY Co., Ltd.
   Density: 1.140 g/cm³, melting point: 165°C,
   MFR: 1.7 g/10 minutes
   Ethylene content: 44% by mole
- Gas barrier resin
   6-66 copolymer nylon resin (Ny)
   Product name: Ultlamid C33LN manufactured by BASF
   Density: 1.12 g/cm³, melting point: 196°C, relative viscosity: 3.3
- Acid-modified resin
   Maleic acid-modified polypropylene
   Product name: ADMER AT3351E manufactured by Mitsui Chemicals, Inc.
   Density: 0.890 g/cm³, MFR: 11 g/10 minutes
   Content of structural unit derived from maleic acid: 3% by mass or less
   IR intensity ratio described above (intensity 1 / intensity 2): 0.05
- Acid-modified resin
   Maleic acid-modified polypropylene
   Product name: ADMER QF551T manufactured by Mitsui Chemicals, Inc.
   Density: 0.890 g/cm³, MFR: 5.7 g/10 minutes
   Content of structural unit derived from maleic acid: 3% by mass or less
   IR intensity ratio described above (intensity 1 / intensity 2): 0.40
- Polypropylene 1 (hereinafter referred to as "PP1")
   Propylene random copolymer
   Product name: Cosmoplane FL7540 manufactured by TPC
   Density: 0.900 g/cm³, melting point: 138°C, MFR: 7 g/10 minutes
- Polypropylene 2 (hereinafter referred to as "PP2")
   Propylene homopolymer
   Product name: Cosmoplane FL7013 manufactured by TPC
   Density: 0.900 g/cm³, melting point: 165°C, MFR: 7 g/10 minutes
- Polypropylene 3 (hereinafter referred to as "PP3")
   Propylene random copolymer
   Product name: Cosmoplane FL7642 manufactured by TPC
   Density: 0.900 g/cm³, melting point: 128°C, MFR: 7 g/10 minutes
- Propylene-based elastomer
   Product name: Vistamaxx 3980FL manufactured by Exxon Mobil Corporation
   Density: 0.879 g/cm³, melting point: 128°C,
   MFR: 3.6 g/10 minutes

- Polypropylene blend A
   60 Parts of PP3 and 40 parts of the propylene-based elastomer were mixed to obtain a polypropylene blend A having an average density of 0.891 g/cm³.

### [D-A1. Production of polyethylene-based sealant films]

### [Example 1-1D]

The EVOH, maleic acid-modified polyethylene, polyethylene blend A, polyethylene blend B, polyethylene blend C, and polyethylene blend D prepared as described above were subjected to six-layer extrusion film forming using a casting film forming process to thereby produce an unstretched polyethylene film having a total thickness of 40 µm and including a gas barrier resin layer (3.2 µm) / an adhesive resin layer (3.2 µm) / a polyethylene blend A layer (3.2 µm) / a polyethylene blend B layer (18.4 µm) / a polyethylene blend C layer (8.8 µm) / a polyethylene blend D layer (3.2 µm). Numerical values in parentheses indicate the thicknesses of the layers.

A vapor deposited aluminum film having a thickness of 60 nm was formed on the gas barrier resin layer of the unstretched polyethylene film by a PVD method to thereby obtain a polyethylene-based barrier laminated film. The optical density (OD value) of the formed vapor deposited film was measured and found to be 3.0. This polyethylene-based barrier laminated film was used as a sealant film.

### [Example 1-2D]

An unstretched polyethylene film and a polyethylene-based barrier laminated film were produced using the same procedure as in Example 1-1D except that the resin forming the gas barrier resin layer was changed to the Ny prepared above.

### [Comparative Example 1-1D]

An unstretched polyethylene film having a thickness of 40 µm and formed from an LLDPE (1) layer was produced using a casting film forming process. A polyethylene-based barrier film was produced using the same procedure as in Example 1-1D except that this unstretched polyethylene film was used. The vapor deposited aluminum film was formed on the LLDPE (1) layer.

### [Comparative Example 1-2D]

An unstretched polyethylene film having a total thickness of 40 µm and including an LLDPE (1) layer (36 µm) / a polyethylene blend D layer (4 µm) was produced using a casting film forming process. Numerical values in parentheses indicate the thicknesses of the layers. A polyethylene-based barrier laminated film was produced using the same procedure as in Example 1-1D except that this unstretched polyethylene film was used. The vapor deposited aluminum film was formed on the LLDPE (1) layer.

### [D-A2. Production of stretched multilayer polyethylene substrate]

Resin materials used to produce a stretched multilayer polyethylene substrate will be described.
- High-density polyethylene 2 (hereinafter referred to as "HDPE (2)")
   Product name: Elite 5960G manufactured by Dow Chemical
   Density: 0.960 g/cm³, melting point: 134°C, MFR: 0.8 g/10 minutes
- High-density polyethylene 3 (hereinafter referred to as "HDPE (3)")
   Product name: H619F manufactured by SCG
   Density: 0.965 g/cm³, melting point: 135°C,
   MFR: 0.7 g/10 minutes
- Medium-density polyethylene 1 (hereinafter referred to as "MDPE (1)")
   Product name: Enable 4002MC manufactured by Exxon Mobil Corporation
   Density: 0.940 g/cm³, melting point: 128°C,
   MFR: 0.25 g/10 minutes
- Linear low-density polyethylene 3 (hereinafter referred to as "LLDPE (3)")
   Product name: Exceed XP8656ML manufactured by Exxon Mobil Corporation
   Density: 0.916 g/cm³, melting point: 121°C,
   MFR: 0.5 g/10 minutes
- Slip agent-containing MB
   Product name: SLIP61 10061-K manufactured by Ampacet
   Density: 0.910 g/cm³, MFR: 10 g/10 minutes
   Polyethylene based, containing 5% by mass of erucic acid amide-based slip agent

- Polyethylene blend A1
   70 Parts of MDPE (1) and 30 parts of HDPE (2) were mixed to obtain a polyethylene blend A1 having an average density of 0.948 g/cm³.
- Polyethylene blend B1
   70 Parts of MDPE (1) and 30 parts of LLDPE (3) were mixed to obtain a polyethylene blend B1 having an average density of 0.933 g/cm³.
- Polyethylene blend C1
   98 Parts of LLDPE (3) and 2 parts of the slip agent-containing MB were mixed to obtain a polyethylene blend C1 having an average density of 0.916 g/cm³.

The polyethylene blend A1, HDPE (3), polyethylene blend C1, and polyethylene blend B1 prepared as described above were subjected to five-layer coextrusion film forming by a blown film extrusion process at a thickness ratio of a polyethylene blend A1-1 layer (15 µm) / an HDPE (3) layer (20 µm) / a polyethylene blend C1 layer (55 µm) / a polyethylene blend B1 layer (20 µm) / a polyethylene blend A1-2 layer (15 µm) to thereby obtain a tubular polyethylene film having a total thickness of 125 µm, and the tubular film was folded in two at a nip portion. Numerical values in parentheses indicate the thicknesses of the layers. The above-produced polyethylene film was stretched at a stretching ratio of 5 in the machine direction (MD), and the polyethylene blend A1-2 layer was subjected to corona discharge treatment. Then an edge portion was slit to obtain two separate films, and stretched multilayer polyethylene substrates having a thickness of 25 µm were obtained.

An image was formed on the corona discharge-treated surface of the above-produced stretched multilayer polyethylene substrate by a gravure printing method using a solvent-type gravure ink (FINART manufactured by DIC Graphics Corporation).

### [D-A3. Production of polyethylene-based laminated bodies]

The stretched multilayer polyethylene substrate and one of the polyethylene-based sealant films obtained in the above Examples and Comparative Examples were laminated using a 3.5 µm-thick adhesive layer formed of a two-component curable polyurethane adhesive (product name: RU-77T/H-7 manufactured by ROCK PAINT Co., Ltd.) and interposed therebetween such that the image-formed surface of the stretched multilayer polyethylene substrate and the vapor deposited aluminum film-formed surface of the one of the polyethylene-based sealant films faced each other to thereby obtain a polyethylene-based laminated body.

### [D-B1. Production of polypropylene-based sealant films]

### [Example 2-1D]

The EVOH, maleic acid-modified polypropylene, PP1, PP2, PP3, and polypropylene blend A prepared as described above were subjected to six-layer extrusion film forming by a casting film forming process to thereby produce an unstretched polypropylene film having a total thickness of 40 µm and including a gas barrier resin layer (3.2 µm) / an adhesive resin layer (3.2 µm) / a PP1 layer (3.2 µm ) / a PP2 layer (18.4 µm) / a PP3 layer (8.8 µm) / a polypropylene blend A layer (3.2 µm). Numerical values in parentheses indicate the thicknesses of the layers.

A vapor deposited aluminum film having a thickness of 60 nm was formed on the gas barrier resin layer of the unstretched polypropylene film by a PVD method to thereby obtain a polypropylene-based barrier laminated film. The optical density (OD value) of the formed vapor deposited film was measured and found to be 3.0. This polypropylene-based barrier laminated film was used as a sealant film.

### [Example 2-2D]

An unstretched polypropylene film and a polypropylene-based barrier laminated film were produced using the same procedure as in Example 2-1D except that the resin forming the gas barrier resin layer was changed to the Ny prepared above.

### [Comparative Example 2-1D]

An unstretched polypropylene film having a thickness of 40 µm and formed from a PP1 layer was produced by a casting film forming process. A polypropylene-based barrier film was produced using the same procedure as in Example 2-1D except that this unstretched polypropylene film was used. The vapor deposited aluminum film was formed on the PP1 layer.

### [Comparative Example 2-2D]

An unstretched polypropylene film having a total thickness of 40 µm and including a PP1 layer (36.8 µm) / a polypropylene blend A layer (3.2 µm) was produced using a casting film forming process. Numerical values in parentheses indicate the thicknesses of the layers. A polypropylene-based barrier laminated film was produced using the same procedure as in Example 2-1D except that this unstretched polypropylene film was used. The vapor deposited aluminum film was formed on the PP1 layer.

### [D-B2. Production of polypropylene-based laminated bodies]

A biaxially stretched polypropylene film (product name: P2171 manufactured by TOYOBO CO., LTD.) having a thickness of 20 µm with one surface subjected to corona discharge treatment was prepared as a polypropylene resin substrate. An image was formed on the corona discharge-treated surface of the biaxially stretched polypropylene film by a gravure printing method using a solvent-type gravure ink (FINART manufactured by DIC Graphics Corporation).

The polypropylene resin substrate and one of the polypropylene-based sealant films obtained in the above Examples and Comparative Examples were laminated using a 3.5 µm-thick adhesive layer formed of a two-component curable polyurethane adhesive(product name: RU-77T/H-7 manufactured by ROCK PAINT Co., Ltd.) and interposed therebetween such that the image-formed surface of the polypropylene resin substrate and the vapor deposited aluminum film-formed surface of the one of the polypropylene-based sealant films faced each other to thereby obtain a polypropylene-based laminated body.

### [D-C1. Production of polyethylene-based intermediate substrates]

### [Example 3-1D]

The EVOH, maleic acid-modified polyethylene, polyethylene blend A, and polyethylene blend B prepared as described above were subjected to six-layer extrusion film forming by a casting film forming process to thereby obtain an unstretched polyethylene film having a total thickness of 25 µm and including a gas barrier resin layer (2.0 µm) / an adhesive resin layer (3.0 µm) / a polyethylene blend A layer (2.0 µm) / a polyethylene blend B layer (10.0 µm) / a polyethylene blend B layer (5.5 µm) / a polyethylene blend B layer (2.5 µm). Numerical values in parentheses indicate the thicknesses of the layers.

A vapor deposited aluminum film having a thickness of 60 nm was formed on the gas barrier resin layer of the unstretched polyethylene film by a PVD method to thereby obtain a polyethylene-based barrier laminated film. The optical density (OD value) of the formed vapor deposited film was measured and found to be 3.0. This polyethylene-based barrier laminated film was used as an intermediate substrate.

### [Example 3-2D]

An unstretched polyethylene film and a polyethylene-based barrier laminated film were produced using the same procedure as in Example 3-1D except that the resin forming the gas barrier resin layer was changed to the Ny prepared above.

### [Comparative Example 3-1D]

An unstretched polyethylene film having a thickness of 25 µm and formed from an LLDPE (1) layer was produced using a casting film forming process. A polyethylene-based barrier film was produced using the same procedure as in Example 3-1D except that this unstretched polyethylene film was used. The vapor deposited aluminum film was formed on the LLDPE (1) layer.

### [D-C2. Production of sealant film]

The polyethylene blend A, polyethylene blend B, polyethylene blend C, and polyethylene blend D prepared as described above were subjected to six-layer extrusion film forming by a casting film forming process to thereby produce an unstretched polyethylene film having a total thickness of 40 µm and including a polyethylene blend A layer (3.2 µm) / a polyethylene blend A layer (3.2 µm) / a polyethylene blend B layer (3.2 µm) / a polyethylene blend B layer (18.4 µm) / a polyethylene blend C layer (8.8 µm) / a polyethylene blend D layer (3.2 µm). Numerical values in parentheses indicate the thicknesses of the layers. This unstretched polyethylene film was used as a sealant film.

### [D-C3. Production of stretched multilayer polyethylene substrate]

A stretched multilayer polyethylene substrate with an image formed thereon was produced using the same procedure as described above.

### [D-C4. Production ofpolyethylene-based laminated bodies]

The stretched multilayer polyethylene substrate and one of the polyethylene-based intermediate substrates obtained in the Examples and Comparative Example were laminated using a 3.5 µm-thick adhesive film formed of a two-component curable polyurethane adhesive (product name: RU-77T/H-7 manufactured by ROCK PAINT Co., Ltd.) and interposed therebetween such that the image-formed surface of the stretched multilayer polyethylene substrate and the vapor deposited aluminum film-formed surface of the one of the polyethylene-based intermediate substrates faced each other.

Then the polyethylene-based intermediate substrate and the above-produced sealant film were laminated using a 3.5 µm-thick adhesive film formed of a two-component curable polyurethane adhesive (product name: RU-77T/H-7 manufactured by ROCK PAINT Co., Ltd.) and interposed therebetween such that the surface of the polyethylene-based intermediate substrate with no vapor deposited aluminum film formed thereon and the surface of the polyethylene blend A layer of the sealant film faced each other to thereby obtain a polyethylene-based laminated body.

### [D-D1. Production of polypropylene-based intermediate substrates]

### [Example 4-1D]

The EVOH, maleic acid-modified polypropylene, PP1, and PP2 prepared as described above were subjected to six-layer extrusion film forming by a casting film forming process to thereby produce an unstretched polypropylene film having a total thickness of 25 µm and including a gas barrier resin layer (2.0 µm) / an adhesive resin layer (3.0 µm) / a PP1 layer(2.0 µm) / a PP2 layer (10.0 µm) / a PP2 layer (5.5 µm) / a PP1 layer (2.5 µm). Numerical values in parentheses indicate the thicknesses of the layers.

A vapor deposited aluminum film having a thickness of 60 nm was formed on the gas barrier resin layer of the unstretched polypropylene film by a PVD method to thereby obtain a polypropylene-based barrier laminated film. The optical density (OD value) of the formed vapor deposited film was measured and found to be 3.0. This polypropylene-based barrier laminated film was used as an intermediate substrate.

### [Example 4-2D]

An unstretched polypropylene film and a polypropylene-based barrier laminated film were produced using the same procedure as in Example 4-1D except that the resin forming the gas barrier resin layer was changed to the Ny prepared above.

### [Comparative Example 4-1D]

An unstretched polypropylene film having a thickness of 25 µm and formed from a PP1 layer was produced by a casting film forming process. A polypropylene-based barrier film was produced using the same procedure as in Example 4-1D except that this unstretched polypropylene film was used. The vapor deposited aluminum film was formed on the PP1 layer.

### [D-D2. Production of sealant film]

The PP1, PP2, PP3, and polypropylene blend A prepared as described above were subjected to six-layer extrusion film forming by a casting film forming process to thereby produce an unstretched polypropylene film having a total thickness of 40 µm and including a PP1 layer (3.2 µm) / a PP1 layer (3.2 µm) / a PP1 layer (3.2 µm) / a PP2 layer (18.4 µm) / a PP3 layer (8.8 µm) / a polypropylene blend A layer (3.2 µm). Numerical values in parentheses indicate the thicknesses of the layers. This unstretched polypropylene film was used as a sealant film.

### [D-D3. Production of polypropylene-based laminated bodies]

A biaxially stretched polypropylene film (product name: P2171 manufactured by TOYOBO CO., LTD.) having a thickness of 20 µm with one surface subjected to corona discharge treatment was prepared as a polypropylene resin substrate. An image was formed on the corona discharge-treated surface of the biaxially stretched polypropylene film by a gravure printing method using a solvent-type gravure ink (FINART manufactured by DIC Graphics Corporation).

The polypropylene resin substrate and one of the polypropylene-based intermediate substrates obtained in the Examples and Comparative Example were laminated using a 3.5 µm-thick adhesive layer formed of a two-component curable polyurethane adhesive (product name: RU-77T/H-7 manufactured by ROCK PAINT Co., Ltd.) and interposed therebetween such that the image-formed surface of the polypropylene resin substrate and the vapor deposited aluminum film-formed surface of the one of the polypropylene-based intermediate substrates faced each other.

Then the polypropylene-based intermediate substrate and the above-produced sealant film were laminated using a 3.5 µm-thick adhesive layer formed of a two-component curable polyurethane adhesive (product name: RU-77T/H-7 manufactured by ROCK PAINT Co., Ltd.) and interposed therebetween such that the surface of the PP1 layer of the polypropylene-based intermediate substrate (the surface with no vapor deposited aluminum film formed thereon) and the surface of the PP1 layer of the sealant film faced each other to thereby obtain a polypropylene-based laminated body.

**[Table 10]**

| Barrier laminated film | Oxygen barrier performance test (cc/m²/day/atm) | Water vapor barrier performance test (cc/m²/day/atm) | Heat sealability test (N/15 mm) |
|---|---|---|---|
| Example 1-1D | 1.09 | 1.02 | 39 |
| Example 1-2D | 0.87 | 0.93 | 38 |
| Comparative Example 1-1D | 7.41 | 1.88 | 6 |
| Comparative Example 1-2D | 7.40 | 1.92 | 39 |

**[Table 2D]**

| Barrier laminated film | Oxygen barrier performance test (cc/m²/day/atm) | Water vapor barrier performance test (cc/m²/day/atm) | Heat sealability test (N/15 mm) |
|---|---|---|---|
| Example 2-1D | 1.08 | 0.85 | 30 |
| Example 2-2D | 0.87 | 0.81 | 27 |
| Comparative Example 2-1D | 6.98 | 1.45 | 4 |
| Comparative Example 2-2D | 7.12 | 1.49 | 29 |

**[Table 3D]**

| Barrier laminated film | Oxygen barrier performance test (cc/m²/day/atm) | Water vapor barrier performance test (cc/m²/day/atm) | Heat sealability test (N/15 mm) |
|---|---|---|---|
| Example 3-1D | 0.14 | 0.11 | 45 |
| Example 3-2D | 0.16 | 0.13 | 43 |
| Comparative Example 3-1D | 4.12 | 2.96 | 45 |

**[Table 4D]**

| Barrier laminated film | Oxygen barrier performance test (cc/m²/day/atm) | Water vapor barrier performance test (cc/m²/day/atm) | Heat sealability test (N/15 mm) |
|---|---|---|---|
| Example 4-1D | 0.11 | 0.15 | 40 |
| Example 4-2D | 0.15 | 0.12 | 37 |
| Comparative Example 4-1D | 3.78 | 1.95 | 39 |

### [Film appearance]

The formation of aggregates (streaks) was not observed in the opposite edge portions, with respect to the TD direction, of each of the unstretched polypropylene films produced in Examples 2-1D and 4-1D. In Examples 2-1D and 4-1D, the maleic acid-modified polypropylene (ADMER AT3351E) used was changed to a maleic acid-modified polypropylene (ADMER QF551T). In this case, the formation of aggregates was observed in the opposite edge portions, with respect to the TD direction, of each of the unstretched polypropylene films produced.

As will be understood by those skilled in the art, the barrier laminated film etc. of the present disclosure are not limited by the Examples described above, and the Examples and the present description are intended merely to explain the principle of the present disclosure. Various modifications or improvements can be made without departing from the spirit and scope of the present disclosure, and all of these modifications or improvements fall within the scope of the present disclosure claimed for protection. Furthermore, the scope of the present disclosure claimed for protection includes not only the description of the claims but also equivalents thereof.

### Reference Signs List

1: laminated body
10: barrier laminated film
   (barrier substrate or barrier sealant film)
11: laminated film (resin substrate or resin film)
12: polyolefin resin layer
12a: first resin layer
12b: second resin layer
12c: third resin layer
12d: fourth resin layer
13: adhesive resin layer
14: gas barrier resin layer
15: vapor deposited film
20: polyolefin resin substrate
30: sealant layer
32: vapor deposited film
40A, 40B: adhesive layer

## Claims

1. A barrier laminated film comprising at least:
an unstretched laminated film; and
a vapor deposited film,
wherein the laminated film includes at least a polyolefin resin layer and a gas barrier resin layer, and wherein the vapor deposited film is disposed on the gas barrier resin layer.

2. The barrier laminated film according to claim 1, wherein the polyolefin resin layer contains polypropylene or polyethylene as a main component.

3. The barrier laminated film according to claim 1 or 2, wherein the gas barrier resin layer contains at least one gas barrier resin selected from polyamides, ethylene-vinyl alcohol copolymers, polyvinyl alcohols, polyacrylonitriles, polyesters, polyurethanes, and (meth)acrylic resins.

4. The barrier laminated film according to any one of claims 1 to 3, wherein the laminated film further includes an adhesive resin layer between the polyolefin resin layer and the gas barrier resin layer.

5. The barrier laminated film according to any one of claims 1 to 4, wherein the unstretched laminated film is an unstretched resin substrate formed by a blown film coextrusion process, and wherein the barrier laminated film is a barrier substrate.

6. The barrier laminated film according to any one of claims 1 to 4, wherein the unstretched laminated film is an unstretched resin film formed by a blown film coextrusion process, and wherein the barrier laminated film is a barrier sealant film.

7. A laminated film comprising, in the following order, at least:
a polyolefin resin layer;
an adhesive resin layer; and
a gas barrier resin layer,
wherein the adhesive resin layer contains an acid-modified resin as a main component, and
wherein the gas barrier resin layer contains at least one resin selected from ethylene-vinyl alcohol copolymers and polyamides.

8. The laminated film according to claim 7, wherein the laminated film is an unstretched cast film.

9. The laminated film according to claim 7 or 8, wherein the gas barrier resin layer is a layer containing an ethylene-vinyl alcohol copolymer as a main component, a layer containing a polyamide as a main component, or a layer containing a resin mixture of an ethylene-vinyl alcohol copolymer and a polyamide as a main component.

10. The laminated film according to any one of claims 7 to 9, wherein the content of a structural unit derived from ethylene in the ethylene-vinyl alcohol copolymer is 30% by mole or more and 60% by mole or less, and wherein the ethylene-vinyl alcohol copolymer has a melt flow rate (MFR) of 0.1 g/10 minutes or more and 5 g/10 minutes or less.

11. The laminated film according to any one of claims 7 to 10, wherein the acid-modified resin is an acid-modified polyolefin, and wherein the acid-modified polyolefin is at least one selected from acid-modified polyethylenes and acid-modified polypropylenes.

12. The laminated film according to any one of claims 7 to 11, wherein the polyolefin resin layer is a polypropylene resin layer containing polypropylene as a main component, wherein the adhesive resin layer contains an acid-modified polypropylene as a main component, wherein the gas barrier resin layer is a layer containing an ethylene-vinyl alcohol copolymer as a main component, and
wherein, in the adhesive resin layer, the ratio (intensity 1 / intensity 2) of the intensity 1 of a peak attributed to C=O stretching vibration in the range of 1700 to 1800 cm⁻¹ to the intensity 2 of a peak attributed to C-H deformation vibration in the range of 1400 to 1500 cm⁻¹ is less than 0.4, the intensity 1 and the intensity 2 being measured by attenuated total reflection (ATR) spectroscopy using an infrared spectrophotometer.

13. The laminated film according to claim 12, wherein the content of a structural unit derived from ethylene in the ethylene-vinyl alcohol copolymer is 30% by mole or more and 60% by mole or less, wherein the ethylene-vinyl alcohol copolymer has a melt flow rate (MFR) of 0.1 g/10 minutes or more and 5 g/10 minutes or less, and wherein the acid-modified polypropylene has an MFR of 1 g/10 minutes or more and 15 g/10 minutes or less.

14. A barrier laminated film comprising:
the laminated film according to any one of claims 7 to 13; and
a vapor deposited film disposed on the gas barrier resin layer.

15. A laminated body comprising, in the following order in a thickness direction of the laminated body, at least:
a polyolefin resin substrate;
an intermediate substrate; and
a sealant layer,
wherein the polyolefin resin substrate is a stretched substrate,
wherein the intermediate substrate is the barrier laminated film according to any one of claims 1 to 5 and 14 or the laminated film according to any one of claims 7 to 13, and
wherein the sealant layer is a resin layer containing a polyolefin as a main component.

16. The laminated body according to claim 15, wherein the polyolefin resin substrate is a substrate containing polypropylene as a main component; the polyolefin resin layer in the barrier laminated film or in the laminated film is a layer containing polypropylene as a main component; and the sealant layer is a layer containing polypropylene as a main component, or
wherein the polyolefin resin substrate is a substrate containing polyethylene as a main component; the polyolefin resin layer in the barrier laminated film or in the laminated film is a layer containing polyethylene as a main component; and the sealant layer is a layer containing polyethylene as a main component, or
wherein the polyolefin resin substrate is a substrate containing polypropylene as a main component; the polyolefin resin layer in the barrier laminated film or in the laminated film is a layer containing polypropylene as a main component; and the sealant layer is a layer containing polyethylene as a main component.

17. A laminated body comprising, in the following order in a thickness direction of the laminated body, at least:
a polyolefin resin substrate; and
a sealant layer,
wherein the polyolefin resin substrate is a stretched substrate, and
wherein the sealant layer is the barrier laminated film according to any one of claims 1 to 4, 6, and 14 or the laminated film according to any one of claims 7 to 13.

18. The laminated body according to claim 17, wherein the polyolefin resin substrate is a substrate containing polyethylene as a main component, and the polyolefin resin layer in the barrier laminated film or in the laminated film is a layer containing polyethylene as a main component, or
wherein the polyolefin resin substrate is a substrate containing polypropylene as a main component, and the polyolefin resin layer in the barrier laminated film or in the laminated film is a layer containing polypropylene as a main component, or
wherein the polyolefin resin substrate is a substrate containing polypropylene as a main component, and the polyolefin resin layer in the barrier laminated film or in the laminated film is a layer containing polyethylene as a main component.

19. The laminated body according to any one of claims 15 to 18, wherein the content of the polyolefin with respect to the total mass of the laminated body is 80% by mass or more.

20. A packaging container comprising the laminated body according to any one of claims 15 to 19.
